(19) Europäisches Patentamt
European Patent Office
Office européen des brevets

(11) **EP 1 265 228 A1**

(12) **EUROPEAN PATENT APPLICATION**
published in accordance with Art. 158(3) EPC

(43) Date of publication:
**11.12.2002 Bulletin 2002/50**

(51) Int Cl.⁷: **G11B 5/09**, G11B 15/02, G11B 5/53, H04N 5/92, H04N 5/782

(21) Application number: **01949059.8**

(22) Date of filing: **02.02.2001**

(86) International application number:
**PCT/JP01/00767**

(87) International publication number:
**WO 01/057855 (09.08.2001 Gazette 2001/32)**

(84) Designated Contracting States:
**AT BE CH CY DE DK ES FI FR GB GR IE IT LI LU MC NL PT SE TR**

(30) Priority: **03.02.2000 JP 2000026309**
**31.03.2000 JP 2000097492**
**31.03.2000 JP 2000097493**

(71) Applicant: **MATSUSHITA ELECTRIC INDUSTRIAL CO., LTD.**
**Kadoma-shi, Osaka 571-8501 (JP)**

(72) Inventor: **MISAWA, Ikuo**
**Ikoma-shi Nara 630-0136 (JP)**

(74) Representative: **Urner, Peter, Dipl.-Phys.**
**TER MEER STEINMEISTER & PARTNER GbR,**
**Patentanwälte,**
**Mauerkircherstrasse 45**
**81679 München (DE)**

(54) **DIGITAL MAGNETIC RECORDER AND MAGNETIC RECORDING/REPRODUCING APPARATUS**

(57) A digital magnetic recorder having a recording compatibility with respect to formats similar to each other in the basic parts. Conventionally, an MP tape (metal-coated tape) is used for the DVCPRO format: and an ME tape (metal-evaporation tape) is used for the DV format. When a format recognizing section (800) outputs a format recognizing signal Sf (dvcpro), equalizing characteristic selecting section (27,28) select recording am-
plifiers (22p,25p) adapted to the DVCPRO format to select recording equalizers (21p,24p) adapted to the DVC-PRO format. When the format recognizing section (800) outputs aformat recognizing signal Sf(dv), the equalizing characteristic selecting sections (27,28) select recording amplifiers (822d, 825d) adapted to the DV format to select recording equalizers (821d,824d) adapted to the DV format

FIG. 1

**Description**

TECHNICAL FIELD

The present invention relates to a digital magnetic recorder and a magnetic recording/reproducing apparatus, and more specifically to a technology for assuring a recording compatibility between different plural formats, or particularly a recording compatibility between DVCPRO format and DV format. The invention is preferably applied mainly to a professional magnetic recorder and a professional magnetic recording/reproducing apparatus. As imaging section, too, it is preferably applied to the camera-incorporated type. Not limited to them alone, however, the invention may be applied in a wide range of devices and apparatuses.

BACKGROUND ART

As an example of prior art about professional digital magnetic recorders, a magnetic recorder of DVCPRO format equivalent to VTR standard of D-7 is known. This DVCPRO format is a professional (broadcasting) version of representative consumer VTR standard of DV format. The DVCPRO format is applicable to camcorder, studio VTR, video editor, fast play VTR and other systems.

According to the digital magnetic recording and reproducing apparatus (studio system) of this professional DVCPRO format, in 25 mega mode, a DV tape recorded in a consumer DV format can be reproduced (reproducing compatibility).

As for DV format and DVCPRO format, refer to "Digital Media Standard Guidebook"(pp. 114-117, pp. 138-141, ed. Video Information Media Society, Ohm-Sha, 1999).

The following is an explanation about "DVCPRO" which is a representative example of digital magnetic recording and reproducing apparatus conforming to the conventional D-7 standard. This "DVCPRO" has a reproducing compatibility between DVCPRO tape and DV tape (studio system).

The DVCPRO format and DV format have many common points. For example, in the 525/60 system, the DVCPRO format and DV format are common in the following points.

(1) Video input signal: 4:2:2 component signal
(2) Video signal sampling frequency: 13.5 MHz
(3) Compression method: DV compression (1/5 compression)
(4) Modulation method: 24-25 modulation
(5) Tracking method: ATF (automatic track finding)
(6) Tape width: 6.35 mm (1/4 inch)
(7) Rotary head cylinder diameter: 21.7 mm
(8) Rotary head cylinder rotating speed: 9000 rpm
(9) Effective winding angle: 174°
(10) Track sector composition: ITI sector, audio sector, video sector, subcode sector
(11) Number of tracks per frame: 10 tracks

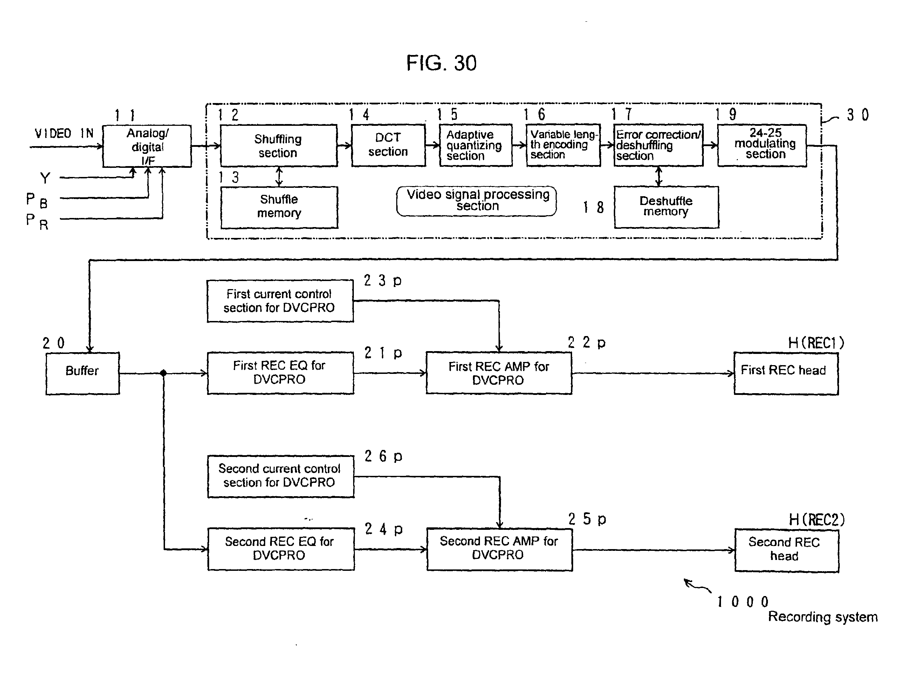

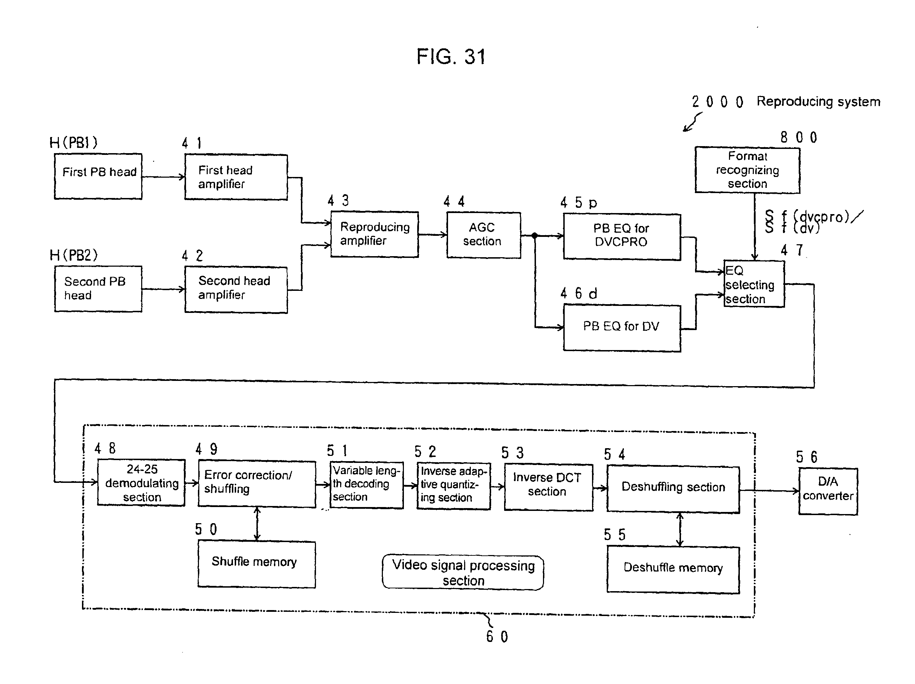

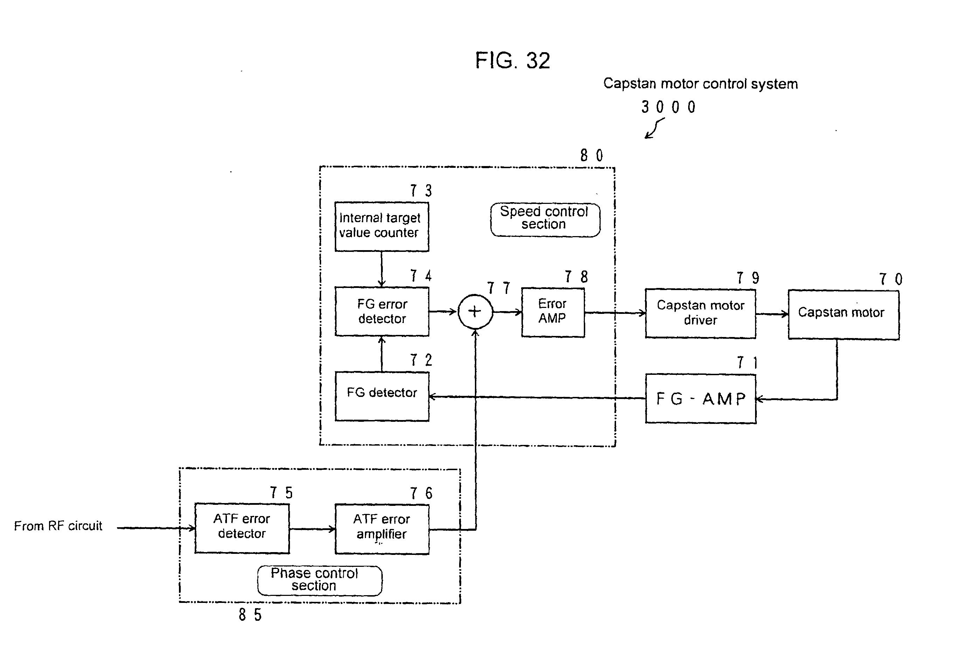

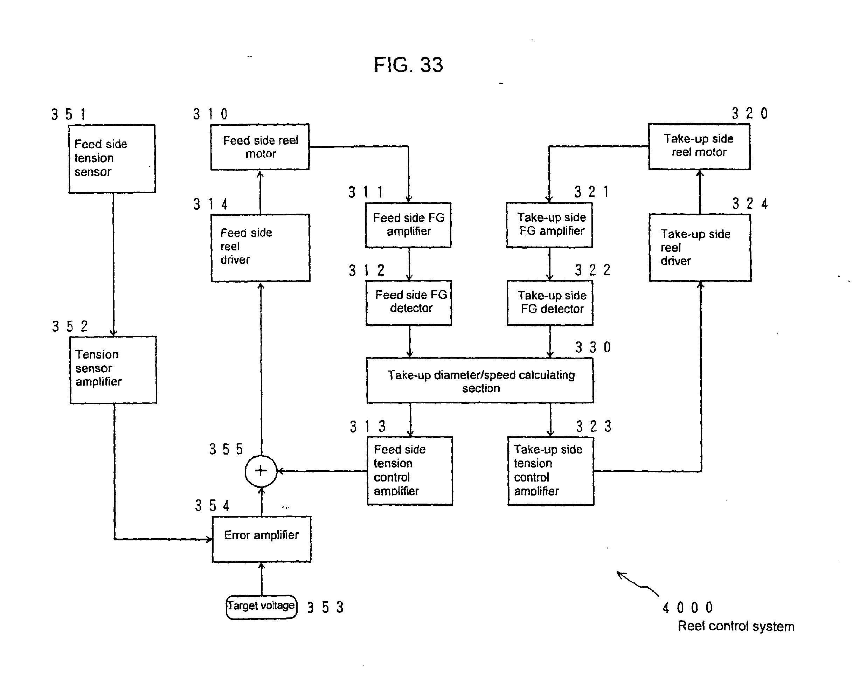

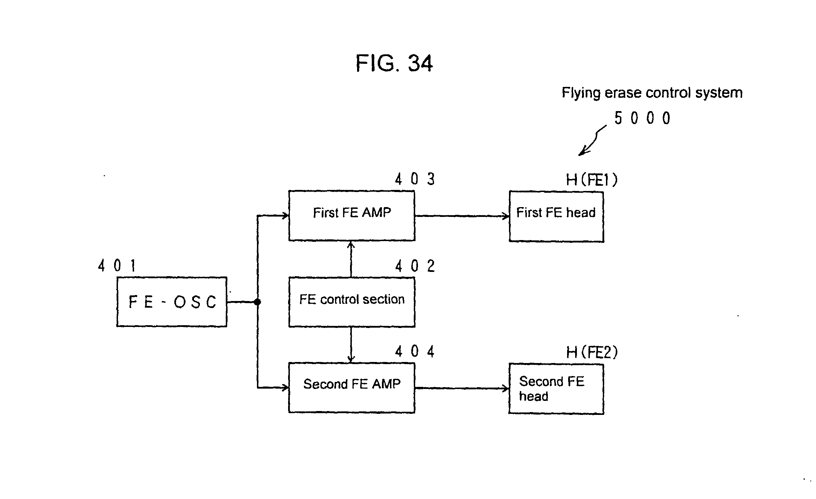

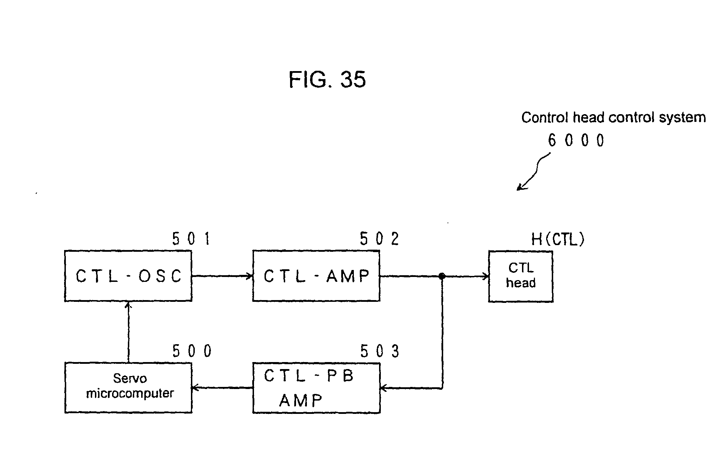

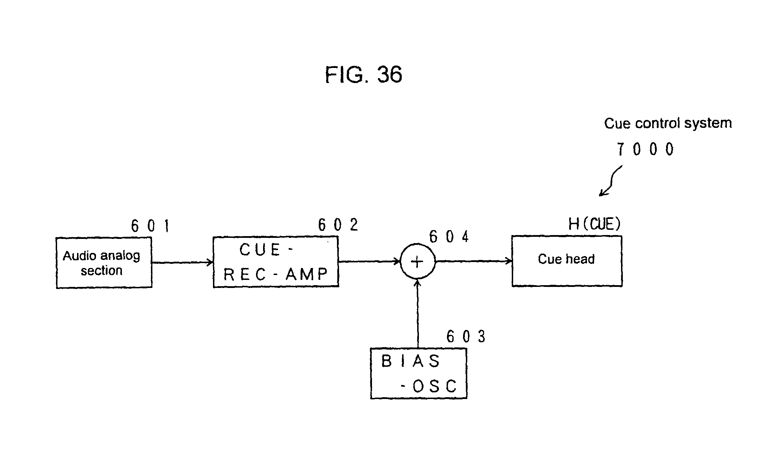

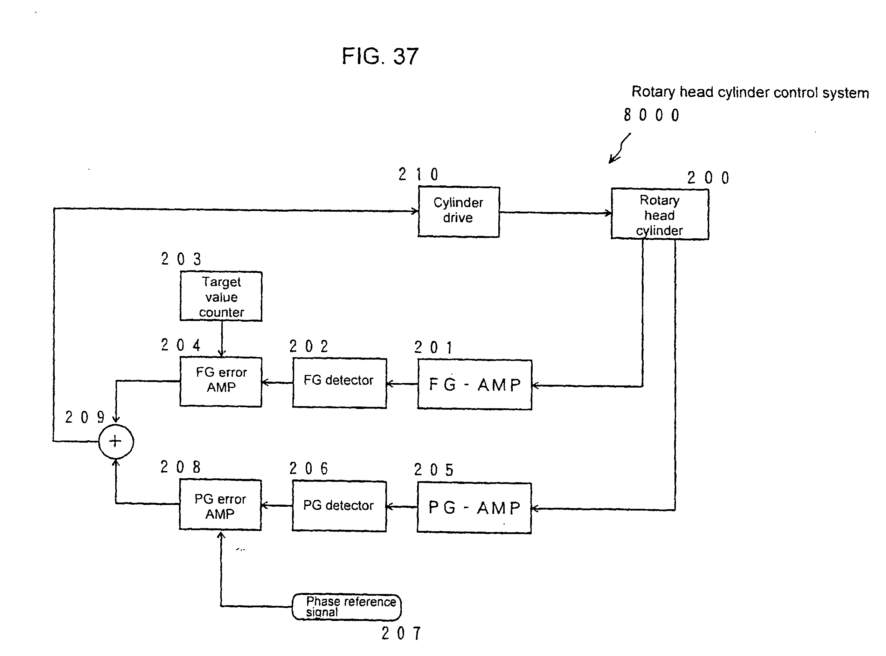

Fig. 30 is a block diagram showing an electric configuration of a recording system 1000 of camcorder "DVCPRO" as an example of digital camera-incorporated VTR, Fig. 31 is a block diagram of its reproducing system 2000, Fig. 32 is a block diagram of a capstan motor control system 3000, Fig. 33 is a block diagram of a reel control system 4000, Fig. 34 is a block diagram of a flying erase control system 5000, Fig. 35 is a block diagram of a control head control system 6000, Fig. 36 is a block diagram of a cue control system 7000, and Fig. 37 is a block diagram of a rotary head cylinder control system 8000.

In Fig. 30 showing a block diagram of the recording system 1000, reference numeral 11 is an analog/digital interface, 12 is a shuffling section, 13 is a shuffle memory, 14 is a DCT section (discrete cosine transform section), 15 is an adaptive quantizing section, 16 is a variable length encoding section, 17 is an error correcting/deshuffling section, 18 is a deshuffle memory, 19 is 24-25 modulating section, 20 is a buffer, 21p is a first recording equalizer for DVCPRO, 22p is a first recording amplifier for DVCPRO, 23p is a first current control section for DVCPRO, 24p is a second recording equalizer for DVCPRO, 25p is a second recording amplifier for DVCPRO, 26p is a second current control section for DVCPRO, H (REC1) is a first recording head, H (REC2) is a second recording head, and 30 is a video signal processing section. The basic operation of the recording system 1000 is known, and its explanation is omitted.

In Fig. 31 showing an electric configuration of the reproducing system 2000, reference numeral H (PB1) is a first reproducing head, H (PB2) is a second reproducing head, 41 is a first head amplifier, 42 is a second head amplifier, 43 is a reproducing amplifier, 44 is an AGC section (automatic gain control section), 45p is a reproducing equalizer for DVCPRO, 46d is a reproducing equalizer for DC, 47 is an equalizing characteristic selecting section, 48 is a 24-25 demodulating section, 49 is an error correcting/shuffling section, 50 is a shuffle memory, 51 is a variable length decoding section, 52 is a reverse adaptive quantizing section, 53 is a reverse DCT section, 54 is a deshuffling section, 55 is a deshuffle memory, 56 is a D/A converter, 60 is a video signal processing section, and 800 is a format recognizing section.

The reproducing equalizer for DVCPRO 45p is designed to have an equalizing characteristic suited to reproduction of DVCPRO format, and the reproducing equalizer for DV 46d has an equalizing characteristic suited to reproduction of DV format.

To describe a format recognizing signal Sf from the format recognizing section 800, the format recognizing signal Sf indicating the DVCPRO format recording mode is described as "Sf (dvcpro)," and the format recognizing signal Sf indicating the DV format recording mode is described as "Sf (dv)."

When the format recognizing signal Sf issued from the format recognizing section 800 is a format recognizing signal Sf (dvcpro) indicating the DVCPRO format recording mode, the equalizing characteristic selecting section 47 selects the reproduction data signal from the reproducing equalizer for DVCPRO 45p, and sends to the 24-25 demodulating section 48.

When the format recognizing signal Sf is a format recognizing signal Sf (dv) indicating the DV format recording mode, the equalizing characteristic selecting section 47 selects the reproduction data signal from the reproducing equalizer for DV 46d, and sends to the 24-25 demodulating section 48.

The video signal processing section 60 is common to the DVCPRO format and DV format.

In Fig. 32 showing an electric configuration of the capstan motor control system 3000, reference numeral 70 is a capstan motor, 71 is an FG (frequency generator) amplifier, 72 is an FG detector, 73 is an internal target value counter, 74 is an FG error detector, 75 is an ATF (automatic track finding) error detector, 76 is an ATF error amplifier, 77 is an adder, 78 is an error amplifier, 79 is a capstan motor driver, 80 is a speed control section, and 85 is a phase control section.

The basic operation of the capstan motor control system 3000 in Fig. 32 is also known, and the operation is specifically explained in the later description of the preferred embodiments of the invention, and the explanation is omitted herein.

In Fig. 33 showing an electric configuration of the reel control system 4000, reference numeral 310 is a feed side reel motor, 311 is a feed side FG (frequency generator) amplifier, 312 is a feed side FG detector, 320 is a take-up side reel motor, 321 is a take-up side FG amplifier, 322 is a take-up side FG detector, 330 is a take-up diameter and speed calculating section, 313 is a feed side tension control amplifier, 314 is a feed side reel driver, 323 is a take-up side tension control amplifier, 324 is a take-up side reel driver, 351 is a feed side tension sensor, 352 is a tension sensor amplifier, 353 is a target voltage, 354 is an error amplifier, and 355 is an adder. The basic operation of the reel control system 4000 is also known, and the operation is specifically explained in the later description of the preferred embodiments of the invention, and the explanation is omitted herein.

In Fig. 34 showing an electric configuration of the flying erase control system 5000, reference numeral 401 is an flying erase oscillator, 402 is a flying erase control section, 403 is a first flying erase amplifier, 404 is a second flying erase amplifier, H (FE1) is a first flying erase head, and H (FE2) is a second flying erase head. Herein, the term flying erase means "erasing of rotation." For ATF (automatic track finding), a pilot signal is recorded in a deep layer of the track, and in order to erase the pilot signal prior to new recording, it is removed by flying erase. The basic operation of the flying erase control system 5000 is also known, and the operation is specifically explained in the later description of the preferred embodiments of the invention, and the explanation is omitted herein.

In Fig. 35 showing an electric configuration of the control head control system 6000, reference numeral 500 is a servo micro computer, 501 is a control oscillator, 502 is a control amplifier, 503 is a control reproducing amplifier, and H (CTL) is a control head. The basic operation of the control head control system 6000 is also known, and the explanation is omitted herein.

In Fig. 36 showing an electric configuration of the cue control system 7000, reference numeral 601 is an audio analog section, 602 is a cue recording amplifier, 603 is a bias oscillator, 604 is an adder, and H (CUE) is a cue head. The basic operation of the cue control system 7000 is also known, and the operation is specifically explained in the later description of the preferred embodiments of the invention, and the explanation is omitted herein.

In Fig. 37 showing an electric configuration of the rotary head cylinder control system 8000, reference numeral 200 is a rotary head cylinder, 201 is an FG amplifier, 202 is an FG detector, 203 is a target value counter, 204 is an FG error amplifier, 205 is a PG (pulse generator) amplifier, 206 is a PG detector, 207 is a phase reference signal corresponding to the DVCPRO format, 208 is a PG error amplifier, 209 is an adder, and 210 is a cylinder driver. The basic operation of the rotary head cylinder control system 8000 is also known, and the operation is specifically explained in the later description of the preferred embodiments of the invention, and the explanation is omitted herein.

In the digital magnetic recording and reproducing apparatus conforming to the DVCPRO format of the prior art, recording and reproducing can be done by using a DVCPRO tape, and reproducing is possible by using DV tape. That is, reproducing compatibility is realized between a DVCPRO tape and a DV tape.

However, in the digital magnetic recording and reproducing apparatus conforming to the DVCPRO format of the prior art, recording compatibility is not realized between a DVCPRO tape and a DV tape. Accordingly, the following problems occur.

At the present, for recording in a DV tape, a magnetic recording and reproducing apparatus conforming to the DV format is required. To record in a DVCPRO tape, a magnetic recording and reproducing apparatus conforming to the DVCPRO is required. Therefore, to record in both tapes, in other words, to record in the DV tape and record in the DVCPRO tape in accordance with the situation or purpose of use, both DV format recording and reproducing apparatus and DVCPRO format recording and reproducing apparatus must be purchased and possessed. To purchase recording and reproducing apparatuses of both formats, it takes a very high initial cost. To possess both recording and reproducing apparatuses, it takes a running cost and requires a wide storage space.

In particular, in the case of the camera-incorporated digital magnetic recording and reproducing apparatus such as camera-recorder (camcorder), it must be carried frequently to news gathering sites or the like, and it is very expensive and heavy work to carry both recording and reproducing apparatuses.

If giving up the idea of using both DV tape and DVCPRO tape, when only DVCPRO tapes are used, since DVCPRO tapes are for professional use, and the running cost is much higher than when using DV tapes for consumer use.

If the grade of the taking object material is relatively low, and it can be taken anew, it is economical and convenient to take a trial by using an inexpensive DV tape. By evaluating the trial result, if a higher quality is required, the same object can be taken again by using a DVCPRO tape, or if the object is discarded, it is enough with a DV tape.

Or in the case DVCPRO tapes only are used, if running out of the DVCPRO tapes in the midst of work, further operation is disabled and the work falls in trouble. This is because DVCPRO tapes are special tapes and not available at street shops and it is hard to obtain DVCPRO tapes . In such a case, if both DVCPRO tapes and DV tapes can be recorded in a common recording and reproducing apparatus, since DV tapes are relatively inexpensive and available anywhere, effects of interruption of taking can be minimized and the work can be resumed quickly.

In spite of such expectation, at the present, there is no digital magnetic recording and reproducing apparatus having a recording compatibility between DV tape and DVCPRO tape. That is, it is forced to use DVCPRO tapes exclusively, and it causes a tremendous running cost.

As the cause of background of such situation, the following points are different between the DVCPRO format and DV format.

    (1) Type of tape

        DVCPRO: MP tape (metal-plated tape)
        DV: ME tape (metal-evaporated tape)

    (2) Tape speed

        DVCPRO: 33.8201 mm/sec
        DV: 18.831 mm/sec

    (3) Track width on magnetic tape

        DVCPRO: 18 $\mu$m
        DV: 10 $\mu$m

Other problem is the difference in the head width of the recording heads.

Such differences between the DVCPRO format and DV format also exist among other formats.

The present invention is devised to solve these problems, and it is hence a primary object thereof to present a less costly and convenient digital magnetic recorder or magnetic recording and reproducing apparatus having a recording compatibility with mutually similar plural formats with respect to the basic portions on the formats.

It is a further object to solve the problem known to occur when a recording head is used commonly in recording in plural formats different in the track width, that is, to solve the problem caused by overwriting to cause the center of the effective track to be deviated from the center of the recording head, so that the magnetic flux coming out from the recording head toward the magnetic tape becomes asymmetric on the track and is disturbed, thereby lowering the precision of magnetic recording.

It is a still more object to save the power consumption for flying erase in each recording mode in any one of plural different recording formats.

SUMMARY OF THE INVENTION

The invention intended to solve the above problems in digital magnetic recording and reproducing apparatus is characterized by variation of equalizing characteristic in accordance with a recognizing result based on a type of a recording format. Herein, the "recognizing" of recording format includes distinction of the state set by the user in accordance with the type of the tape, and distinction of the type of the tape by some detecting section as for a loaded tape or a cassette.

According to the invention, the following effects are obtained. Since the recording formats are different, between plural different recording formats using plural types of magnetic tapes (for example, a MP tape and a ME tape) mutually different in magnetization characteristics such as coercive force, a greatest difference in recording compatibility occurs in the equalizing characteristic. Accordingly, in accordance with the type based on the recording format, it is designed to select the equalizing characteristic suited to each recording format, that is, each tape being used. Thus, recording compatibility is realized in plural different recording formats.

As a result, the following advantages are brought about.

Hitherto, when using selectively a magnetic tape conforming to a first recording format and a magnetic tape conforming to a second recording format (for example, a DVCPRO tape and a DV tape), two magnetic recording and reproducing apparatus conforming to these different recording formats must be prepared, but according to the invention it is enough to use only one common digital magnetic recording and reproducing apparatus. The initial cost for purchasing is notably decreased. The storage space is reduced to about half. In particular, in the case of camera-incorporated magnetic recorder often carried to the news gathering sites or the like such as the camera-recorder (camcorder), it is no longer necessary to carry two magnetic recorders for both formats, and the heavy burden of the conventional work is dramatically lessened, and the cost is saved at the same time.

Moreover, magnetic tapes conforming to different recording formats can be used selectively, and, for example, when the tapes available at street shops can be used mainly, the convenience of use and mobility are enhanced. Or by mainly using the inexpensive tapes for consumer use, the running cost of tapes can be substantially lowered.

In particular, in the case of camera-incorporated magnetic recorder such as the camera-recorder, if the grade of the taking object material is relatively low and it can be taken anew, a trial may be taken by using an inexpensive and available tape, and it is very convenient in work and the running cost is notably lowered. Or if reaching the end of tape while using an expensive tape, the operation can be continued by changing to an inexpensive tape. If inexpensive tapes are not at hand, they can be easily bought at a street shop, and the effects of interruption of recording can be minimized, and operation can be resumed quickly.

In the prior art, a tape recorded by a magnetic recorder conforming to a first recording format only can be reproduced only by a reproducing apparatus conforming to the same first recording format if reproducing by a different apparatus, and similarly a tape recorded by a magnetic recorder conforming to a second recording format only can be reproduced only by a reproducing apparatus conforming to the same second recording format if reproducing by a different apparatus . In other words, prior to recording, the type of the tape and the type of the magnetic recorder are limited in accordance with the format type of the reproducing apparatus intended to be used when reproducing the recorded tape, and it is forced to use the limited magnetic recording apparatus.

By contrast, according to the invention, of the type of the tape and the type of the magnetic recording and reproducing apparatus, aside from the type of the tape, regardless of the format type of the reproducing apparatus intended to be used, it is not necessary to change over the magnetic recorder, and a single common magnetic recorder can be used only by changing over the modes.

In the explanation given above, if the recording compatibility is desired in plural different recording formats by commonly using the rotary head cylinder specified in a certain recording format (for example, DVCPRO format), it is general to use the magnetic head of a larger head width conforming to the first recording format commonly in recording in the second recording format. Since the track width of recording track in the second recording format is smaller than the head width of recording head of the larger head width, it is adjusted by overwriting. However, the center of the track made effective after overwriting is deviated from the center of the recording head, and the magnetic flux coming out from the magnetic head toward the magnetic tape is asymmetric on the track, and the magnetic recording precision may be lowered due to disturbance of magnetic flux. The problem about overwriting is specifically discussed below (see from *1 to *2).

The technique for eliminating the necessity of overwriting is explained below.

The invention intended to solve these problems of the digital magnetic recorder has recording heads of plural types differing in the head width mounted on the rotary cylinder head. The head width of each recording head corresponds to the recording format. In accordance with the result based on the type of the recording format, the equalizing characteristic is varied, and the recording signal of the equalizing characteristic corresponding to each recording format thus obtained is fed into the recording head of the head width corresponding to each recording format.

The head width of a recording head of a certain recording format is standardized in its ideal width. The head with of other recording format is also standardized in its ideal width. Such recording heads of plural types of adequate head width of each recording format are mounted on a common rotary head cylinder. So far, there has been no digital magnetic recorder having a rotary cylinder including recording heads of plural types differing in the head width corresponding to plural recording formats.

Since the optimum recording head is used in each recording format, the head width is always optimum in any recording format, and overwriting is not needed. Therefore, deviation of center due to overwriting is eliminated, and the center of the recording head and the center of the recording track are always matched in magnetic recording, so that the magnetic recording precision is excellent.

In particular, the recording head differs in each recording format with respect to various items, aside from the head width, such as size, shape, azimuth angle, shape and size of head gap, core material, crystal structure, number of turns of coil, abrasion resistance, magnetic permeability, saturated magnetic flux density, coercive force, high frequency magnetic characteristic, surface smoothness, rational cost, and productivity. Therefore, in the case of overwriting by using only one common head, the recording characteristic is far from the optimum state. By contrast, according to the invention, by using an exclusive head for each recording format, the recording characteristic can be optimized for each recording format.

If plural rotary head cylinders are used for individual recording formats, the required space and cost are much increased. In the invention, by contrast, by mounting recording heads of plural types for different recording formats on a common rotary head cylinder, the increase in space and cost can be kept to a minimum.

Moreover, to save power consumption in flying erase for realizing recording compatibility in different recording formats, the invention proposes the following measures. When the recording format is different, the track width is also different. As compared with the track width of a certain recording format, suppose the track width of other recording format is smaller. By the flying erase head corresponding to the certain recording format, plural tracks in the other recording format are simultaneously traced and erased. The invention is characterized by such simultaneous erasure of plural tracks.

There is a notable specificity in the digital magnetic recorder having recording compatibility in plural different recording formats, or in the digital magnetic recorder having a function of commonly applying flying erase in other recording format by a flying erase head conforming to a certain recording format only and erasing plural tracks simultaneously. The invention intended to erase plural tracks simultaneously features the following advantages.

First, the flying erase head is commonly used in flying erase in plural different recording formats. If, in a single common rotary head cylinder, an exclusive flying erase head for a certain recording format is provided, and an exclusive flying erase head for other recording format is also provided, that is, if exclusive flying erase heads are provided for individual recording formats in the small rotary head cylinder which is preferred to be as small as possible, it adds much to the burden in the technical aspect, space and cost. By contrast, according to the invention, one flying erase head is commonly used in plural different recording formats, and it is very advantageous in the technical aspect, space and cost.

Simultaneous erasing of plural tracks also brings about the following merits. The flying erase head for erasing plural tracks simultaneously conforms to the recording format of the larger track width. In other recording format, its track width is narrower. When the head width of the flying erase head is more than two times the track width of other recording format, as in the invention, plural tracks can be traced and eased simultaneously by the flying erase head.

In the head configuration of the helical scan system, usually, heads for plural channels are disposed around the rotary head cylinder for one recording format. The configuration is the same in the recording head and flying erase head. That is, generally, plural flying erase heads are disposed around the rotary cylinder.

It is a feature of the invention to trace and erase simultaneously plural tracks by one flying erase head only (whether exactly conforming to the plural recording heads or not) out of plural flying erase heads in recording in other recording format. Erasing of recording by the flying erase head is performed by supplying an erase signal current of strong power and high frequency to this head. In the remaining flying erase heads, such supply of erase signal current is not necessary, so that the power consumption can be saved for this portion.

Preferred embodiments of the invention are comprehensively described below.

A digital magnetic recorder in a first aspect of the invention is characterized by being capable of selecting recordings in plural different formats, and being capable of varying an equalizing characteristic in accordance with a recognizing result based on a type of a recording format.

According to the first aspect of the invention, the same effects as explained in the above "Section of Solving the Problems" are obtained.

A digital magnetic recorder in a second aspect of the invention is characterized by including, a first type recording equalizer corresponding to a first type recording format, a second type recording equalizer corresponding to a second type recording format, a format recognizing section for recognizing a type of a recording format, and an equalizing characteristic selecting section for selecting one of the first type recording equalizer and the second type recording equalizer in accordance with the recognizing result by the format recognizing section. This is a more specific description of the first aspect of the invention.

That is, the recording equalizer is not one type of an equalizer, but plural types of equalizers are used in accordance with the number of types of the recording formats, that is, the first type recording equalizer and the second type recording equalizer. To identify these recording equalizers of plural types, the format recognizing section is provided, and further the equalizing characteristic selecting section is provided for selecting either recording equalizer in accordance with the recognizing result.

The following must be taken into consideration. That is, in expression, the first type and the second type are mentioned, but this is only a mere description for simplifying the expression. That is, the number of types of recording equalizers is not limited to two types, but it must be understood that there may be three or more types. The format recognizing section must be interpreted same as explained in the above "Section of Solving the Problems."

The second aspect of the invention brings about the following effects. The format recognizing section recognizes that which format is the recording format, and gives the recognizing result to the equalizing characteristic selecting section. The equalizing characteristic selecting section selects the recording equalizer in accordance with the given recognizing result. That is, when the recognizing result shows the first type recording format, the first type recording equalizer is selected, and when the recognizing result shows the second type recording format, the second type recording equalizer is selected. As a result, the recording compatibility can be realized while corresponding to the change in the equalizing characteristic based on the type of the tape.

A digital magnetic recorder in a third aspect of the invention relates to the second aspect of the invention is characterized in that a first type recording amplifier and a second type recording amplifier are individually interposed between the first type recording equalizer and the second type recording equalizer and the equalizing characteristic selecting section, and a first type current control section and a second type current control section are provided on the first type recording amplifier and second type recording amplifier respectively.

The third aspect of the invention brings about the following effects. The magnetic recorder having the recording compatibility uses magnetic tapes of plural types differing mutually in the coercive force and other magnetization characteristics, and the recording current may also differ in accordance with the difference in the magnetization characteristic. The invention is intended to cope with such difference in the magnetization characteristic. That is, if the tape corresponding to the first type recording format requires a relatively larger (or smaller) recording current, the first type current control section gives an instruction to the first type recording amplifier so as to obtain such relatively larger (or smaller) recording current. Or, if the tape corresponding to the second type recording format requires a relatively smaller (or larger) recording current, the second type current control section gives an instruction to the second type recording amplifier so as to obtain such relatively smaller (or larger) recording current. Thus, the recording compatibility is realized while corresponding to the change in the recording current based on the type of the tape.

A digital magnetic recorder in a fourth aspect of the invention relates to the second and third aspects of the invention is characterized in that each of the components is individually provided in plural recording heads equipped with a rotary cylinder head. This is a more specific description of the second and third aspects of the invention. That is, the digital magnetic recorder is generally of helical scan system, and includes a rotary head cylinder. The rotary head cylinder usually traces plural tracks of the magnetic tape during one revolution. That is, the rotary head cylinder includes plural recording heads, and the individual constituent elements of the second and third aspects of the invention are provided in each one of these recording heads. In a different point of view, if the fourth aspect of the invention is not specified, the invention includes a case of having only one recording head equipped with the rotary head cylinder.

A digital magnetic recorder in a fifth aspect of the invention relates to the first to fourth aspects of the invention is characterized by being capable of varying a tape speed controlled by a capstan motor control system in accordance with the recognizing result based on the type of the recording format.

In accordance with the difference in recording format, the type of magnetic tape also varies, and generally the tape speed is changed at the same time. It is therefore necessary to vary the tape speed in accordance with the tape being used, as well as to select the equalizing characteristic suited to the recording format, that is, the tape being used. The fifth aspect of the invention describes this point.

As the rotary head cylinder, when a rotary head cylinder corresponding to the first type recording format is used, the head width of this recording head may not directly correspond to the second type recording format. However, by adjusting the tape speed, overwriting is done when the recording head traces the magnetic tape, and as a result of such overwriting, the track width comes to correspond to the second type recording format.

The fifth aspect of the invention brings about the following effects. The format recognizing section recognizes that which format is the recording format , and the equalizing characteristic is varied in accordance with the recognizing result, and also the capstan motor control system is controlled according to the recognizing result, and the tape speed is varied. As a result, the recording compatibility can be realized while corresponding to the change in the equalizing characteristic based on the type of the tape and also corresponding to the change in the tape speed based on the type of the tape.

A digital magnetic recorder in a sixth aspect of the invention relates to the fifth aspect of the invention is characterized by being capable of varying a target value in a speed control section for servo in the capstan motor control system and a gain in a phase control section in accordance with the recognizing result based on the type of the recording format. This is a more specific description of the fifth aspect of the invention.

The sixth aspect of the invention brings about the following effects. Together with the target value in the speed control section for servo, the gain in the phase control section for servo is varied on the basis of the type recognizing result of the recording format. The format recognizing section recognizes the recording format is which format, and varies the equalizing characteristic on the basis of the recognizing result, and also varies the target value in the speed control section for servo in the capstan motor control system and the gain in the phase control section. As a result, the recording compatibility is realized while corresponding to the change in the equalizing characteristic based on the type of the tape and also corresponding to the change in the tape speed based on the type of the tape by making use of the function of the capstan servo.

A digital magnetic recorder in a seventh aspect of the invention relates to the sixth aspect of the invention is characterized in that an object of the target being value capable of varying in the speed control section is a FG error detector, and an object of the gain being capable of varying in the phase control section is an AFT error amplifier. Herein, "FG" refers to the frequency generator, and "AFT" stands for automatic track finding. This is a more specific description of the sixth aspect of the invention.

In the fifth aspect of the invention, from a opposite viewpoint, if the fifth aspect of the invention is not specified, the invention may include a case in which the tape speed is not changed between plural types of tapes used differing in the recording format. Such a case is presented in an eighth aspect of the invention.

A digital magnetic recorder in an eighth aspect of the invention relates to the first to fourth aspects of the invention is characterized by being incapable of varying the tape speed controlled by the capstan motor control system regardless of the recognizing result based on the type of the recording format.

The eighth aspect of the invention brings about the following effects. When the tape is changed, the equalizing characteristic is changed in accordance with the tape being used, but the tape speed is not changed. In this case, the reproducing compatibility is lost, but the recording compatibility is maintained.

That is, on the basis of the first type recording format, suppose recording in a first type magnetic tape is changed over to a second type magnetic tape. In this case, the equalizing characteristic is changed over to the second type equalizing characteristic, but the tape speed remains same as in the case of the first type recording format. In the second type magnetic tape thus recorded, of course, the recording compatibility is maintained, and the reproducing compatibility is also maintained as far as reproduced in the same magnetic recorder.

Contrary to the case above, on the basis of the second type recording format, suppose recording in the second type magnetic tape is changed over to a first type magnetic tape. In this case, the equalizing characteristic is changed over to the first type equalizing characteristic, but the tape speed remains same as in the case of the second type recording format. In the first type magnetic tape thus recorded, of course, the recording compatibility is maintained, and the reproducing compatibility is also maintained as far as reproduced in the same magnetic recorder.

A digital magnetic recorder in a ninth aspect of the invention relates to the first to eighth aspects of the invention is characterized by being capable of varying a tape tension controlled by a reel control system in accordance with the recognizing result based on the type of the recording format.

Among plural types of magnetic tapes to be changed over in accordance with the difference in recording format, the tape thickness also changes, and the required tape tension varies accordingly. It is therefore necessary to design so as to select the equalizing characteristic suited to the recording format or the tape being used, and to vary the tape tension according to the tape being used. This point is described by the ninth aspect of the invention.

The ninth aspect of the invention brings about the following effects. The format recognizing section recognizes that which format is the recording format, and varies the equalizing characteristic on the basis of the recognizing result, and also controls the reel control system on the basis of the recognizing result to vary the tape tension. As a result, the recording compatibility can be realized while corresponding to the change in the equalizing characteristic based on the type of the tape and also corresponding to the change in the tape tension based on the type of the tape.

A digital magnetic recorder in a tenth aspect of the invention relates to the ninth aspect of the invention is characterized by being capable of varying the tape tension in the reel control system by changing over a target voltage about an error amplifier to a feed side tension sensor. This is a more specific description of the ninth aspect of the invention.

A digital magnetic recorder in an eleventh aspect of the invention relates to the first to tenth aspects of the invention is characterized by supplying or shutting off an erase signal to a flying erase head in a flying erase control system in accordance with the recognizing result based on the type of the recording format.

In accordance with the type of the magnetic tape and other like, the coercive force and other magnetization characteristics vary. Therefore, in accordance with the magnetic format, recording is made into a deeper position in the tape thickness direction, which is known as deep layer recording. In particular, deep layer recording is likely to occur when the frequency is relatively low. One of such signals is pilot signal for ATF (automatic track finding) as the basis of tracking servo. When recording next after such deep layer recording, flying erase is required in order to erase the deep layer recorded signal securely prior to recording. However, in accordance with the type of the magnetic tape or recording format, such flying erase may not be required. According to the eleventh aspect of the invention, it does not matter whether such flying erase is required or not.

The eleventh aspect of the invention brings about the following effects. The format recognizing section recognizes that which format is the recording format, and varies the equalizing characteristic on the basis of the recognizing result, and also recognizes necessity of flying erase on the basis of the recognizing result to supply or shut off the erase signal. When the erase signal is supplied, the recording quality is assured, or when the erase signal is not supplied, useless power consumption can be avoided. By thus controlling, the recording compatibility is realized while corresponding to the change in the equalizing characteristic based on the type of the tape and also corresponding to the necessity of flying erase based on the type of the tape.

A digital magnetic recorder in a twelfth aspect of the invention relates to the first to eleventh aspects of the invention is characterized by supplying or shutting off a control signal to a control head in a control head control system in accordance with the recognizing result based on the type of the recording format.

In accordance with the control format, there is no concept of control track. It is mainly in the case of a recording format of ATF (automatic track finding). However, together with the ATF, or instead of the ATF, there is also a recording format intended to detect the tape position and track position by recording a control signal in the control track. For example, when running is started from the stopped state of the magnetic tape, it takes much time until coming on track, and therefore the response is poor with the ATF alone. Accordingly, by making use of the control signal recorded in the control track, tracking servo can be attracted instantly. Thus by starting up quickly, it is changed over to AFT consequently. On the whole, therefore, while improving the tracking precision, quick starting is realized. According to the twelfth aspect of the invention, it does not matter whether such control signal recording is required or not.

The twelfth aspect of the invention brings about the following effects. The format recognizing section recognizes that which format is the recording format, and varies the equalizing characteristic on the basis of the recognizing result, and also recognizes necessity of control signal recording on the basis of the recognizing result to supply or shut off the control signal. When the control signal is supplied, the tracking servo can be attracted quickly, or when the control signal is not supplied, useless power consumption can be avoided. By thus controlling, the recording compatibility can be realized while corresponding to the change in the equalizing characteristic based on the type of the tape and also corresponding to the necessity of control signal recording based on the type of the tape.

A digital magnetic recorder in a thirteenth aspect of the invention relates to the first to twelfth aspects of the invention is characterized by supplying or shutting off an analog audio signal to a cue head in a cue control system in accordance with the recognizing result based on the type of the recording format.

In accordance with the control format, there is no concept of cue track. It is mainly in the case of a recording format corresponding to consumer use. However, in the recording format corresponding to professional use, in consideration of search of insert point in editing by reproduced audio, an analog audio signal may be also recorded in the cue track. According to the thirteenth aspect of the invention, it does not matter whether such cue signal recording is required or not.

The thirteenth aspect of the invention brings about the following effects. The format recognizing section recognizes that which format is the recording format, and varies the equalizing characteristic on the basis of the recognizing result, and also recognizes necessity of recording of analog signal in the cue track on the basis of the recognizing result to supply or shut off the analog audio signal. When the analog audio signal is supplied, the cue reproduction can be done smoothly, or when the analog signal is not supplied, useless power consumption can be avoided. By thus controlling, the recording compatibility is realized while corresponding to the change in the equalizing characteristic based on the type of the tape and also corresponding to the necessity of analog audio signal recording based on the type of the tape.

A digital magnetic recorder in a fourteenth aspect of the invention relates to the first to thirteenth aspects of the invention is characterized in that the recording format is a DVCPRO format and a DV format.

The fourteenth aspect of the invention brings about the following effects. That is, the recording compatibility between the DVCPRO format and the DV format is realized.

Magnetic tapes conforming to the DV format are inexpensive, and are available at street shops, and the running cost can be lowered. Recodings that DV format recording is performed by using a DV tape in this magnetic recorder can be reproduced in a general reproducing apparatus for consumer use. Further, if this magnetic recorder has a reproducing function, a magnetic tape recorded in a general digital recorder for consumer use can be reproduced in the DV format mode. Moreover, by this one set, both the DV tape and the DVCPRO tape can be recorded, and the initial cost can be saved. In accordance with a condition such as the material grade, the DVCPRO format recording and the DV format recording can be used case by case. While recording by using a DVCPRO tape, if the DVCPRO tape runs out, recording can be continued by changing over to the DV tape. Thus, the convenience is enhanced in actual use.

More conveniently, there are major common points between the circuit configuration for the DVCPRO format recording and reproducing and the circuit configuration for the DV format recording and reproducing, and in the magnetic recording and reproducing apparatus compatible to both formats of the invention, the circuit scale is not much increased from the conventional configuration, and the rate of cost increase is small for its dramatic advantage in the convenience.

A digital magnetic recorder in a fifteenth aspect of the invention is characterized by being capable of selecting recordings to plural types of formats, providing plural types of recording heads each of which has a head width suited to each one of plural types of the recording formats in a rotary head cylinder, being capable of varying an equalizing characteristic in accordance with a recognizing result based on a type of a recording format, and being constituted so as to input a recording signal of the individual equalizing characteristic corresponding to the recording format into a recording head having the head width corresponding to the recording format. The effects of the invention are substantially the same as what explained in the above explanation of "Section of Solving the Problems."

A digital magnetic recorder in a sixteenth aspect of the invention is characterized by including, a first type recording equalizer corresponding to a first type recording format, a second type recording equalizer corresponding to a second type recording format, a first type recording head having a head width corresponding to the first type recording format and a second type recording head having a head width corresponding to the second type recording format both mounted on a rotary head cylinder, a format recognizing section for recognizing the type of the recording format, and an antinomic on/off changeover section for changing over antinomically between the on/off state of the system ranging from the first type recording equalizer to the first type recording head and the on/off state of the system ranging from the second type recording equalizer to the second type recording head in accordance with the recognizing result of the format recognizing section. This is a more specific description of the fifteenth aspect of the invention.

That is, in addition to include the first type recording equalizer, the second type recording equalizer, and the format recognizing section, the first type recording head and the second type recording head having the different head widths are mounted on the same rotary head cylinder, and further the antinomic on/off changeover section is provided, and the system ranging from the first type recording equalizer to the corresponding recording head and the system ranging from the second type recording equalizer to the corresponding recording head are antinomically changed over in on/off state.

The sixteenth aspect of the invention brings about the following effects. The format recognizing section recognizes that which format is the recording format, and gives the recognizing result to the antinomic on/off changeover section. In accordance with the given recognizing result, the antinomic on/off changeover section changes over the recording equalizer and the recording head. That is, it selects the system ranging from the first type recording equalizer to the first type recording head when the recognizing results shows the first type recording format, and selects the system ranging from the second type recording equalizer to the second type recording head when the recognizing result shows the second type recording format. As a result, the recording compatibility can be realized while corresponding to the change in the equalizing characteristic based on the type of the tape.

Further, the first type recording head has a head width conforming to the first type recording format, and the second type recording head has a head width conforming to the second type recording format, and therefore the recording characteristic is optimum in both recording formats. Moreover, since the first type and second type recording heads are mounted on the common rotary head cylinder, it is advantageous in the space and cost, and overwriting is not required.

A digital magnetic recorder in a seventeenth aspect of the invention relates to the fifteenth and sixteenth aspects of the invention is characterized by being capable of varying a phase reference signal to a PG error detection in the rotary head cylinder control system in accordance with the recognizing result based on the type of the recording format. Herein, "PG" is pulse generator.

The seventeenth aspect of the invention brings about the following effects. When mounting recording heads of plural types differing in the head width on the common rotary cylinder head, usually, the mounting positions are deviated in the peripheral direction of the rotary head cylinder. That is, the mounting phases are different. On the other hand, if the timing of recording signals sent from the video signal processing section is same in the plural recording formats, in the control of the rotation phase of the rotary cylinder on the basis of the PG error detection of the rotary cylinder control system, if nothing is adjusted between the plural recording formats, it is impossible to absorb the physical difference of deviation of the plural recording heads from the mounting phase on the rotary head cylinder, and therefore if recorded in a desired recording pattern in one recording format, in other recording format, the tape tracing timing by the recording head and the supply timing of recording signal are not matched, and it is impossible to record in desired recording pattern.

To solve this problem, as one concept, a delay unit for recording signal may be provided in a circuit from the video signal processing section to each recording head. However, it requires modification of circuit.

Accordingly, in the seventeenth aspect of the invention, the phase reference signal to the PG error detection in the rotary head cylinder control system is varied in accordance with the recognizing result of the type of the recording format, that is, the rotation phase of the rotary head cylinder is controlled on the basis of the adjusted phase reference signal, and the timing can be matched without modifying the circuit, and desired pattern can be recorded in any recording pattern.

A digital magnetic recorder in an eighteenth aspect of the invention relates to the fifteenth to seventeenth aspects of the invention is characterized by utilizing a recording head having a second type head width simultaneously in a state of recording by the recording head having a first type head width as a reproducing head, tracing a recording track right after traced by the recording head having the first type recording width by means of the recording head having the first type head width as the reproducing head, and being constituted so as to perform reproducing in parallel with recording. This aspect relates to a recording reproducing parallel mode.

In a certain recording mode, when the reproducing is performed in parallel with the recording, usually, a simultaneous reproducing head exclusive for the recording format must be prepared. However, since recording heads of plural types are mounted on the rotary head cylinder, the difficulty increases in the technical aspect, space and cost. Accordingly, but using the recording head of other recording format commonly as the simultaneous reproducing head, the necessity of exclusive simultaneous reproducing head is eliminated, and when mounting recording heads of plural types on the common rotary head cylinder, it is advantageous in the technical aspect, space and cost.

A digital magnetic recorder in a nineteenth aspect of the invention is characterized by being capable of selecting recordings in plural different formats, being capable of varying an equalizing characteristic in accordance with a recognizing result based on a type of a recording format, making a track width in a second type recording format smaller than a track width in a first type recording format, and being constituted so as to simultaneously trace plural tracks of the second type recording format in a flying erase head corresponding to the first type recording format, and thereby erasing the recording.

The following must be taken into consideration. That is, in expression, "the first type" and "the second type" are mentioned, but this is only a mere description for simplifying the expression. That is, the number of types of recording formats is not limited to two types, but it must be understood that there may be three or more types.

The effects obtained by the nineteenth aspect of the invention are substantially same as explained in the above "Section of Solving the Problems."

A digital magnetic recorder in a twentieth aspect of the invention relates to the nineteenth aspect of the invention, which is characterized by being constituted so as to perform recording by overwriting in order to commonly use a recording head corresponding to the first type recording format for recording in a narrower track width of the second type recording format, and being constituted so as to commonly use a flying erase head corresponding to the first type recording format and simultaneously trace plural tracks in the second type recording format in a flying erase in the second type recording format, thereby erasing the recording. This is a more specific description of the nineteenth aspect of the invention.

The twentieth aspect of the invention brings about the following effects. That is, when the rotary head cylinder corresponding to the first type recording format is used as the rotary head cylinder, the head width of its recording head may not directly correspond to the second type recording format. However, by adjusting the tape speed, overwriting is done when the recording head traces the magnetic tape, and as a result of overwriting the track width corresponds to the second type recording format. On the other hand, the format recognizing section recognizes that which format is the recording format, and varies the equalizing characteristics on the basis of the recognizing result, and also the capstan motor control system is controlled according to the recognizing result, and the tape speed is varied. As a result, the recording compatibility is realized while corresponding to the change in the equalizing characteristic based on the type of the tape, and also corresponding to the change in the tape speed based on the type of the tape.

If individual recording heads corresponding to recording formats of plural types are provided on the rotary head cylinder, since the rotary head cylinder is preferred to be as small as possible, it is a great demerit in the technical aspect, space and cost to install individual exclusive recording heads for different recording formats in the small rotary head cylinder. By contrast, as in the twentieth aspect of the invention, when the recording head is commonly used in recording formats of plural types, it is very advantageous in the technical aspect, space and cost.

The recording head corresponding to the first type recording format is greater in head width, and the track width of the second type recording format is narrower than it. Accordingly, when using the wide recording head corresponding to the first type recording format commonly in recording in the second type recording format, by overwriting, a recording track of a narrow track width can be formed by a recording head having a large head width.

In recording in the second type recording format, the wide flying erase head corresponding to the first type recording format is commonly used in a flying erase prior to recording, and not limited to this only, plural tracks are traced and erased simultaneously, so that a very rational operation is realized.

That is, the flying erase head commonly applied in flying erase in the first type and second type recording formats corresponds to the first type recording format, and its head width is greater. The flying erase head corresponding to the first type recording format is applied prior to recording by the recording head in the second type recording format, and the recording is erased.

When the head width of the flying erase head corresponding to the first type recording format to be used commonly is more than two times the track width of the second type recording format, plural tracks can be traced simultaneously and erased by this flying erase head. As a result, as for other flying erase heads than the one out of the plural flying erase heads on one rotary head cylinder, supply of erase signal current of strong power and high frequency is not necessary, so that the power consumption can be saved.

A digital magnetic recorder in a twenty-first aspect of the invention relates to the twentieth aspect of the invention is characterized by establishing the following relationships:

$$Fw_1 \geq Hw_1 = Tw_1 > Tw_2;$$

$$Fw_1 \geq Tw_2 \times 2;$$

and

$$Ow = Hw_1 - Tw_2,$$

among a track width $Tw_1$ in the first type recording format, a head width $Hw_1$ of the recording head corresponding to the first type recording format, a track width $Tw_2$ in the second type recording format, a head width $Fw_1$ of the flying erase head corresponding to the first type recording format, and a trace width Ow of the overwriting. This is a more specific description of the twentieth aspect of the invention. Herein, the third formula may be modified as follows:

$$Ow = Tw_1 - Tw_2$$

The second formula may be modified as follows:

$$Fw_1 \geq (Tw_1 - Ow) \times 2 = (Hw_1 - Ow) \times 2$$

Accordingly, the power consumption can be saved by simultaneous erasing of plural tracks by the limited flying erase head.

A digital magnetic recorder in a twenty-second aspect of the invention relates to the twentieth and twenty-first aspects of the invention is characterized by including, a first type recording equalizer corresponding to the first type recording format, a second type recording equalizer corresponding to the second type recording format, a format recognizing section for recognizing a type of a recording format; an equalizing characteristic selecting section for selecting either one of the first type recording equalizer and the second type recording equalizer in accordance with a recognizing result by the format recognizing section. This is a more specific description of the twentieth and twenty-first aspects of the invention.

That is, the recording equalizer is not one equalizer, but plural equalizers are used in accordance with the number of types of the recording formats, that is, the first type recording equalizer and the second type recording equalizer. To identify these recording equalizers of plural types, the format recognizing section is provided, and further the equalizing characteristic selecting section is provided for selecting either recording equalizer based on the recognizing result.

The twenty-second aspect of the invention brings about the following effects. The format recognizing section recognizes that which format is the recording format, and gives the recognizing result to the equalizing characteristic selecting section. The equalizing characteristic selecting section selects the recording equalizer in accordance with the given recognizing result. That is, when the recognizing result shows the first type recording format, the first type recording equalizer is selected, and when the recognizing result shows the second type recording format, the second type recording equalizer is selected. As a result, the recording compatibility can be realized while corresponding to the change in the equalizing characteristic based on the type of the tape, and at the same time the power consumption can be saved by simultaneous erasing of plural tracks by the limited flying erase head.

A digital magnetic recorder in a twenty-third aspect of the invention relates to the nineteenth aspect of the invention, which is characterized by being constituted so as to use a recording head having a narrower head width corresponding to the second type recording format in order to perform recording by the second type recording format for performing the recording of a narrower track width with respect to the truck width in the first type recording format, and being constituted so as to commonly use a flying erase head corresponding to the first type recording format and simultaneously trace plural tracks in the second type recording format in a flying erase in the second type recording format, thereby erasing the recording.

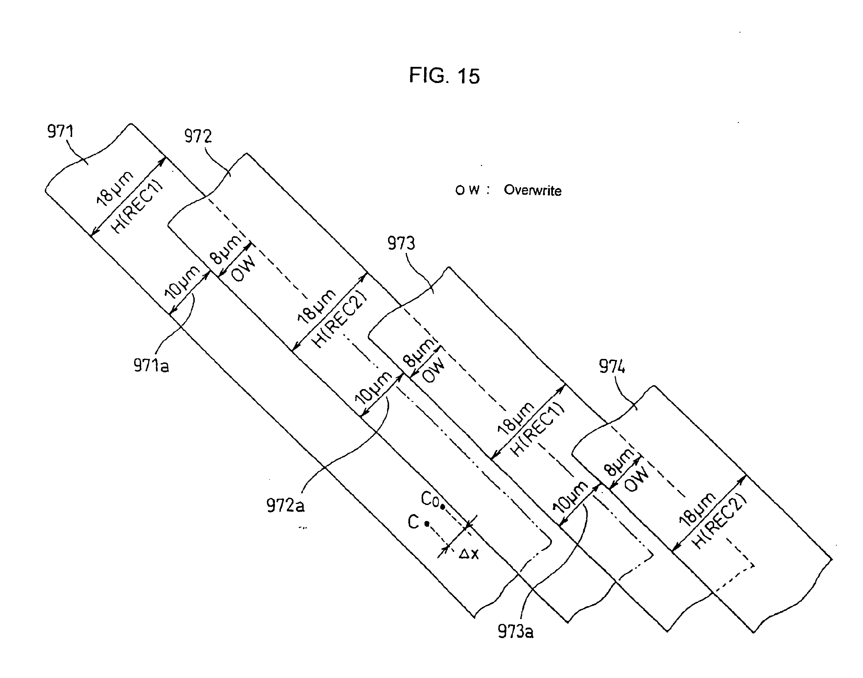

In the event of overwriting, the center C of the track made effective after overwriting is largely deviated from the center $C_0$ of the recording head (see Fig. 15 as for references C and $C_0$). The center $C_0$ of the recording head is very closer to the edge of the effective track, and is largely deviated from the center C of the effective track. The magnetic flux coming out from the recording head toward the magnetic tape is symmetric laterally with respect to the center $C_0$ of the recording head, and the change in the magnetic flux near the center $C_0$ is most similar to the change in the recording current. As going remote from the center Co, more errors are mixed in the magnetic recording state. Due to such reason, the deviation of center by overwriting is far from ideal from the viewpoint of a precision of a magnetic recording.

That is, in the twentieth aspect of the invention, overwriting is required, but in this twenty-third aspect of the invention, since an optimum recording head is used for each recording format, the head width is optimum in any recording format, and overwriting is not needed. Therefore, deviation of center due to overwriting is eliminated, and the center of the recording head and the center of the recording track are always matched in magnetic recording, so that the magnetic recording precision is excellent.

In particular, the recording head differs in each recording format with respect to various items, aside from the head width, such as size, shape, azimuth angle, shape and size of head gap, core material, crystal structure, number of turns of coil, abrasion resistance, magnetic permeability, saturated magnetic flux density, coercive force, high frequency magnetic characteristic, surface smoothness, rational cost, and productivity.

23 **EP 1 265 228 A1** 24

Therefore, in the case of overwriting by using only one common head, the recording characteristic is far from the optimum state. By contrast, according to the twenty-third aspect of the invention, by using an exclusive head for each recording format, the recording characteristic can be optimized for each recording format.

If plural rotary head cylinders are used for individual recording formats, it is a great demerit in the technical aspect, space and cost. In the twenty-third aspect of the invention, by contrast, by mounting recording heads of plural types for different recording formats on a common rotary head cylinder, it is advantageous in the technical aspect, space and cost, and at the same time the power consumption can be saved by simultaneous erasing of plural tracks by the limited flying erase head.

A digital magnetic recorder in a twenty-fourth aspect of the invention relates to the twenty-third aspect of the invention is characterized by establishing the following relationship:

$$Fw_1 \geq Hw_1 = Tw_1 > Tw_2;$$

$$FW_1 \geq Tw_2 \times 2;$$

and

$$Hw_2 = Tw_2,$$

among a track width $Tw_1$ of the first type recording format, a head width $Hw_1$ of recording head corresponding to the first type recording format, a track width $Tw_2$ of the second type recording format, a head width $Hw_2$ of recording head corresponding to the second type recording format, and a head width $Fw_1$ of a flying erase head corresponding to the first type recording format. This is a more specific description of the twenty-third aspect of the invention. Herein, the third formula may be modified as follows:

$$Fw_1 \geq Hw_2 \times 2$$

Accordingly, the power consumption can be saved by simultaneous erasing of plural tracks by the limited flying erase head.

A digital magnetic recorder in a twenty-fifth aspect of the invention relates to the twenty-third and twenty-fourth aspects of the invention is characterized by including, a first type recording equalizer corresponding to a first type recording format, a second type recording equalizer corresponding to a second type recording format, a first type recording head having a head width corresponding to the first type recording format and a second type recording head having a head width corresponding to the second type recording format mounted on a rotary head cylinder, a format recognizing section for recognizing a type of a recording format, and an antinomic on/off changeover section for changing over antinomically between the on/off state of the system ranging from the first type recording equalizer to the first type recording head and the on/off state of the system ranging from the second type recording equalizer to the second type recording head in accordance with the result recognized by the format recognizing section.

That is, in addition to the first type recording equalizer, second type recording equalizer, and the format recognizing section, the first type recording head and the second type recording head mutually different in head widths are mounted on the same rotary head cylinder, and further the antinomic on/off changeover section is provided, and the system ranging from the first type recording equalizer to the corresponding recording head and the system ranging from the second type recording equalizer to the corresponding recording head are antinomically changed over in on/off state.

The twenty-fifth aspect of the invention brings about the following effects. The format recognizing section recognizes that which format is the recording format, and gives the recognizing result to the antinomic on/off changeover section. In accordance with the given recognizing result, the antinomic on/off changeover section changes over the recording equalizer and the recording head. That is, it selects the system ranging from the first type recording equalizer to the first type recording head when the recognizing results shows the first type recording format, and selects and the system ranging from the second type recording equalizer to the second type recording head when the recognizing result shows the second type recording format. As a result, the recording compatibility can be realized while corresponding to the change in the equalizing characteristic based on the type of the tape.

Further, the first type recording head has a head width conforming to the first type recording format, and the second type recording head has a head width conforming to the second type recording format, and therefore the recording characteristic is optimum in both recording formats. Moreover, since the first type and second type vrecording heads are mounted on the common rotary head cylinder, it is advantageous in the technical aspect, space and cost, and overwriting as needed in the twentieth aspect of the invention is not required, and also the power consumption can be saved by simultaneous erasing of plural tracks by the limited flying erase head.

A digital magnetic recorder in a twenty-sixth aspect of the invention relates to the nineteenth to the twenty-fifth aspects of the inventioncharacterized by being constituted so as to supplying an erase signal to the flying erase head corresponding to the first type recording format in a flying erase head control system, even when recording at the second type recording format.

**13**

From other point of view, in recording in the second type recording format, it suggests there are flying erase mode and other mode not performing flying erase.

A digital magnetic recorder in a twenty-seventh aspect of the invention relates to the nineteenth to the twenty-fifth aspects of the invention is characterized by being capable of varying a tape speed controlled by a capstan motor control system in accordance with the recognizing result based on the type of the recording format.

In accordance with the difference in the recording format, the type of magnetic tape also varies, and generally the tape speed is changed at the same time. It is therefore necessary to vary the tape speed in accordance with the tape being used, as well as to select the equalizing characteristic suited to the recording format, that is, the tape being used. This aspect of the invention describes this point.

The twenty-seventh aspect of the invention brings about the following effects. The format recognizing section recognizes that which format is the recording format , and the equalizing characteristic is varied in accordance with the recognizing result, and also the capstan motor control system is controlled according to the recognizing result, and the tape speed is varied. As a result, the recording compatibility can be realized while corresponding to the change in the equalizing characteristic based on the type of the tape and also corresponding to the change in the tape speed based on the type of the tape, and in addition, as mentioned above, the power consumption can be saved by simultaneous erasing of plural tracks by the limited flying erase head.

A digital magnetic recorder in a twenty-eighth aspect of the invention relates to the fifteenth to the twenty-seventh aspects of the invention is characterized in that the recording format is a DVCPRO format and a DV format. In the magnetic recorder realizing the recording compatibility between the DVCPRO format and the DV format, as mentioned above, the power consumption can be saved by simultaneous erasing of plural tracks by the limited flying erase head.

A digital magnetic recording/reproducing apparatus in a twenty-ninth aspect of the invention is characterized by including a reproducing compatibility of magnetic tapes recorded by plural types of formats, in addition to functions of the magnetic recorder of the first to the twenty-eighth aspects of the invention.

According to the twenty-ninth aspect of the invention, therefore, not only the recording compatibility but also the reproducing compatibility can be realized.

BRIEF DESCRIPTION OF THE DRAWINGS

Fig. 1 is a block diagram showing an electric configuration of recording system of digital magnetic recording/reproducing apparatus of DVCPRO/DV compatible type in exemplary embodiment 1 of the invention.

Fig. 2 is a block diagram showing an electric configuration of reproducing system of the compatible magnetic recording/reproducing apparatus in exemplary embodiment 1.

Fig. 3 is a block diagram showing an electric configuration of capstan motor control system of the compatible magnetic recording/reproducing apparatus in exemplary embodiment 1.

Fig. 4 is a block diagram showing an electric configuration of reel control system of the compatible magnetic recording/reproducing apparatus in exemplary embodiment 1.

Fig. 5 is a block diagram showing an electric configuration of flying erase control system of the compatible magnetic recording/reproducing apparatus in exemplary embodiment 1.

Fig. 6 is a block diagram showing an electric configuration of control head control system of the compatible magnetic recording/reproducing apparatus in exemplary embodiment 1.

Fig. 7 is a block diagram showing an electric configuration of cue control system of the compatible magnetic recording/reproducing apparatus in exemplary embodiment 1.

Fig. 8 is a block diagram showing an electric configuration of rotary head cylinder control system of the compatible magnetic recording/reproducing apparatus in exemplary embodiment 1.

Fig. 9 is a block diagram of format recognizing section of the compatible magnetic recording/reproducing apparatus in exemplary embodiment 1.

Fig. 10 is a screen display state diagram when the format is designated of the compatible magnetic recording/reproducing apparatus in exemplary embodiment 1.

Fig. 11 is a structural diagram of rotary head cylinder corresponding to DVCPRO format of the compatible magnetic recording/reproducing apparatus in exemplary embodiment 1.

Fig. 12 is a side development diagram of rotary head cylinder of the compatible magnetic recording/reproducing apparatus in exemplary embodiment 1.

Fig. 13 is a track pattern diagram of DVCPRO format of the compatible magnetic recording/reproducing apparatus in exemplary embodiment 1.

Fig. 14 is a track pattern diagram of general DV format.

Fig. 15 is an explanatory diagram of overwriting of the compatible magnetic recording/reproducing apparatus in exemplary embodiment 1.

Fig. 16 is a block diagram showing an electric configuration of recording system of digital magnetic recording/reproducing apparatus of DVCPRO/DV compatible type in exemplary embodiment 2 of the invention.

Fig. 17 is a block diagram showing an electric configuration of reproducing system of the compatible magnetic recording/reproducing apparatus in exemplary embodiment 2.

Fig. 18 is a block diagram showing an electric configuration of rotary head cylinder control system of the compatible magnetic recording/reproducing apparatus in exemplary embodiment 2.

Fig. 19 is a structural diagram of rotary head cylinder corresponding to DVCPRO format of the compatible magnetic recording/reproducing apparatus in exemplary embodiment 2.

Fig. 20 is a side development diagram of rotary head cylinder of the compatible magnetic recording/ reproducing apparatus in exemplary embodiment 2.

Fig. 21 is a track pattern diagram of DVCPRO format of the compatible magnetic recording/reproducing apparatus in exemplary embodiment 2.

Fig. 22 is a track pattern diagram of DV format of the compatible magnetic recording/reproducing apparatus in exemplary embodiment 2.

Fig. 23 is a track pattern diagram (recording and reproducing parallel mode) of DVCPRO format of digital magnetic recording/reproducing apparatus of DVCPRO/DV compatible type in exemplary embodiment 3 of the invention.

Fig. 24 is a block diagram showing an electric configuration of flying erase control system of digital magnetic recording/reproducing apparatus of DVCPRO/DV compatible type in exemplary embodiment 4 of the invention.

Fig. 25 is an explanatory diagram of overwriting in DV format recording mode of compatible magnetic recording/reproducing apparatus in exemplary embodiment 4 of the invention.

Fig. 26 is an explanatory diagram of operation of simultaneous erasure of two tracks in DV format recording mode of compatible magnetic recording/reproducing apparatus in exemplary embodiment 4 of the invention.

Fig. 27 is a block diagram showing a configuration of flying erase control system of digital magnetic recording/reproducing apparatus of DVCPRO/DV compatible type in exemplary embodiment 5 of the invention.

Fig. 28 is an explanatory diagram of operation of simultaneous erasure of two tracks of digital magnetic recording/reproducing apparatus of DVCPRO/DV compatible type in exemplary embodiment 6 of the invention.

Fig. 29 is an explanatory diagram of operation of simultaneous erasure of two tracks in DV format recording mode of digital magnetic recording/reproducing apparatus of DVCPRO/DV compatible type in exemplary embodiment 7 of the invention.

Fig. 30 is a block diagram showing an electric configuration of recording system of camcorder "DVCPRO" as an example of digital camera-incorporated VTR of digital magnetic recording/reproducing apparatus in prior art.

Fig. 31 is a block diagram showing an electric configuration of reproducing system of "DVCPRO" (studio system) as an example of digital reproducing apparatus of prior art.

Fig. 32 is a block diagram showing an electric configuration of capstan motor control system of the camcorder "DVCPRO" of the prior art.

Fig. 33 is a block diagram showing an electric configuration of reel control system of the camcorder "DVCPRO" of the prior art.

Fig. 34 is a block diagram showing an electric configuration of flying erase control system of the camcorder "DVCPRO" of the prior art.

Fig. 35 is a block diagram showing an electric configuration of control head control system of the camcorder "DVCPRO" of the prior art.

Fig. 36 is a block diagram showing an electric configuration of cue control system of the camcorder "DVCPRO" of the prior art.

Fig. 37 is a block diagram showing an electric configuration of rotary head cylinder control system of the camcorder "DVCPRO" of the prior art.

BEST MODE FOR CARRYING OUT THE INVENTION

Exemplary embodiments of the digital magnetic recording/reproducing apparatus of the invention are described specifically below while referring to the accompanying drawings. The following embodiments are examples of realizing reproducing compatibility and recording compatibility in plural recording formats, that is, DVCPRO format and DC format.

In advance, required conditions for reproducing compatibility and recording compatibility are explained.

In two or more recording formats, when using tapes mutually differing in magnetization characteristic, such as MP tape (metal-plated tape) and ME tape (metal-evaporated tape), in order to achieve recording and reproducing compatibility among two or more recording formats, the characteristic of magnetic recording in each magnetic tape must be taken into consideration. That is, the equalizing characteristic must be suited to each tape. Otherwise, normal or satisfactory recording or reproducing cannot be realized. This is the basic point.

In addition, the recording patterns on the magnetic tapes should be identical in the still mode. While the tapes are not running, for this purpose, the track inclinations on the tapes must be the same in each format, and the track angle (lead angle) of lower cylinder or cylinder diameter must be determined accordingly.

Between the DV format and DVCPRO format, the cylinder rotating speed (9000 rpm) and cylinder diameter (21.7 mm) are identical, and the track angle of the lower cylinder (9.15 °) and the head configuration are also identical. Therefore, between the DV format and DVCPRO format, in the still state, the recording patterns on the tapes are identical. Considering from other viewpoint, as far as the tape patterns are identical, the cylinder diameter, track angle of lower cylinder, rotating speed, and head configuration can be set freely.

The relation between the tape speed and track pitch in the DV format and DVCPRO format is discussed below.

In the case of the DV format, the tape speed is 18.83 mm/sec. When the tape starts to run at this speed directly from the still state, the track inclination is raised from 9.15° in the still state to 9.1668°. But this value is measured when no tension is applied, and a slight difference is caused when tension is applied. Calculating the position where the next head contacts with the tape, the distance is 10 μm from the center of the track being traced in the still state to the center of the next track. When the tape continues to run at this speed, a next track is drawn on the tape at every 10 μm. Thus, the track pitch of DV format is determined at 10 μm.

In the case of the DVCPRO format, since the tape speed is 33.82 mm/sec, the track inclination of 9.15° in the still state is lifted to 9.1784°. Calculating the position where the next head contacts with the tape herein, it is 18 μm behind the position being traced in the still state. When the tape continues to run at this speed, a next track is drawn on the tape at every 18 μm. Thus, the track pitch of DVCPRO format is determined at 18 μm.

Hence, to achieve recording compatibility and reproducing compatibility, the tape speed is determined on the basis of the track pitch of each format. That is, on the basis of the rotary head cylinder conforming to the DVCPRO format, when recorded at tape speed of 33.82 mm/sec, DVCPRO format recording is made in the recording track of track width of 18 μm at track angle of about 9.17° , or when recorded at tape speed of 18.83 mm/sec, DV format recording can be made in the recording track of track width of 10 μm nearly at the same track angle.

Incidentally, as explained in relation to the eighth aspect of the invention, if tape compatibility is required in recording only, the tape speed is arbitrary, and a specific tape speed can be used regardless of the format change.

The best mode of carrying out the invention is explained in exemplary embodiment 1, and the digital magnetic recording/reproducing apparatus of DVCPRO/DV compatible type of exemplary embodiment 1 is explained specifically below. The following exemplary embodiments 1 to 3 relate to the magnetic recording/ reproducing apparatus of DVCPRO/DV compatible type requiring overwriting in the DV format recording mode.

(Exemplary Embodiment 1)

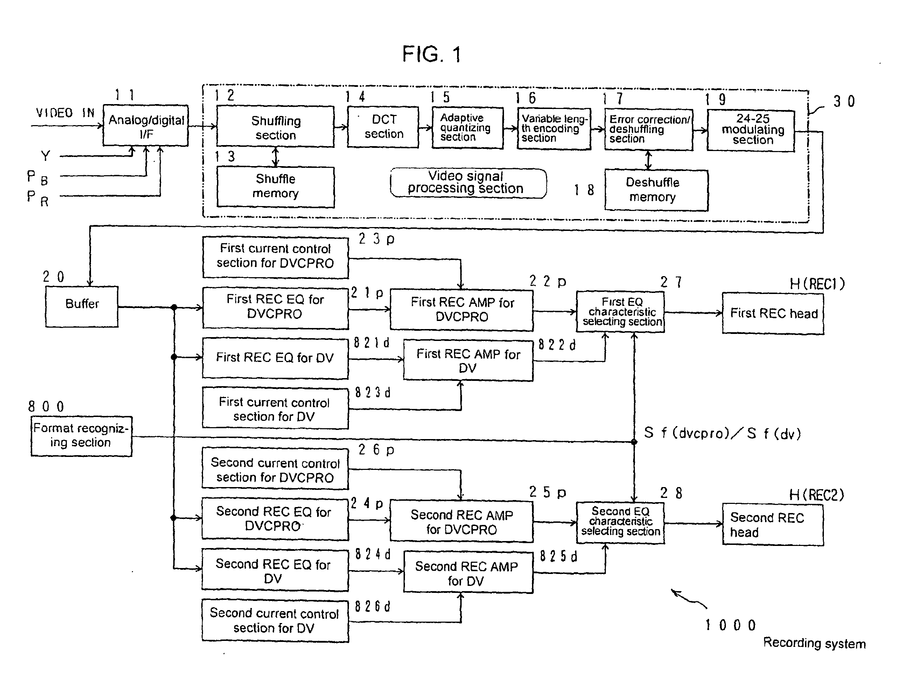

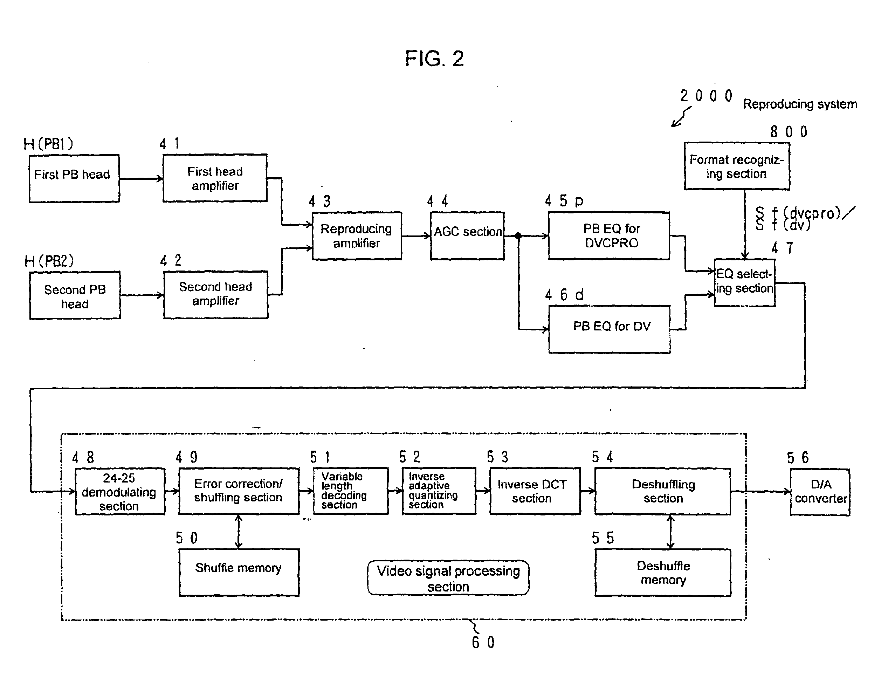

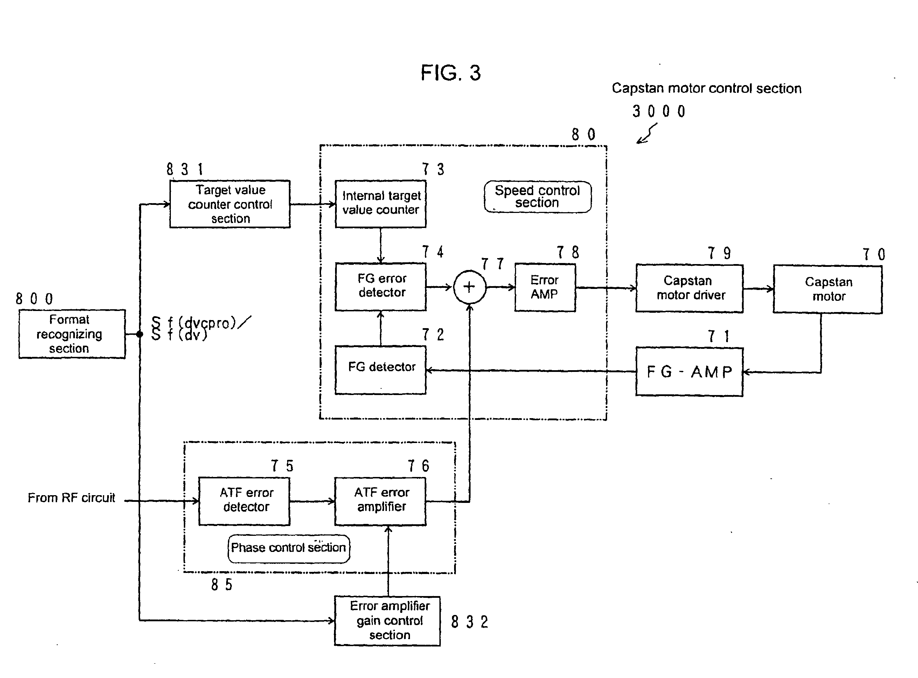

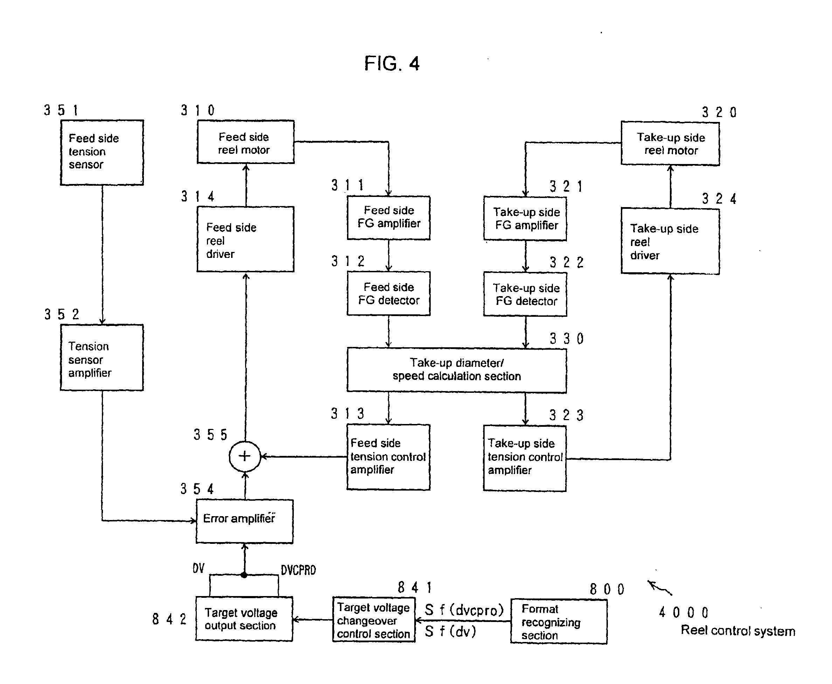

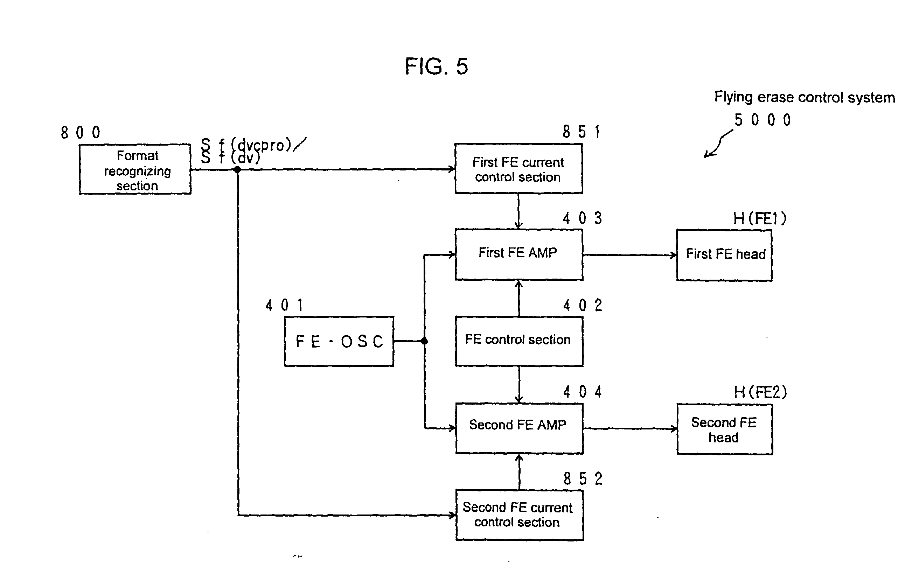

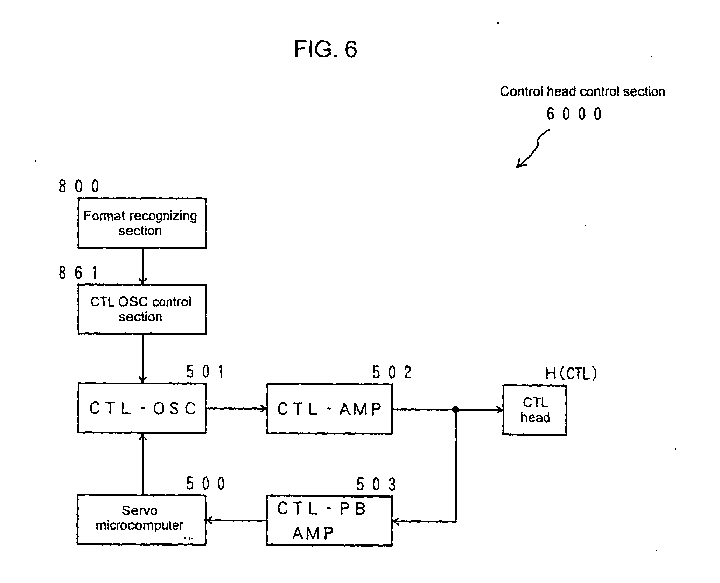

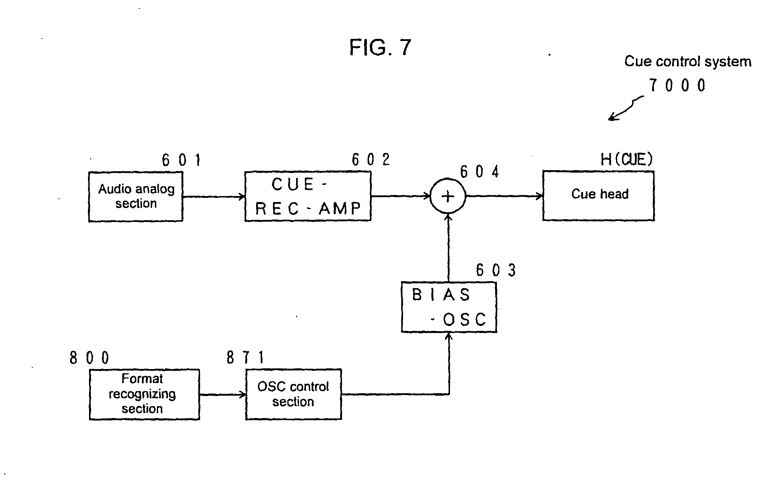

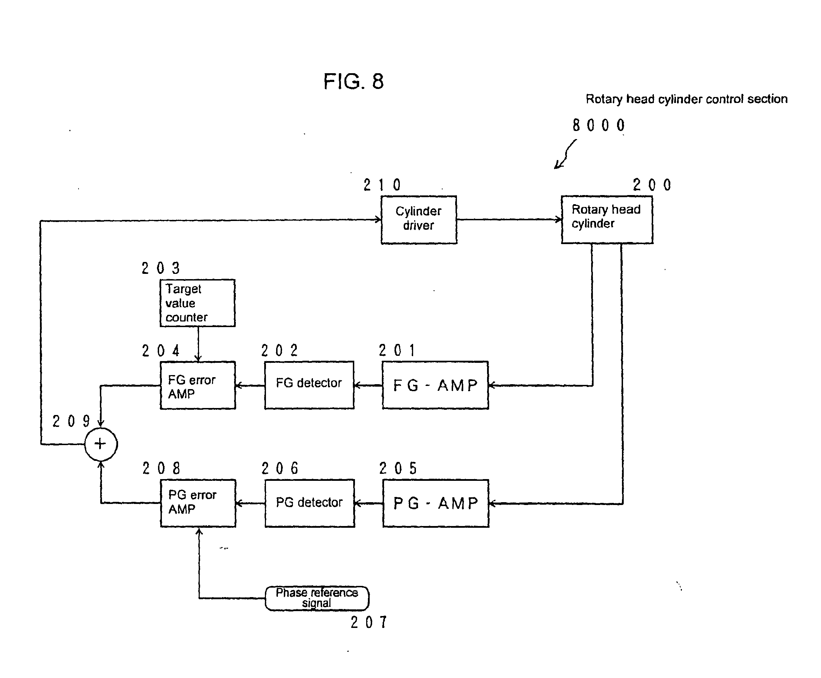

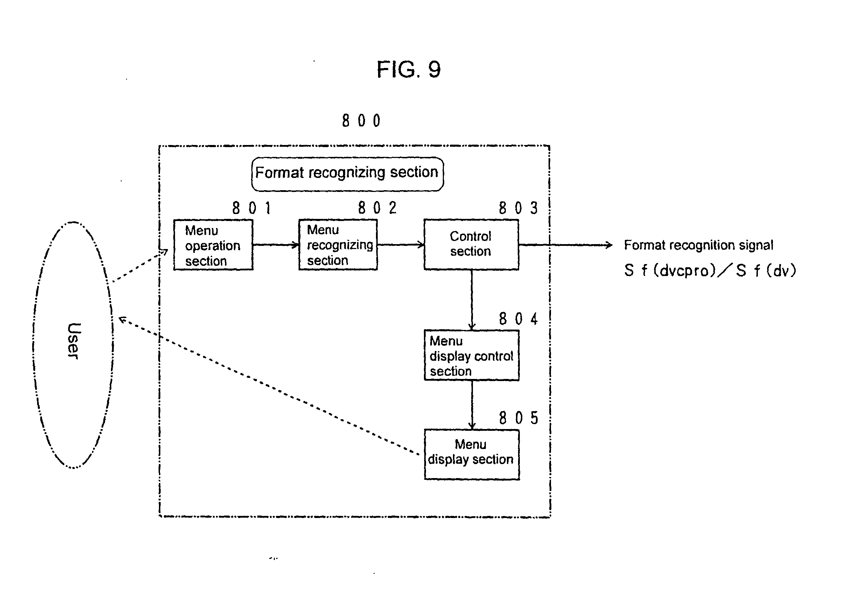

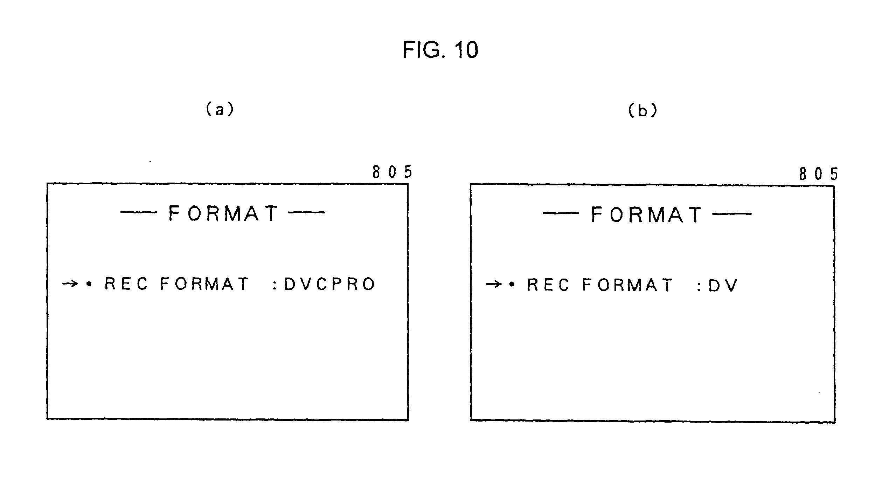

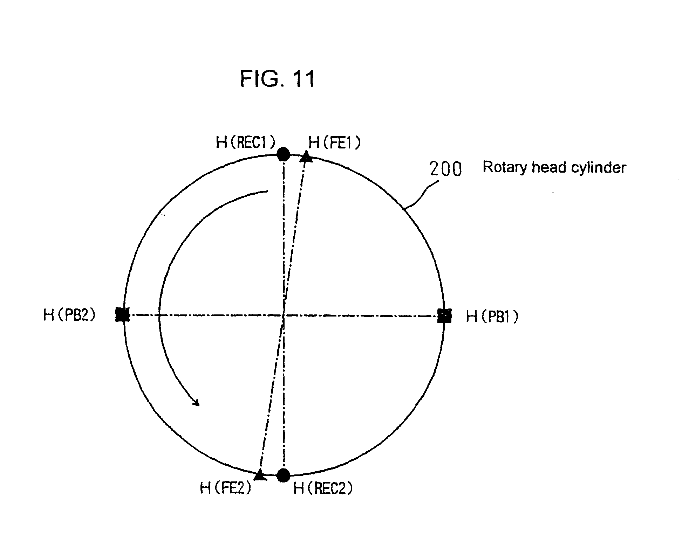

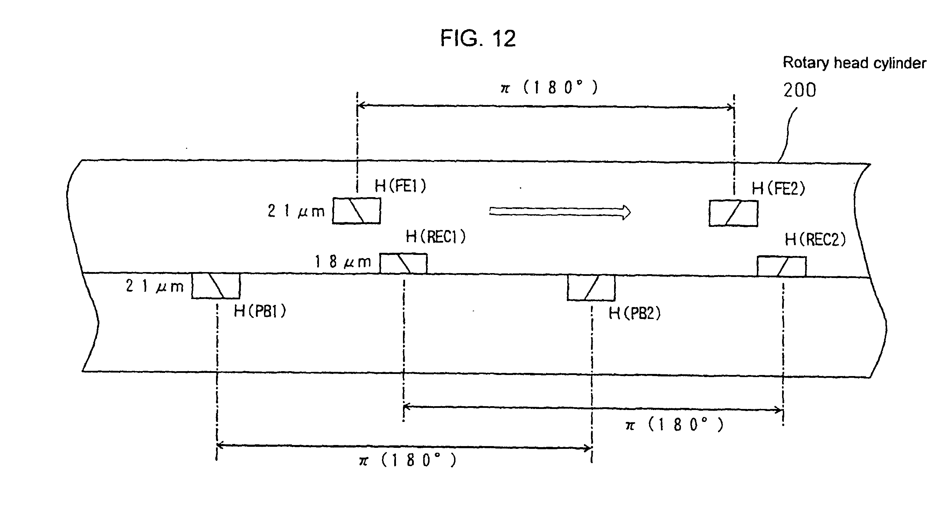

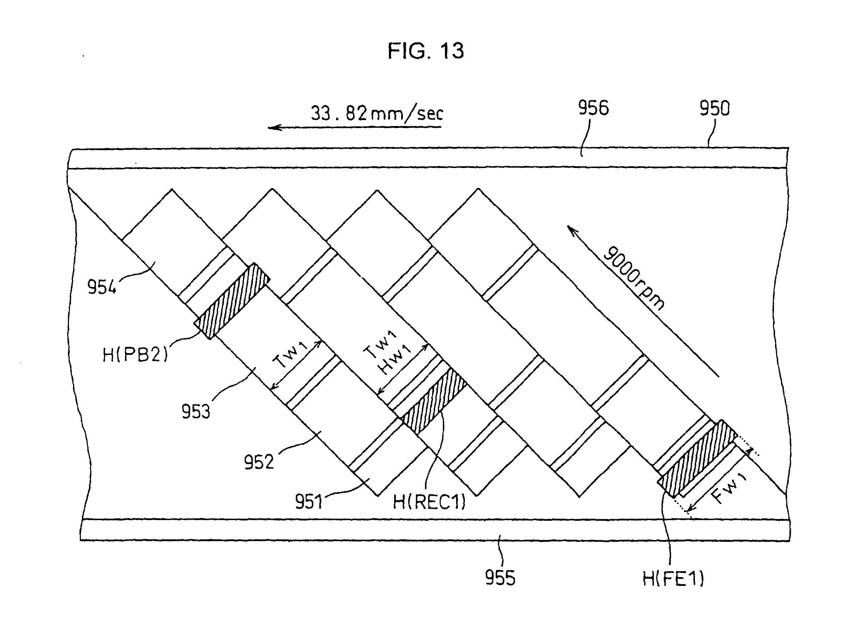

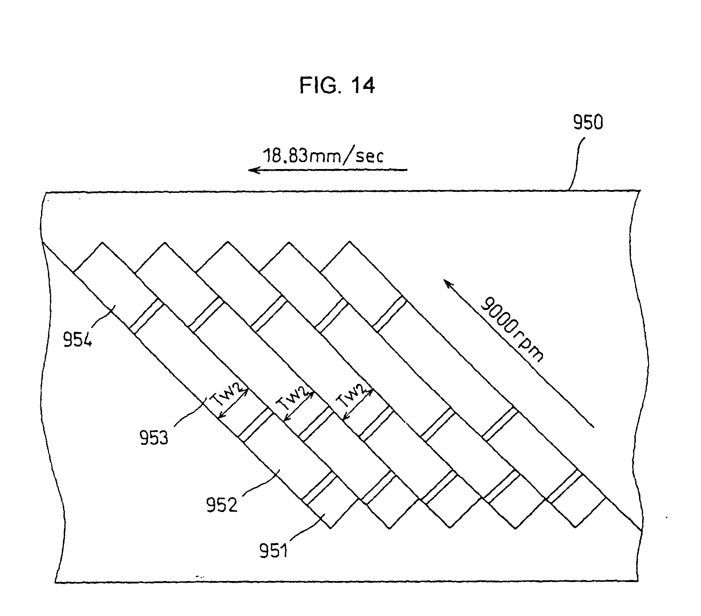

Fig. 1 is a block diagram showing an electric configuration of recording system 1000 of magnetic recording/reproducing apparatus of DVCPRO/DV compatible type in exemplary embodiment 1 of the invention, Fig. 2 is a block of its reproducing system 2000, Fig. 3 is a block diagram of capstan motor control system 3000, Fig. 4 is a block diagram of reel control system 4000, Fig. 5 is a block diagram of flying erase control system 5000, Fig. 6 is a block diagram of control head control system 6000, Fig. 7 is a block diagram of cue control system 7000, Fig. 8 is a block diagram of rotary head cylinder control system 8000, Fig. 9 is a block diagram of format recognizing section, Fig. 10 is a screen display state diagram when the format is designated, Fig. 11 is a structural diagram of rotary head cylinder corresponding to DVCPRO format, Fig. 12 is a side development diagram of its rotary head cylinder, Fig. 13 is a track pattern diagram of DVCPRO format, Fig. 14 is a track pattern diagram of general DV format, and Fig. 15 is an explanatory diagram of overwriting.

In Fig. 1 showing a block diagram of recording system 1000 of digital magnetic recording/reproducing apparatus of this exemplary embodiment, reference numeral 11 is an analog/digital interface, 12 is a shuffling section, 13 is a shuffle memory, 14 is a DCT section (discrete cosine transform section), 15 is an adaptive quantizing section, 16 is a variable length encoding section, 17 is an error correcting/deshuffling section, 18 is a deshuffle memory, 19 is 24-25 modulating section, 20 is a buffer, 21p is a first recording equalizer for DVCPRO, 22p is a first recording amplifier for DVCPRO, 23p is a first current control section for DVCPRO, 24p is a second recording equalizer for DVCPRO, 25p is a second recording amplifier for DVCPRO, 26p is a second current control section for DVCPRO, H (REC1) is a first recording head, H (REC2) is a second recording head, and 30 is a video signal processing section, and these constituent elements are same as in the prior art (Fig. 30).

As new constituent elements of this exemplary embodiment, reference numeral 821d is a first recording equalizer for DV format, 822d is a first recording amplifier for DV format, 823d is a first current control section for DV format, 824d is a second recording equalizer for DV format, 825d is a second recording amplifier for DV format, 826d is a second current control unit for DV format, 27 is a first equalizing characteristic selecting section, 28 is a second equalizing characteristic selecting section, and 800 is a format recognizing section.

The video signal processing section 30 is common to the DVCPRO format and DV format.

Digital data supplied from the video signal processing section 30 is supplied into four systems through the buffer 20.

In a first system, the data is supplied into the first recording equalizer for DVCPRO 21p, and i's fed to the next first recording amplifier 22p, and the recording current is controlled by the first current control section 23p, and is issued to the first equalizing characteristic selecting section 27.

In a second system, the data is supplied into the second recording equalizer for DVCPRO 24p, and is fed to the next second recording amplifier 25p, and the recording current is controlled by the second current control section 26p, and is issued to the second equalizing characteristic selecting section 28.

These recording equalizers 21p, 24p, recording amplifiers 22p, 25p, and current control sections 23p, 26p are composed to control the equalizing characteristic and recording current suited to DVCPRO format recording.

In a third system, the data is supplied into the first recording equalizer for DV 821d, and is fed to the next first recording amplifier 822d, and the recording current is controlled by the first current control section 823d, and is issued to the first equalizing characteristic selecting section 27.

In a fourth system, the data is supplied into the second recording equalizer for DV 824d, and is fed to the next second recording amplifier 825d, and the recording current is controlled by the second current control section 826d, and is issued to the second equalizing characteristic selecting section 28.

These recording equalizers 821d, 824d, recording amplifiers 822d, 825d, and current control sections 823d, 826d are composed to control the equalizing characteristic and recording current suited to DV format recording.

The format recognizing section 800 discriminates whether the present recording mode set by the user is the DVCPRO format recording or DV format recording, and issues a format recognition signal Sf according to the recognizing result to necessary parts.

The format recognizing section 800 is connected not only to the recording system 1000 in Fig. 1, but also to the reproducing system 2000 in Fig. 2, capstan motor control system 3000 in Fig. 3, reel control system 4000 in Fig. 4, flying erase control system 5000 in Fig. 5, control head control system 6000 in Fig. 6, and cue control system 7000 in Fig. 7.

The specific configuration and operation of the format recognizing section 800 are explained later by referring to Fig. 9 and Fig. 10.

Output destinations of the format recognizing signal Sf are the first equalizing characteristic selecting section 27 and second equalizing characteristic selecting section 28 in the block diagram in Fig. 1.

To describe a format recognizing signal Sf from the format recognizing section 800, the format recognizing signal Sf indicating the DVCPRO format recording mode is described as "Sf (dvcpro)," and the format recognizing signal Sf indicating the DV format recording mode is described as "Sf (dv)."

When the format recognizing signal Sf is a format recognizing signal Sf (dvcpro) indicating the DVCPRO format recording mode, the first and second equalizing characteristic selecting sections 27, 28 select the recording data signals from the first and second recording amplifiers for DVCPRO 22p, 25p, and issue to the first and second recording heads H (REC1) and H (REC2).

Along with rotation of the rotary head cylinder 200 shown in Fig. 11, the first recording head H (REC1) and second recording head H (REC2) alternately traces the magnetic tape, and the recording data signals are directly recorded in the magnetic tape by these two recording heads H (REC1) and H (REC2).

In this way, when the format recognizing section 800 indicates the DVCPRO format recording mode, the DVCPRO format recording is selected together with the equalizing characteristic suited to the MP tape (metal-plated tape) used as its magnetic tape, the recording equalizers 21p, 24p for recording current control, recording amplifiers 22p, 25p, and current control sections 23p, 26p, and the recording data signals in the state suited to DVCPRO format recording are supplied to the first and second recording heads H (REC1) and H (REC2).

When the format recognizing signal Sf is the format recognizing signal Sf (dv) indicating the DV format recording mode, the first and second equalizing characteristic selecting sections 27, 28 select the recording signal data from the first and second recording amplifiers for DV 822d, 825d, and issue to the first and second recording heads H (REC1) and H (REC2).

In this way, when the format recognizing section 800 indicates the DV format recording mode, the DV format recording is selected together with the equalizing characteristic suited to the ME tape (metal-evaporated tape) used as its magnetic tape, the recording equalizers 821d, 824d for recording current control, recording amplifiers 822d, 825d, and current control sections 823d, 826d, and the recording data signals in the state suited to DV format recording are supplied to the first and second recording heads H (REC1) and H (REC2).

In Fig. 2 showing an electric configuration of the reproducing system 2000, reference numeral H (PB1) is a first reproducing head, H (PB2) is a second reproducing head, 41 is a first head amplifier, 42 is a second head amplifier, 43 is a reproducing amplifier, 44 is an AGC section (automatic gain control section), 45p is a reproducing equalizer for DVCPRO, 46d is a reproducing equalizer for DV, 47 is an equalizing characteristic selecting section, 48 is a 24-25 demodulating section, 49 is an error correcting/shuffling section, 50 is a shuffle memory, 51 is a variable length decoding section, 52 is a reverse adaptive quantizing section, 53 is a reverse DCT section, 54 is a deshuffling section, 55 is a deshuffle memory, 56 is a D/A converter, 60 is a video signal processing section, and 800 is a format recognizing section, and this configuration in Fig. 2 is exactly the same as in the prior art (Fig. 31).

In Fig. 3 showing an electric configuration of the capstan motor control system 3000, reference numeral 70 is a capstan motor, 71 is an FG (Frequency Generator) amplifier, 72 is an FG detector, 73 is an internal target value counter, 74 is an FG error detector, 75 is an ATF (Automatic Track Finding) error detector, 76 is an ATF error amplifier, 77 is an adder, 78 is an error amplifier, 79 is a capstan motor driver, 80 is a speed control section, and 85 is a phase control section, and these constituent elements are same as in the prior art (Fig. 32).

As new constituent elements of this exemplary embodiment, reference numeral 831 is a target value counter control unit, and 832 is an error amplifier gain control unit. Reference numeral 800 is a format recognizing section.

The basic operation of the speed control section 80 is as follows. That is, the capstan FG pulses (294 pulses per revolution of capstan) issued from the capstan motor 70 are supplied into the capstan FG amplifier 71 and amplified, and then supplied into the FG detector 72, and its output is compared with the count value of the internal target value counter 73 in the FG error detector 74, and the error component is issued.

The basic operation of the phase control section 85 is as follows. That is, the ATF signal supplied from the RF circuit is fed into the ATF error detector 75, and the track deviation amount is detected, and its output is supplied to the ATF error amplifier 76.

After summing up the error component from the FG error detector 74 and the error component from the ATF error detector 76, the sum is supplied into the error amplifier 78, and is fed as control signal into the capstan motor driver 79, and the capstan motor drive 79 drives the capstan motor 70 according to this control signal.

When the format recognizing section 800 issues a format recognition signal Sf (dvcpro) indicating the DVCPRO format recording mode, the target value counter control section 831 sets the counter target value suited to DVCPRO format recording in the internal target value counter 73. This counter target value is a larger value than in the case of DV format recording. It corresponds to the tape speed (33.82 mm/sec) of DVCPRO format recording, and is specifically set at 1580 Hz (frequency of one period of FG pulse).

The error amplifier gain control section 832 sets the gain suited to DVCPRO format recording in the ATF error amplifier 76 in the case of format recognition signal Sf (dvcpro). Specifically, the gain is set at a value about 10% larger than in the case of DV format recording.

When the format recognizing section 800 issues a format recognition signal Sf (dv) indicating the DV format recording mode, the target value counter control section 831 sets the counter target value suited to DV format recording in the internal target value counter 73. This counter target value is a smaller value than in the case of DVCPRO format recording. It corresponds to the tape speed (18.83 mm/sec) of DV format recording, and is specifically set at 879 Hz (frequency of one period of FG pulse).

The reason of such setting is as follows. The number of capstan FG pulses issued from the capstan motor 70 is 294 per revolution of the capstan. This is the same in the DVCPRO format recording mode and DV format recording mode, and is constant regardless of fluctuations of the tape speed. The time required to issue one reference pulse, that is, the period varies with the tape speed.

The FG error detector 74 compares the time required for output of one reference pulse of capstan FG pulse, that is, the period with the time data from the internal target value counter 73, and issues the difference to the adder 77.

The error amplifier gain control section 832 sets the gain suited to DV format recording in the ATF error amplifier 76 in the case of format recognition signal Sf (dv). The gain is a smaller value than in the case of DVCPRO, and specifically, the gain is set at a value about 20% smaller than in the case of DVCPRO format recording.

This difference is due to the tape to be used, that is, the MP tape is used in DVCPRO format recording, and ME tape is used in the case of DV format recording.

The gain is thus adjusted, and the AFT error amplifier 76 issues an error signal adjusted properly in level same as in the case of DVCPRO format recording to the adder 77.

In this way, the error component due to the tape speed and the error component due to the difference of the tape are integrated in the adder 77. This total error component is further amplified in the error amplifier 78, and is supplied to the capstan motor driver 79 as control signal, and on the basis of the control signal, the capstan motor drive 79 drives the capstan motor 70.

Thus, when the format recognizing section 800 indicates the DV format recording, the tape speed suited to DV format recording is set. When the format recognizing section 800 indicates the DVCPRO format recording mode, the tape speed suited to DVCPRO format recording is set.

In Fig. 4 showing an electric configuration of the reel control system 4000, reference numeral 310 is a feed side reel motor, 311 is a feed side FG amplifier, 312 is a feed side FG detector, 320 is a take-up side reel motor, 321 is a take-up side FG amplifier, 322 is a take-up side FG detector, 330 is a take-up diameter and speed calculating section, 313 is a feed side tension control amplifier, 314 is a feed side reel driver, 323 is a take-up side tension control amplifier, 324 is a take-up side reel driver, 351 is a feed side tension sensor, 352 is a tension sensor amplifier, 354 is an error amplifier, and 355 is an adder, and these constituent elements are same as in the prior art (Fig. 33).

As new constituent elements in this exemplary embodiment, reference numeral 841 is a target voltage changeover control section, and 842 is a target voltage output section. Reference numeral 800 is a format recognizing section.

After the FG (Frequency Generator) signal from the take-up side reel motor 320 is supplied and amplified in the take-up side FG amplifier 321, and is supplied in the take-up side FG detector 322, and this detection result is supplied into the take-up diameter and speed calculating section 330, and the result calculated on the basis of this information is supplied to the take-up side tension control amplifier 323 as a take-up side tension control voltage, and is supplied to the take-up side reel driver 324 as a take-up side reel torque control voltage. The take-up side reel driver 324 drivers the take-up side reel motor 320 on the basis of the supplied control voltage.

On the other hand, the FG signal from the feed side reel motor 310 is supplied and amplified in the feed side FG amplifier 311, and is supplied into the feed side FG detector 312, and the detection result is supplied in the take-up diameter and speed calculating section 330, and the result calculated on the basis of this information is supplied to the feed side tension control amplifier 313 as feed side tension control voltage, and is supplied to the adder 355 as reel torque control voltage.

The tension voltage detected by the feed side tension sensor 351 is amplified in the tension sensor amplifier 352, and is supplied into the error amplifier 354. In the error amplifier 354, the difference of the voltage of the feed side tension target value supplied from the target voltage output section 842 and the detection tension voltage is obtained, and is issued to the adder 355. The target voltage supplied from the target voltage output section 842 is changed in the recording format to either DVCPRO format or DV format. The tension control voltage supplied from the feed side tension control amplifier 313 and the tension control voltage supplied from the error amplifier 354 are summed up in the adder 355, and the final tension control voltage of the result of summing is supplied to the feed side reel driver 314 as reel torque control voltage. The feed side reel driver 314 drives the feed side reel motor 310 on the basis of the supplied control voltage.

When the format recognizing section 800 issues a format recognition signal Sf (dvcpro) indicating the DVCPRO format recording mode, the target voltage changeover control section 841 instructs the target voltage output section 842 to issue a target voltage suited to DVCPRO format recording, and this target voltage is larger than in the case of DV format recording. This is because the thickness of the MP tape (metal-plated tape) used in DVCPRO format recording is greater, and a larger tension is required. As the target value in the case of DVCPRO format recording, a voltage corresponding to a tension of about $52.9 \times 10^{-3}$ N (Newton) (5.4 g weight) at the feed side outlet is applied.

When the format recognizing section 800 issues a format recognition signal Sf (dv) indicating the DV format recording mode, the target voltage changeover control section 841 instructs the target voltage output section 842 to issue a target voltage suited to DV format recording. This target voltage is smaller than in the case of DVCPRO format recording. This is because the thickness of the ME tape (metal-evaporated tape) used in DV format recording is smaller, and a smaller tension is enough. As the target value in the case of DV format recording, a voltage corresponding to a tension of about $44.1 \times 10^{-3}$ N (Newton) (4.5 g weight) at the feed side outlet is applied.

In Fig. 5 showing an electric configuration of the flying erase control system 5000, reference numeral 401 is an flying erase oscillator, 402 is a flying erase control section, 403 is a first flying erase amplifier, 404 is a second flying erase amplifier, H (FE1) is a first flying erase head, and H (FE2) is a second flying erase head, and these constituent elements are same as in the prior art (Fig. 34).

As new constituent elements in this exemplary embodiment, reference numeral 851 is a current control section for first flying erase, and 852 is a current control section for second flying erase. Reference numeral 800 is a format recognizing section.

In DVCPRO format recording, MP tape (metal-plated tape) is used as magnetic tape. A pilot signal for ATF (automatic track finding) as the basis of tracking servo is recorded in the tape at a relatively low frequency, but when the frequency is low, the recording layer tends to be deeper. In the case of MP tape, basically, the coercive force is large, and the tendency of deep layer recording is stronger. Therefore, to erase the pilot signal already recorded in the magnetic tape securely prior to next recording, flying erase is required, and erase signals of relatively strong power and relatively high frequency must be supplied to these flying erase heads H (FE1), H (FE2).

When the format recognizing section 800 issues a format recognition signal Sf (dvcpro) indicating the DVCPRO format recording mode, same as in the prior art, the first and second flying erase amplifiers 403, 404 corresponding to the current control sections for first and second flying erase 851, 852 are made active.

In this case, the high frequency oscillation signal from the flying erase oscillator 401 is supplied to the first and second flying erase amplifiers 403, 404, and while controlling the amplifiers appropriately by the flying erase control section 402, high frequency currents for erasing are supplied to the first and second flying erase heads H (FE1), H (FE2).

By contrast, in the case of DV format recording, ME tape is used as magnetic tape. Since the coercive force of ME tape is relatively low, deep layer recording occurs less frequently than in MP tape, and by only simple overwriting, new recording is possible while erasing the already recorded pilot signal. Therefore, in DV format, generally, flying erase is not required.

Accordingly, when the format recognizing section 800 issues a format recognition signal Sf (dv) indicating the DV format recording mode, the first and second flying erase amplifiers 403, 404 corresponding to the current control sections for first and second flying erase 851, 852 are made inactive. As a result, erase current signal of relatively high frequency for erasing is not supplied in the first and second flying erase heads H (FE1), H (FE2). Thus, useless power consumption is avoided.

Or, instead of cutting off current supply to the first and second flying erase heads H (FE1), H (FE2) by stopping the flying erase amplifiers 403, 404, the flying erase oscillator 401 may be stopped. Or, by inserting a switch in any position in a current passage, the flying erase may be turned on or off by the on/off control of the switch in DVCPRO format recording or DV format recording.

In accordance with the conditions, in DV format recording, if desired to erase the lower frequency component securely, flying erase may be executed preferably, and in this case, flying erase may be done through other operation process.

In Fig. 6 showing an electric configuration of the control head control system 6000, reference numeral 500 is a servo micro computer, 501 is a control oscillator, 502 is a control amplifier, 503 is a control reproducing amplifier, and H (CTL) is a control head, and these constituent elements are same as in the prior art (Fig. 35).

As new constituent elements in this exemplary embodiment, reference numeral 861 is an oscillator control section for control. Reference numeral 800 is a format recognizing section.

In a DV format recording for consumer use, there is no concept of control track. In VHS, there is a standard of control track for tracking servo, but in the DV format, control track is not required because the pilot signal for an ATF (Automatic Track Finding) is recorded in a deep layer of recording track.

In a DVCPRO format for professional use, by contrast, the pilot signal is used for the ATF (Automatic Track Finding), and the control signal for tracking servo recorded in the control track is also utilized. For example, when the magnetic tape is started from the stopped state, it takes time until coming on track, and the response is poor with ATF alone. By utilizing the control signal recorded in the control track, the tracking servo can be attracted instantly. Thus, by starting up quickly, the operation is changed over to the ATF. On the whole, therefore, starting is quick while enhancing the tracking precision.

Because of such condition, the operation is as follows.

When the format recognizing section 800 issues a format recognition signal Sf (dvcpro) indicating the DVCPRO format recording mode, same as in the prior art, the oscillator control section for control 861 makes the control oscillator 501 active. The control signal from the servo microcomputer 500 is modulated in the control oscillator 501, and the control signal is recorded in the control track of the magnetic tape from the control head H (CTL) through the control amplifier 502.

When reproducing, the signal from the control head H (CTL) is supplied into the servo microcomputer 500 through the control reproduction amplifier 503.

By contrast, when the format recognizing section 800 issues a format recognition signal Sf (dv) indicating the DV format recording mode, the oscillator control section for control 861 makes the control oscillator 501 inactive. Therefore, control signal is not supplied to the control head H (CTL), and control signal is not recorded in the control track of the magnetic tape. As a result, useless power consumption can be avoided.

Or, instead of stopping the oscillation of the control oscillator 501, the control amplifier 502 may be stopped. Or, by inserting a switch in any position in a current passage, the control signal recording may be turned on or off by the on/off control of the switch in DVCPRO format recording or DV format recording.

In Fig. 7 showing an electric configuration of the cue control system 7000, reference numeral 601 is an audio analog section, 602 is a cue recording amplifier, 603 is a bias oscillator, 604 is an adder, and H (CUE) is a cue head, and these constituent elements are same as in the prior art (Fig. 36).

As new constituent elements in this exemplary embodiment, reference numeral 871 is an oscillator control section. Reference numeral 800 is a format recognizing section.

In DV format recording for consumer use, there is no concept of cue track. In DVCPRO format for professional use, by contrast, the insert point at the time of editing is searched by reproduced sound. In the search operation by fast feed (FF) or rewind (REW), the audio signal by PCM recording reproduced from the recording track is intermittent. To compensate for this, analog audio signals are also recorded in the cue track. Because of analog recording, the reproduced audio signal from the cue head H (CUE) is not interrupted in search operation.

Because of such condition, the operation is as follows.

When the format recognizing section 800 issues a format recognition signal Sf (dvcpro) indicating the DVCPRO format recording mode, the oscillator control section 871 makes the bias oscillator 603 active. As a result, same as in the prior art, the audio analog signal is supplied into the cue recording amplifier 602, and the bias oscillation signal from the bias oscillator 603 is added, and the analog audio signal is recorded in the cue track on the magnetic tape from the cue head H (CUE).

By contrast, when the format recognizing section 800 issues a format recognition signal Sf (dv) indicating the DV format recording mode, the oscillator control section 871 makes the bias oscillator 603 inactive. Therefore, audio signal is not supplied to the cue head H (CUE), and analog audio signal is not recorded in the cue track of the magnetic tape. As a result, useless power consumption can be avoided.

Or, instead of stopping the oscillation of the bias oscillator 603, the cue recording amplifier 602 may be stopped. Or, by inserting a switch in any position in a current passage, the cue recording may be turned on or off by the on/off control of the switch in DVCPRO format recording or DV format recording.

Fig. 8 is a block diagram showing an electric configuration of the rotary head cylinder control system 8000, and this configuration is same as in the prior art shown in Fig. 37.

Fig. 9 is a block diagram showing an electric configuration of the format recognizing section 800. In Fig. 9, reference numeral 801 is a menu operation section, 802 is a menu recognizing section, 803 is a control section, 804 is a menu display control section, and 805 is a menu display section. Fig. 10 shows an example of menu display displayed in the menu display section 805.

By the menu operation section 801, the set value of the menu screen is changed, and this information is supplied to the menu recognizing section 802, and the result of recognition is supplied to the control section 803. In the control section 803, according to the result of the menu recognizing section 802, the display of the menu display section 805 is changed through the menu display control section 804, and the related control signal, that is, format recognition signal Sf, either format recognition signal Sf (dvcpro) or format recognition signal Sf (dv) is issued.

Fig. 11 shows a head configuration of rotary head cylinder 200 conforming to DVCPRO format as seen from the axial center direction. As shown in Fig. 11, the first recording head H (REC1) and second recording head H (REC2) are mounted on the upper cylinder which rotates on the rotary head cylinder 200 at a mutual interval of 180°, and on the upper cylinder, further, the first reproducing head H (PB1) and second reproducing head H (PB2) are mounted at a mutual interval of 180°, at positions deviated in phase by 90° from the both recording heads H (REC1) and H (REC2). On the upper cylinder, moreover, the first and second flying erase heads H (FE1), H (FE2) are mounted closely to the upper side of the first rotating direction and second recording heads H (REC1) and H (REC2).

Fig. 12 shows a head configuration of the rotary head cylinder 200 in a state developed in the peripheral direction. The first flying erase head H (FE1) is disposed at the upper side in the axial center direction from the first recording head H (REC1), and as shown in the track pattern in Fig. 13, the first flying erase head H (FE1) is two tracks ahead of the first recording head H (REC1).

The first reproducing head H (PB1) is disposed at the lower side in the axial center direction of the rotary head cylinder 200 from the first recording head H (REC1), and as shown in the track pattern in Fig. 13, the first reproducing head H (PB1) is 90° behind the first recording head H (REC1).

The diameter of the rotary head cylinder 200 is 21.7 mm, and its rotating speed is 9000 rpm in both DVCPRO format recording mode and DV format recording mode.

Fig. 13 shows tape patterns of DVCPRO format. They are explained below. Reference numeral 950 is a magnetic tape, 951 is an ITI (insert and tracking information) sector, 952 is an audio sector, 953 is a video sector, and 954 is a subcode sector. Reference numeral 955 is a control track, and 956 is a cue track.

The ITI sector 951 is a region for recording tracking information for insert editing, and specifically position information of each sector and identification code (position detection on track) are recorded. At the time of insert editing, by reproducing this ITI sector 951 by the first and second recording heads H (REC1), H (REC2), accurate tracking and accurate insert position control in the track longitudinal direction are realized.

The audio sector 952 is a region for recording digital audio information, and in an AUX (audio auxiliary data) portion, further, information such as editing start and end signal, number of samples per frame and others is recorded. There are two channels, and each channel is recorded alternately in every five tracks in the NTSC (525/60).

The video sector 953 is a region for recording digital video information, and closed caption signal and others are recorded in a VAUX (video auxiliary data) portion. Information of one frame portion is recorded in 10 tracks.

In the subcode sector 954, time code and recording date (tape management information conforming to SMPTE/EBU) are recorded. In order to reproduce data also in high speed reproduction, the sync block length is shorter than in other sectors, and the data is recorded by overlapping.

By tracing the magnetic tape 950 alternately by the first and second recording heads H (REC1), H (REC2), the recording data signals are recorded in the magnetic tape in digital state. The adjacent tracks closely contact with each other in the state free from guard band.

Fig. 14 shows tape patterns of DV format. The helical scan track is exactly same as the DVCPRO format in the modes of ITI sector 951, audio sector 952, video sector 953, and subcode sector 954. In the DV format, meanwhile, the region corresponding to the control track 955 and the region corresponding to the cue track 956 in the DVCPRO format are vacant regions as optional tracks. The adjacent tracks closely contact with each other in the state free from guard band.

In the tape pattern in DVCPRO format recording mode in Fig. 13, the track width is 18 μm, whereas in the tape pattern in DV format recording mode in Fig. 14, the track width is 10 μm. In the DVCPRO format having a wider track width, tracking errors hardly occur, and the reliability is higher.

In the rotary head cylinder 200 conforming to the DVCPRO format in Fig. 11 and Fig. 12, the head width of the first and second recording heads H (REC1), H (REC2) is 18 μm. The head width of the first and second reproducing heads H (PB1), H (PB2) is 21 μm, and the head width of the first and second flying erase heads H (FE1), H (FE2) is also 21 μm.

As shown in Fig. 15, in this digital magnetic recording/reproducing apparatus, in the DV format recording mode, by overwriting in the first and second recording heads H (REC1), H (REC2) having a head width of 18 μm conforming to the DVCPRO format, data is recorded at track width of 10 μm and track pitch of 10 μm conforming to the DV format.

The tape speed at this time is 18.83 mm/sec conforming to the DV format. That is, by the format recognition signal Sf (dv) specifying the DV format recording mode from the format recognizing section 800, it is set in the capstan motor control system 3000 on the basis of the setting of the target value corresponding to the DV format to the internal target value counter 73 by the target value counter control section 831 and the setting of the gain corresponding to the DV format to the ATF error amplifier 76 by the error amplifier gain control section 832.

For the odd-number track 971 having the magnetic tape 950 traced by the first recording head H (REC1) of head width of 18 μm, the even-number track 972 successively traced by the second recording head H (REC2) of head width of 18 μm is overwritten OW by 8 μm, and, as a result, the track width of the effective odd-number track 971a becomes 10 μm conforming to the DV format.

Similarly, for the even-number track 972 having the magnetic tape 950 traced by the second recording head H (REC2), the odd-number track 973 successively traced by the first recording head H (REC1) is overwritten OW by 8 μm, and, as a result, the track width of the effective even-number track 972a becomes 10 μm conforming to the DV format.

Further, for the odd-number track 973 having the magnetic tape 950 traced by the first recording head H (REC1), the even-number track 974 successively traced by the second recording head H (REC2) is overwritten OW by 8 μm, and, as a result, the track width of the effective odd-number track 973a becomes 10 μm conforming to the DV format.

The tracks 971a, 972a, 973a becoming effective after overwriting are same as recording patterns in the DV format recording mode shown in Fig. 14. That is, by making use of the rotary head cylinder 200 having recording heads H (REC1), H (REC2) of head width 18 μm conforming to DVCPRO format, and with the same rotating speed of the rotary head cylinder 200, only by adjusting the tape speed, recording in DV format is realized. In this case, as mentioned above, the equalizing characteristic adjustment, tape tension adjustment, flying erase stop, control signal stop, and cue recording stop are done at the same time.

(*1)

The problem in overwriting is explained by referring to Fig. 15. In the DV format recording mode, by overwriting with the first and second recording heads H (REC1), H (REC2) having head width of 18 μm conforming to the DVCPRO format, data is recorded at track width of 10 μm and track pitch of 10 μm conforming to the DV format. The tape speed at this time is 18.83 mm/sec conforming to the DV format.

For the odd-number track 971 having the magnetic tape traced by the first recording head H (REC1) of head width of 18 μm, the even-number track 972 successively traced by the second recording head H (REC2) of head width of 18 μm is overwritten OW by 8 μm, and, as a result, the track width of the effective odd-number track 971a becomes 10 μm conforming to the DV format.

Similarly, for the even-number track 972 having the magnetic tape 950 traced by the second recording head H (REC2), the odd-number track 973 successively traced by the first recording head H (REC1) is overwritten OW by 8 μm, and, as a result, the track width of the effective even-number track 972a becomes 10 μm conforming to the DV format.

Further, for the odd-number track 973 having the magnetic tape 950 traced by the first recording head H (REC1), the even-number track 974 successively traced by the second recording head H (REC2) is overwritten OW by 8 μm, and, as a result, the track width of the effective odd-number track 973a becomes 10 μm conforming to the DV format.

The tracks 971a, 972a, 973a becoming effective after overwriting are same as recording patterns in the DV format recording mode.

In this case, the center C of the track becoming effective after overwriting is largely deviated from the center C of the recording head. This deviation amount $\mu x$ is as much as $\mu x = 18/2 - 10/2 = 4$ μm, as compared with the effective track width of 10 μm. The center C of the recording head is very close (1 μm) to the edge of the effective track, and is largely deviated from the center C of the effective track. The magnetic flux coming out from the recording head toward the magnetic tape is symmetric laterally to the center C of the recording head, and the change of the magnetic flux near the center C is most similar to the change of the recording current. As going remoter from the center C, more errors are mixed in the magnetic recording state. Due to such reason, the center deviation by overwriting is far from ideal from the viewpoint of magnetic recording precision. (*2)

Concerning these overwriting problems, in the following exemplary embodiments, recording heads of plural types of head width conforming to each recording format are mounted, and hence overwriting is not necessary.

OTHER EXEMPLARY EMBODIMENTS

Other exemplary embodiments 2 to 7 are explained below.

(Exemplary Embodiment 2)

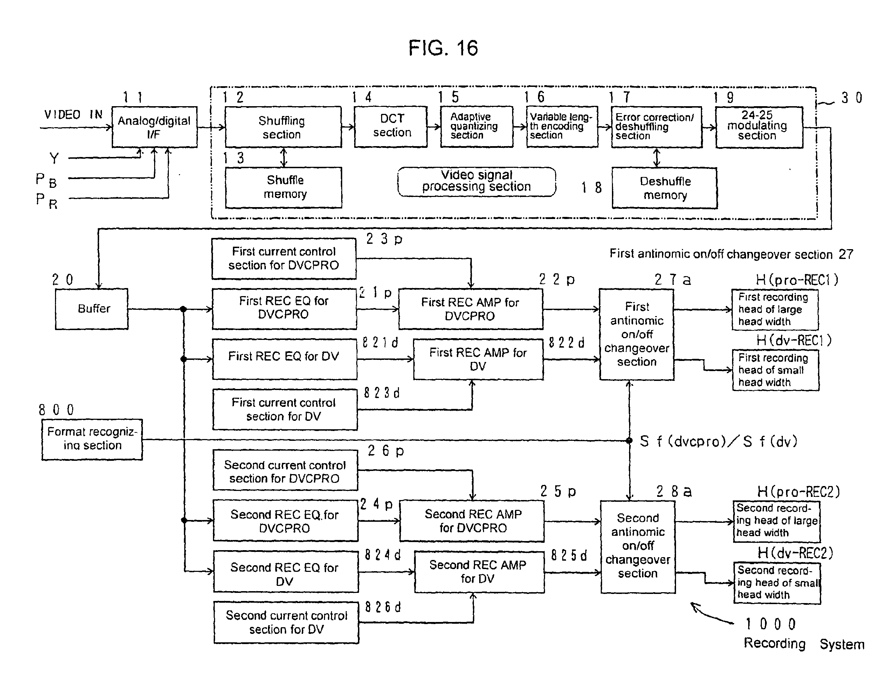

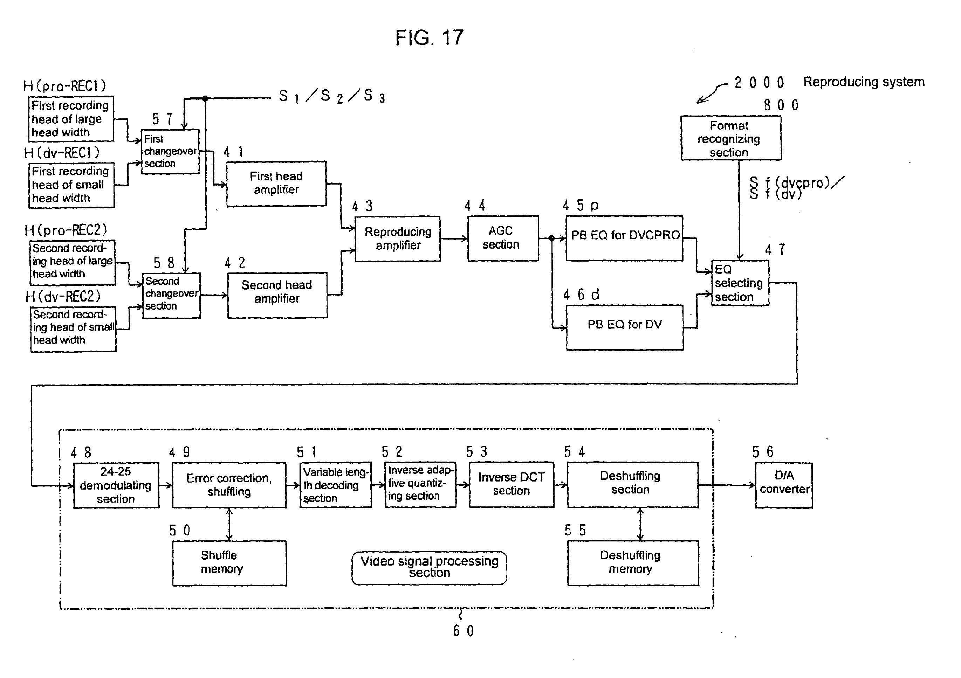

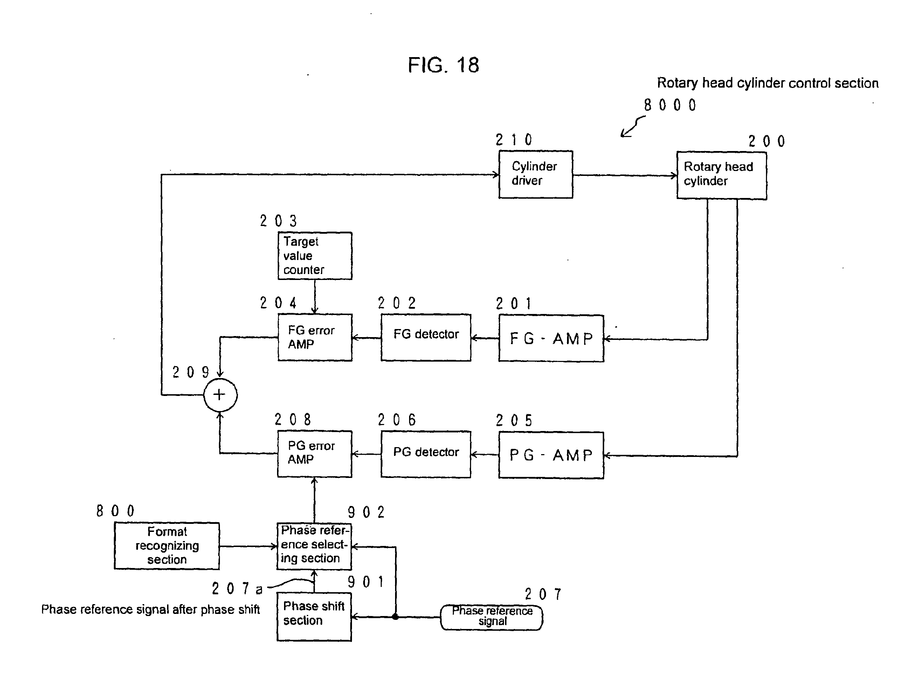

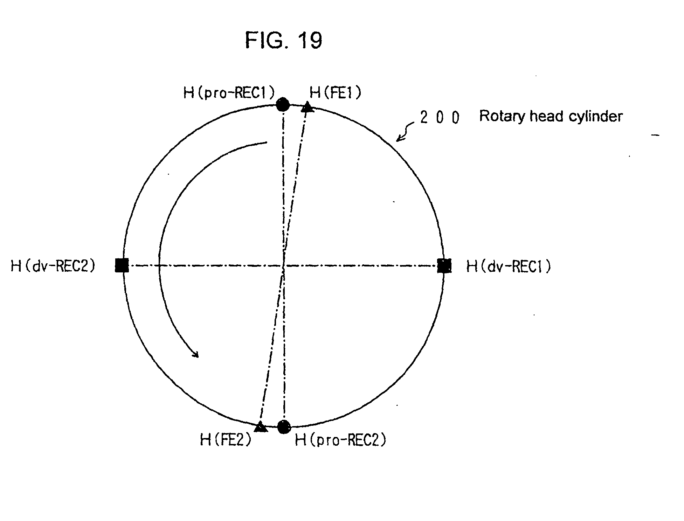

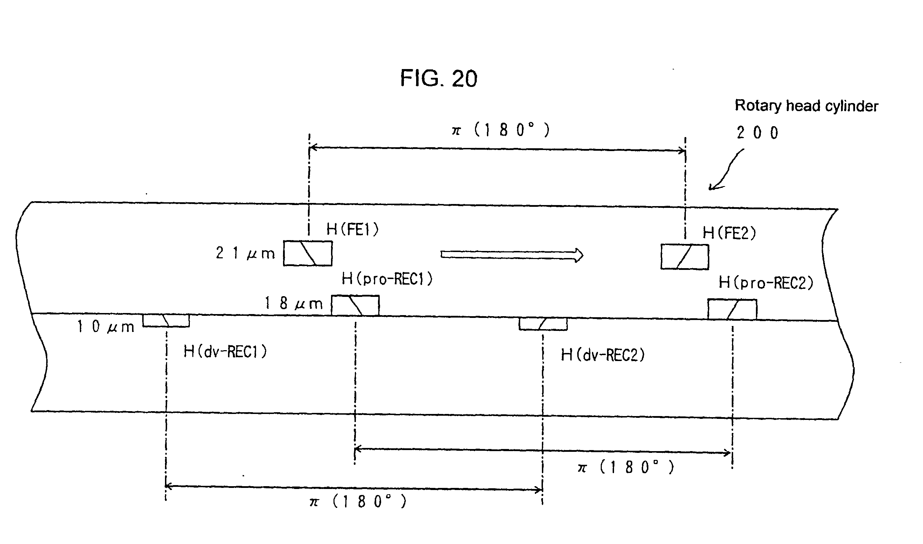

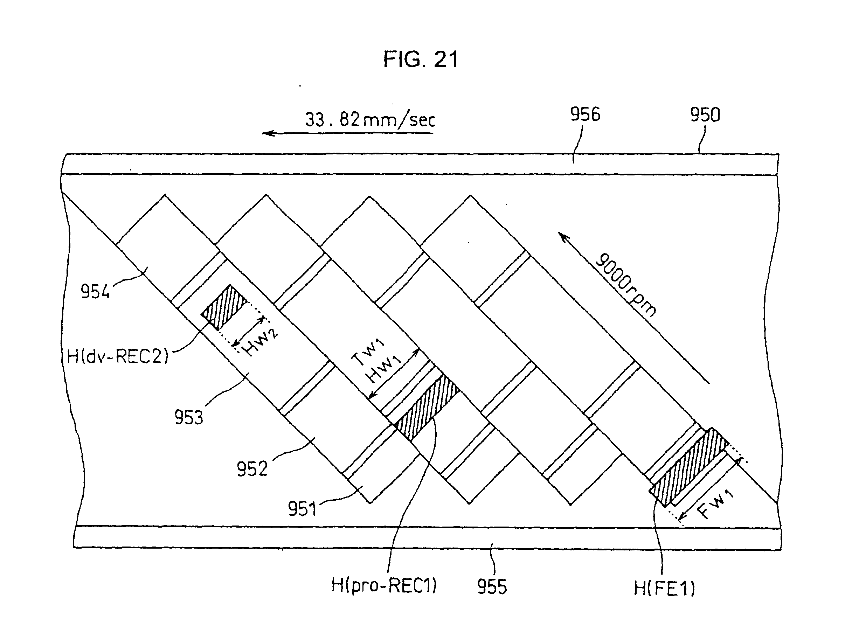

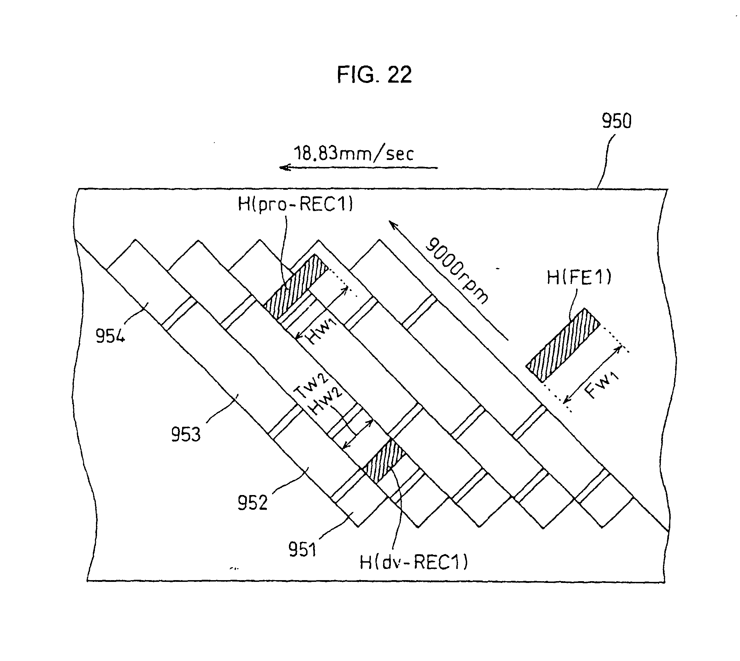

Fig. 16 is a block diagram showing an electric configuration of recording system 1000 of magnetic recording/reproducing apparatus of DVCPRO/DV compatible type in exemplary embodiment 2 of the invention, Fig. 17 is a block diagram of its reproducing system 2000, Fig. 18 is a block diagram of rotary head cylinder control system 8000, Fig. 19 is a structural diagram of rotary head cylinder newly proposed herein for DVCPRO/DC recording compatibility, Fig. 20 is a side development diagram of its rotary head cylinder, Fig. 21 is a track pattern diagram of DVCPRO format, and Fig. 22 is a track pattern diagram of DV format. The other configuration conforms to exemplary embodiment 1.

First, as the preliminary constituent element, "mounting of recording heads of plural types of head width suited to each one of plural different recording formats on the rotary cylinder" is explained by referring to Fig. 19.

Fig. 19 shows a head configuration of the rotary head cylinder 200 as seen from the axial center direction. As shown in Fig. 20, first and second recording heads of large head width H (pro REC1), H (pro REC2) conforming to DVCPRO format are mounted at a mutual interval of 180° on the upper cylinder which rotates on the rotary head cylinder 200, and first and second recording heads of small head width H (dv REC1), H (dv REC2) conforming to DV format are mounted at a mutual interval of 180 ° at positions deviated in phase by 90° from the both recording heads H (pro REC1), H (pro REC2) on the upper cylinder. Flying erase heads H (FE1), H (FE2) are described later.

In this explanation, as for the mounting phase deviation between the recording heads of large head width H (pro REC1), H (pro REC2) conforming to DVCPRO format and the recording heads of small head width H (dv REC1), H (dv REC2) conforming to DV format, 90° is only an example, and this phase deviation may be determined arbitrarily.

In Fig. 16 showing a block diagram of the recording system 1000 of the digital magnetic recording/reproducing apparatus of exemplary embodiment 2, as new constituent elements in this exemplary embodiment, reference numeral 27a is a first antinomic on/off changeover section, 28a is a second antinomic on/off changeover section, H (pro REC1), H (pro REC2) are first and second recording heads of large head width conforming to DVCPRO format explained in Fig. 19 and Fig. 20, and H (dv REC1), H (dv REC2) are first and second recording heads of small head width conforming to DV format.

A format recognizing section 800 is also added to the rotary head cylinder control system 8000 in Fig. 18.

The output destinations of the format recognition signal Sf are the first antinomic on/off changeover section 27a and second antinomic on/off changeover section 28a in the recording system 1000 in the block diagram of Fig. 16.

When the format recognition signal Sf is format recognition signal Sf (dvcpro) indicating the DVCPRO format recording mode, the first and second antinomic on/off changeover sections 27a, 28a connect the first and second recording amplifiers for DVCPRO 22p, 25p and the first and second recording heads of large head width H (pro REC1), H (pro REC2) in ON state, and shut off the connection of the first and second recording amplifiers for DV 822d, 825d and the first and second recording heads of small head width H (dv REC1), H (dv REC2) in OFF state. That is, the DVCPRO system is changed over in active state, and the DV system is changed over oppositely in inactive state simultaneously. This is reason why the operation is called antinomic.

In the DVCPRO format recording mode, as a result of antinomic changeover operation of the first and second antinomic on/off changeover sections 27a, 28a, the first and second recording heads of large head width H (pro REC1), H (pro REC2) are selected. Consequently, along with rotation of the rotary head cylinder 200 shown in Fig. 18, the first recording head of large head width H (pro REC1) and the second recording head of large head width H (pro REC2) trace the magnetic tape alternately, and by these two recording heads H (pro REC1), H (pro REC2), the recording data signals are directly recorded in the magnetic tape as digital data (see Fig. 21).

In this DVCPRO format recording mode, the tape speed is adjusted at 33.82 mm/sec conforming to the DVCPRO format in the capstan motor control system 3000 shown in Fig. 3. The phase of the rotary head cylinder 200 is based on the phase reference signal 207 conforming to the DVCPRO format in the rotary head cylinder control system 8000 shown in Fig. 18. (These points are described in detail below.)

When the format recognition signal Sf is format recognition signal Sf (dv) indicating the DV format recording mode, the first and second antinomic on/off changeover sections 27a, 28a connect the first and second recording amplifiers for DV 822d, 825d and the first and second recording heads of small head width H (dv REC1), H (dv REC2) in ON state, and shut off the connection of the first and second recording amplifiers for DVCPRO 22p, 25p and the first and second recording heads of large head width H (pro REC1), H (pro REC2) in OFF state. That is, the DV system is changed over in active state, and the DVCPRO system is changed over oppositely in inactive state simultaneously.

In the DV format recording mode, as a result of antinomic changeover operation of the first and second antinomic on/off changeover sections 27a, 28a, the first and second recording heads of small head width H (dv REC1), H (dv REC2) are selected, and along with rotation of the rotary head cylinder 200 shown in Fig. 19, the first recording head of small head width H (dv REC1) and the second recording head of small head width H (dv REC2) trace the magnetic tape alternately, and by these two recording heads H (dv REC1), H (dv REC2), the recording data signals are directly recorded in the magnetic tape as digital data (see Fig. 22).

In this DV format recording mode, the tape speed is adjusted at 18.83 mm/sec conforming to the DV format in the capstan motor control system 3000 shown in Fig. 3. The phase of the rotary head cylinder 200 is based on the phase reference signal 207a after 90° phase shift conforming to the DV format in the rotary head cylinder control system 8000 shown in Fig. 18. (These points are described in detail below.)

Thus, when the format recognizing section 800 indicates the DVCPRO format recording mode, by the antinomic changeover operation of the first and second antinomic on/off changeover sections 27a, 28a, it is intended to select the equalizing characteristic conforming to the DVCPRO format recording and its magnetic tape of MP tape (metal-plated tape), and the corresponding recording equalizers 21p, 24p for controlling the recording current, recording amplifiers 22p, 25p, and current control sections 23p, 26p, and the recording data signals in the state suited to the DVCPRO format recording are supplied to the recording heads of large head width conforming to the DVCPRO format H (pro REC1), H (pro REC2) selected by this antinomic changeover operation.

Also, when the format recognition signal Sf is format recognition signal Sf(dv) indicating the DV format recording mode, by the antinomic changeover operation of the first and second antinomic on/off changeover sections 27a, 28a, it is intended to select the equalizing characteristic conforming to the DV format recording and its magnetic tape of ME tape (metal-evaporated tape), and the corresponding recording equalizers 821d, 824d for controlling the recording current, recording amplifiers 822d, 825d, and current control sections 823d, 826d, and the recording data signals in the state suited to the DV format recording are supplied to the recording heads of small head width conforming to the DV format H (dv REC1), H (dv REC2) selected by this antinomic changeover operation.

In Fig. 17 showing an electric configuration of the reproducing system 2000, in the first head amplifier 41, the first recording head of large head width conforming to DVCPRO format H (pro REC1) and the first recording head of small head width conforming to DV format H (dv REC1) are connected through the first changeover section 57. Similarly, in the second head amplifier 42, the second recording head of large head width conforming to DVCPRO format H (pro REC2) and the second recording head of small head width conforming to DV format H (dv REC2) are connected through the second changeover section 58. When the format recognition signal Sf from the format recognizing section 800 is format recognition signal Sf (dvcpro), the first and second changeover sections 57, 58 select the recording heads of large head width H (pro REC1), H (pro REC2), and in the case of format recognition signal Sf (dv), the first and second changeover sections 57, 58 select the recording heads of small head width H (dv REC1), H (dv REC2).

Fig. 18 is a block diagram showing an electric configuration of rotary head cylinder control system 8000. In Fig. 18, reference numeral 200 is a rotary head cylinder, 201 is an FG amplifier, 202 is an FG detector, 203 is a target value counter, 204 is an FG error amplifier, 205 is a PG amplifier, 206 is a PG detector, 207 is a phase reference signal corresponding to the DVCPRO format, 208 is a PG error amplifier, 209 is an adder, and 210 is a cylinder driver, and these constituent elements are same as in the prior art (Fig. 37). As new constituent elements in exemplary embodiment 2, reference numeral 901 is a phase shift section, and 902 is a phase reference selecting section. Reference numeral 800 is a format recognizing section.

Four FG (frequency generator) pulses are delivered per revolution from the rotary head cylinder 200. This cylinder FG pulses are supplied and amplified in the FG amplifier 201, and supplied into the FG detector 202. Its output (600 Hz) is supplied to the FG error amplifier 204, and the difference from the target value given from the target value counter 203 is calculated.

On the other hand, one PG (pulse generator) pulse is delivered per revolution from the rotary head cylinder 200. This cylinder PG pulse is supplied and amplified in the PG amplifier 205, and is supplied to the PG detector 206. Its output (150 Hz) is supplied to the PG error amplifier 208.

Summing up the outputs from the FG error amplifier 204 and PG error amplifier 208, the sum is supplied to the cylinder driver 210, and the cylinder 200 is controlled.

In recording in the DVCPRO format recording mode, the recording heads of large head width H (pro REC1), H (pro REC2) are used, and in recording in the DV format recording mode, the recording heads of small head width H (dv REC1), H (dv REC2) are used. Since the recording heads of large head width H (pro REC1), H (pro REC2) and the recording heads of small head width H (dv REC1), H (dv REC2) are mutually different in the mounting positions on the rotary head cylinder 200, and the phase shift section 901 is needed in order to shift the phase reference signal 207 by the portion of the phase corresponding to the difference in the mounting positions. In exemplary embodiment 2, since the mounting positions of the recording heads of both formats are deviated by 90°, the phase sift section 901 creates a phase reference signal 207a conforming to DV format by delaying the phase reference signal 207 conforming to the DVCPRO format by 90°. The phase reference selecting section 902 applies the phase reference signal 207 or phase reference signal 207a to the PG error amplifier 208 in accordance with the format recognition signal Sf (dvcpro) or Sf (dv) from the format recognizing section 800.

The error signal from the PG error amplifier 208 amplified according to the phase reference signal 207 or phase reference signal 207a thus adjusted in phase is issued to the adder 209. In the adder 209, the deviation in rotating speed and deviation in phase of the rotary head cylinder 200 are summed up. As a result, the total error component is supplied to the cylinder driver 210 as control signal, and the cylinder driver 210 drives the rotary head cylinder 200 on the basis of this control signal.

In this manner, when the format recognizing section 800 indicates the DVCPRO format recording mode, the rotary head cylinder 200 is driven in the rotation phase suited to DVCPRO format recording, and when indicating the DV format recording mode, the rotary head cylinder 200 is driven in the rotation phase suited to DV format recording. According to servo control, the rotating speed of the rotary head cylinder 200 is 9000 rpm in both formats.

The rotary head cylinder control system 8000 is more specifically described below. By the format recognition signal Sf (dv) from the format recognizing section 800, the phase reference selecting section 902 selects the phase reference signal 207a after phase shift from the phase shift section 901. This phase reference signal 207a after phase shift is produced by feeding the phase reference signal 207 conforming to DVCPRO format and delaying by 90° by the phase shift section 901. By reference to the first recording head H (pro REC1) for recording in the DVCPRO format recording mode, the first recording head H (dv REC1) for recording in the DV format recording mode is installed at a position delayed by 90° to the upper side in the rotating direction of the rotary head cylinder 200. The relation is also the same between the second recording head H (pro REC2) for recording in the DVCPRO format recording mode and the second recording head H (dv REC2) for recording in the DV format recording mode, and the latter is at a position delayed by 90° to the upper side in the rotating direction. Therefore, in the DV format recording mode, by the format recognition signal Sf (dv), the phase reference selecting section 902 selects the phase reference signal 207a after phase shift corresponding to the DV format from the phase shift section 901, instead of the phase reference signal 207 conforming to the DVCPRO format, and supplies to the PG error amplifier 208, so that the rotation phase of the rotary head cylinder 200 is controlled in a state matched with the delay of 90° of the mounting position.

Fig. 19 shows a head configuration of the rotary head cylinder 200 as seen from the axial center direction. This has been already explained, and is further explained below, that is, the first and second recording heads of large head width H (pro REC1), H (pro REC2) conforming to DVCPRO format are mounted at a mutual interval of 180° on the upper cylinder of the rotary head cylinder 200, and the first and second recording heads of small head width H (dv REC1), H (dv REC2) conforming to DV format are mounted at a mutual interval of 180° at positions deviated in phase by 90° from the both recording heads H (pro REC1), H (pro REC2) on the upper cylinder. On the upper cylinder, the first and second flying erase heads H (FE1), H (FE2) are mounted closely to the upper side in the rotting direction of the first and second recording heads of large head width H (pro REC1), H (pro REC2).

Fig. 20 shows a head configuration of the rotary head cylinder 200 in a state developed in the peripheral direction. The first flying erase head H (FE1) is disposed at the upper side in the axial center direction with respect to the first recording head of large head width H (pro REC1), and as shown in the track pattern in Fig. 21, the first flying erase head H (FE1) is in a state of two tracks ahead of the first recording head of large head width H (pro REC1).

The first recording head of small head width H (dv REC1) is disposed at the lower side in the axial center direction of the rotary head cylinder 200 with respect to the first recording head of large head width H (pro REC1). The first recording head of small head width H (dv REC1) is delayed by 90° from the first recording head of large head width H (pro REC1).

The diameter of the rotary head cylinder 200 is 21.7 mm,, and its rotating speed is 9000 rpm in both DVCPRO format recording mode and DV format recording mode.

Fig. 21 shows tape patterns of DVCPRO format. These are explained below. At the time of insert editing, by reproducing the ITI sector 951 by the first and second recording heads of large head width H (pro REC1), H (pro REC2), or the first and second recording heads of small head width H (dv REC1), H (dv REC2), accurate tracking and accurate insert position control in the track longitudinal direction are realized.

By the first and second recording heads of large head width H (pro REC1), H (pro REC2) conforming to DVCPRO format, the magnetic tape 950 is traced alternately, and the recording data signals are recorded in the magnetic tape directly in digital state. The adjacent tracks contact with each other in a state free from guard band.

Fig. 22 shows tape patterns in DV format recording mode. In DV format, the region corresponding to the control track 955 and the region corresponding to the cue track 956 in DVCPRO format are vacant regions as optional tracks. The adjacent tracks contact with each other in a state free from guard band.

In the rotary head cylinder 200 shown in Fig. 19 and Fig. 20, the head width of the first and second recording heads of large head width H (pro REC1), H (pro REC2) is 18 μm. The head width of the first and second recording heads of small head width H (dv REC1), H (dv REC2) is 10 µm. The head width of the first and second flying erase heads H (FE1), H (FE2) is 21 µm.

In the tape pattern in the DVCPRO format recording mode in Fig. 21, the track width in the recording pattern formed by the first and second recording heads of large head width H (pro REC1), H (pro REC2) conforming to DVCPRO format is wide, that is, 18 µm. In this recording mode, the recording heads of small head width H (dv REC1), H (dv REC2) are inactive.

In the tape pattern in the DV format recording mode in Fig. 22, the track width in the recording pattern formed by the first and second recording heads of small head width H (dv REC1), H (dv REC2), conforming to DV format is narrow, that is, 10 µm. In this recording mode, the recording heads of large head width H (pro REC1), H (pro REC2) and flying erase heads H (FE1), H (FE2) are inactive.

In this digital magnetic recording/reproducing apparatus, in the DVCPRO format recording mode, as shown in Fig. 21, by recording in a state free from guard band by the first and second recording heads of head width of 18 µm H (pro REC1), H (pro REC2) conforming to DVCPRO format, recording is done at track width of 18 µm and track pitch of 18 µm conforming to DVCPRO format.

The tape speed at this time is 33.82 mm/sec conforming to DVCPRO format. That is, by the format recognition signal Sf (dvcpro) specifying the DVCPRO format recording mode from the format recognizing section 800, the tape speed is determined in the capstan motor control system 3000 on the basis of setting of target value conforming to DVCPRO format corresponding to the internal target value counter 73 by the target value counter control section 831 and setting of gain conforming to DVCPRO format corresponding to the ATF error amplifier 76 by the error amplifier gain control section 832.

In this DVCPRO format recording mode, simultaneously, in the rotary head cylinder control system 8000 shown in Fig. 18, by the format recognition signal Sf (dvcpro) from the format recognizing section 800, the phase reference selecting section 902 selects the direct phase reference signal 207 conforming to DVCPRO format, and supplies to the PG error amplifier 208, so that the rotation phase of the rotary head cylinder 200 can be controlled in a state suited to DVCPRO format.

In the DV format recording mode, as shown in Fig. 22, by recording in a state free from guard band by the first and second recording heads of head width of 10 µm H (dv REC1), H (dv REC2) conforming to DV format, recording is done at track width of 10 µm and track pitch of 10 µm conforming to DV format.

The tape speed at this time is 18.83 mm/sec conforming to DV format. That is, by the format recognition signal Sf (dv) specifying the DV format recording mode from the format recognizing section 800, the tape speed is determined in the capstan motor control system 3000 on the basis of setting of target value conforming to DV format corresponding to the internal target value counter 73 by the target value counter control section 831 and setting of gain conforming to DV format corresponding to the ATF error amplifier 76 by the error amplifier gain control section 832.

In this DV format recording mode, simultaneously, in the rotary head cylinder control system 8000 shown in Fig. 18, by the format recognition signal Sf (dv) from the format recognizing section 800, the phase reference selecting section 902 selects the phase reference signal 207a after phase shift of 90° from the phase shift section 901. This phase reference signal 207a after phase shift of 90° is produced by feeding the phase reference signal 207 conforming to DVCPRO format and delaying by 90° by the phase shift section 901. That is, by reference to the first recording head H (pro REC1) for recording in the DVCPRO format recording mode, the first recording head H (dv REC1) for recording in the DV format recording mode is installed at a position delayed by 90° to the upper side in the rotating direction of the rotary head cylinder 200. The relation is also the same between the second recording head H (pro REC2) for recording in the DVCPRO format recording mode and the second recording head H (dv REC2) for recording in the DV format recording mode, and the latter is at a position delayed by 90° to the upper side in the rotating direction. Therefore, in the DV format recording mode, by the format recognition signal Sf (dv), the phase reference selecting section 902 selects the phase reference signal 207a after phase shift corresponding to the DV format from the phase shift section 901, instead of the phase reference signal 207 conforming to the DVCPRO format, and supplies to the PG error amplifier 208, so that the rotation phase of the rotary head cylinder 200 is controlled in a state matched with the delay of 90° of the mounting position of the recording head. In this case, as mentioned above, the equalizing characteristic adjustment, tape tension adjustment, flying erase stop, control signal stop, and cue recording stop are executed at the same time.

The reproducing operation is explained below.

(1) Magnetic tape of DVCPRO format

In this mode, in the reproducing system 2000 shown in Fig. 17, the format recognizing section 800 gives a format recognition signal Sf (dvcpro) indicating DVCPRO format recording mode to the equalizing characteristic selecting section 47. As a result, a reproducing equalizer for DVCPRO 45p is selected.

The capstan motor control system 3000, reel control system 4000, flying erase control system 5000, control head control system 6000, cue control system 7000, and rotary head cylinder control system 8000 are controlled in a state conforming to DVCPRO format.

This mode (1) is divided into (1-1) and (1-2).

(1-1) Using recording heads of large head width H (pro REC1), H (pro REC2) as reproducing heads

In the reproducing system 2000 shown in Fig. 17, a wider head selection signal $S_1$ is given to the first and second changeover sections 57, 58 as reproducing head selection signal S. As a result, the first recording head of large head width H (pro REC1) is connected to the first head amplifier 41 through the first changeover section 57, and the second recording head of large head width H (pro REC2) is connected to the second head amplifier 42 through the second changeover section 58.

The recording heads of large head width H (pro REC1), H (pro REC2) shown in Fig. 21 trace on the recording track as reproducing heads, and reproduce the recorded signal. The reproduced signal is, in the reproducing system 2000 in Fig. 17, issued to the D/A converter 56 from the recording heads of large head width H (pro REC1), H (pro REC2) as the reproducing heads, by way of the first and second head amplifiers 41, 42, reproducing amplifier 43, AGC section 44, reproducing equalizer for DVCPRO 45p, and video signal processing section 60.

(1-2) Using recording heads of small head width H (dv REC1), H (dv REC2) as reproducing heads

In the reproducing system 2000 shown in Fig. 17, a narrower head selection signal $S_2$ is given to the first and second changeover sections 57, 58 as reproducing head selection signal S. As a result, the first recording head of small head width H (dv REC1) is connected to the first head amplifier 41 through the first changeover section 57, and the second recording head of small head width H (dv REC2) is connected to the second head amplifier 42 through the second changeover section 58.

The recording heads of small head width H (dv REC1), H (dv REC2) shown in Fig. 22 trace on the recording track as reproducing heads, and reproduce the recorded signal. The reproduced signal is, in the reproducing system 2000 in Fig. 17, issued to the D/A converter 56 from the recording heads of small head width H (dv REC1), H (dv REC2) as the reproducing heads in the same route as in (1-1).

(2) Magnetic tape of DV format

In this mode, in the reproducing system 2000 shown in Fig. 17, the format recognizing section 800 gives a format recognition signal Sf (dv) indicating DV format recording mode to the equalizing characteristic selecting section 47. As a result, a reproducing equalizer for DV 46d is selected.

The capstan motor control system 3000, reel control system 4000, flying erase control system 5000, control head control system 6000, cue control system 7000, and rotary head cylinder control system 8000 are controlled in a state conforming to DV format.

This mode (2) is divided into (2-1) and (2-2).

(2-1) Using recording heads of large head width H (pro REC1), H (pro REC2) as reproducing heads

In this case, same as in (1-1), a wider head selection signal $S_1$ is given as reproducing head selection signal S, and the operation is same as mentioned above. The recording heads of large head width of 18 μm H (pro REC1), H (pro REC2) project to both outer sides of the recording track of track width of 10 μm in a state free from guard band, but since the azimuth angles are opposite in polarity between adjacent tracks, so that crosstalk does not take place.

(2-2) Using recording heads of small head width H (dv REC1), H (dv REC2) as reproducing heads

In this case, same as in (1-2), a narrower head selection signal $S_2$ is given as reproducing head selection signal S, and the operation is same as mentioned above.

Thus, in exemplary embodiment 2, it is applicable to both DV and DVCPRO formats by one signal processing circuit common to both recording formats and a minor modification.

As the reproducing heads, only the recording heads of large head width H (pro REC1), H (pro REC2) may be used. That is, without using the first and second changeover sections 57, 58, the first recording head of large head width H (pro REC1) may be directly connected to the first head amplifier 41, and the second recording head of large head width H (pro REC2) may be directly connected to the second head amplifier 42.

To the contrary, as the reproducing heads, only the recording heads of small head width H (dv REC1), H (dv REC2) may be used. That is, without using the first and second changeover sections 57, 58, the first recording head of small head width H (dv REC1) may be directly connected to the first head amplifier 41, and the second recording head of small head width H (dv REC2) may be directly connected to the second head amplifier 42.

(Exemplary Embodiment 3)

In exemplary embodiment 3, in the DVCPRO format recording mode, while recording by using the recording heads of large head width H (pro REC1), H (pro REC2), at the same time, the recording heads of small head width H (dv REC1), H (dv REC2) are used as reproducing heads, and recording and reproduction can be preformed at the same time. Such recording and reproducing simultaneous operation is called recording-reproducing parallel mode.

In exemplary embodiment 3, the configuration of the digital magnetic recording/reproducing apparatus is same as in exemplary embodiment 2. Therefore, the configuration in Fig. 16 to Fig. 22 is directly applied herein.

In the recording-reproducing parallel mode, in the reproducing system 2000 shown in Fig. 17, a recording-reproducing parallel mode signal $S_3$ is given to the first and second changeover sections 57, 58. As a result, the first recording head of small head width H (dv REC1) is connected to the first head amplifier 41 through the first changeover section 57, and the second recording head of small head width H (dv REC2) is connected to the second head amplifier 42 through the second changeover section 58. At this time, the format recognizing section 800 gives the format recognition signal Sf (dvcpro) indicating DVCPRO format recording mode to the capstan motor control system 3000, reel control system 4000, flying erase control system 5000, control head control system 6000, cue

control system 7000, and rotary head cylinder control system 8000. Further, the format recognition signal Sf (dvcpro) is also given to the equalizing characteristic selecting section 47 in the reproducing system 2000.

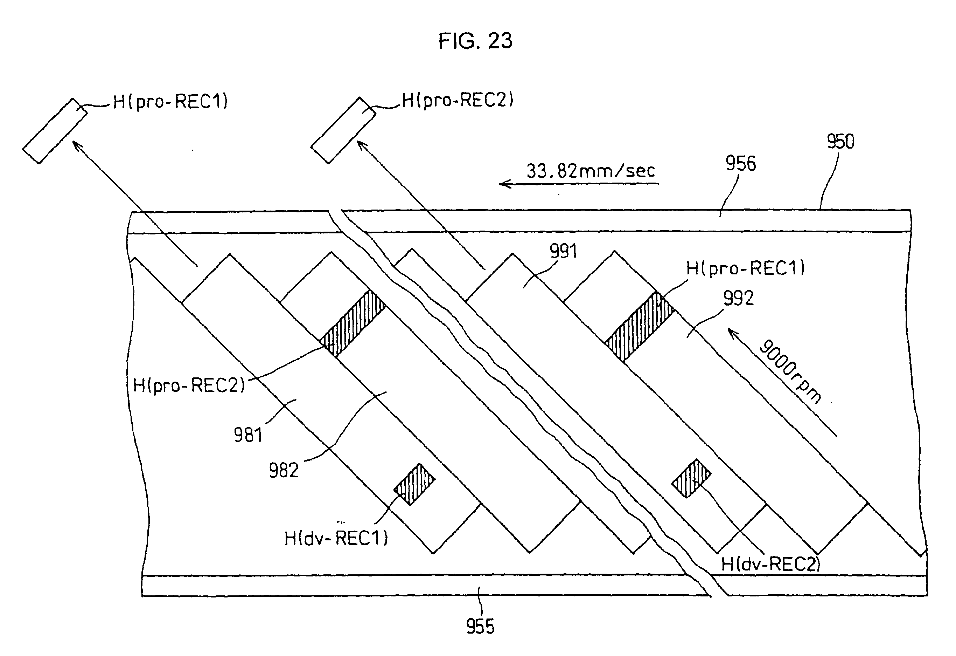

The operation is explained by referring to Fig. 23.

A recording track 981 formed as being traced by the first recording head of large head width H (pro REC1) is traced by the second recording head of small head width H (dv REC2) right after this recording, and the recorded signal in the recording track 981 immediately after recording is reproduced. In a next recording track 982 adjacent to this recording track 981 in a guide rail state, the recording state is formed by the second recording head of large head width H (pro REC2).

Similarly, a recording track 991 formed as being traced by the second recording head of large head width H (pro REC2) is traced by the first recording head of small head width H (dv REC2) right after this recording, and the recorded signal in the recording track 991 immediately after recording is reproduced. In a next recording track 992 adjacent to this recording track 991 in a guide rail state, the recording state is formed by the first recording head of large head width H (pro REC1).

In Fig. 23, the recording heads are supposed to be mounted on the rotary head cylinder 200 to satisfy the conditions in which the center of the first recording head of small head width H (dv REC1) which traces the adjacent recording track 981 while the second recording head of large head width H (pro REC2) is tracing the recording track 982 may coincide with the center of the recording track 981, and the center of the second recording head of small head width H (dv REC2) which traces the adjacent recording track 991 while the first recording head of large head width H (pro REC1) is tracing the recording track 992 may coincide with the center of the recording track 991.

Thus, according to exemplary embodiment 3, in the cylinder applicable to DV and DVCPRO, simultaneous reproducing function is realized without having simultaneous reproducing head exclusive for DVCPRO.

(Exemplary Embodiment 4)

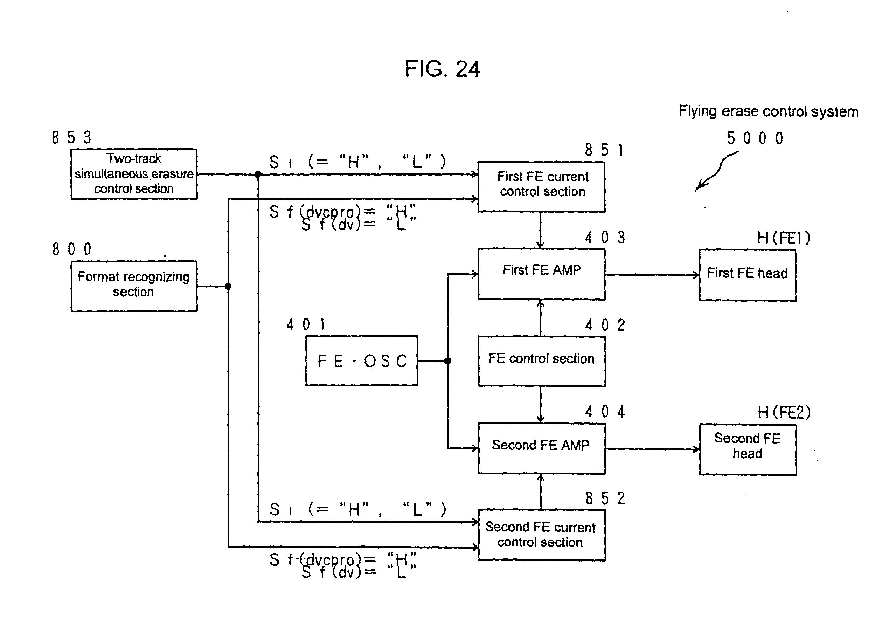

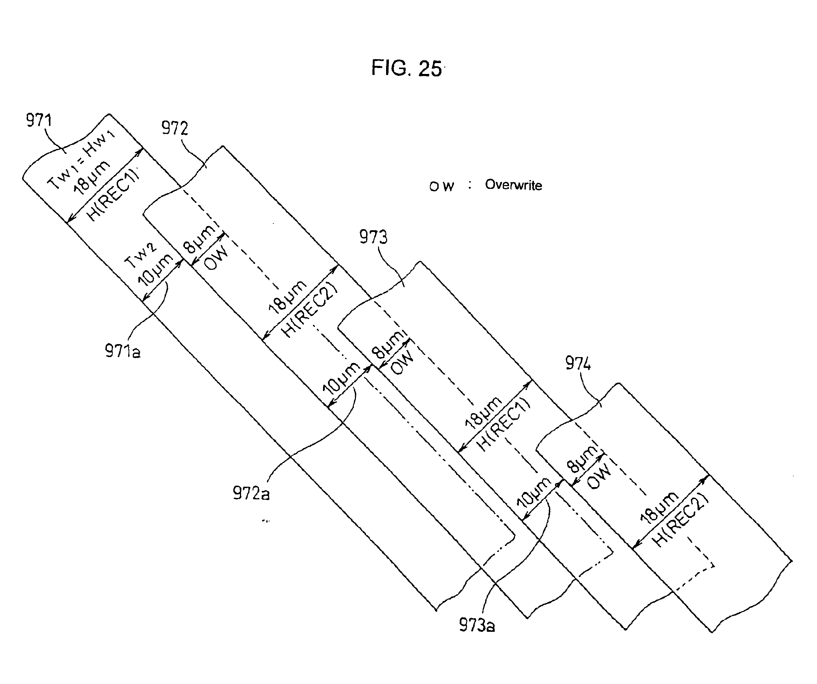

Fig. 24 is a block diagram of flying erase control system of DVCPRO/DV compatible magnetic recording/reproducing apparatus in exemplary embodiment 4, and Fig. 25 is an explanatory diagram of overwriting.

In Fig. 24 showing an electric configuration of the flying erase control system 5000, reference numeral 401 is an flying erase oscillator, 402 is a flying erase control section, 403 is a first flying erase amplifier, 404 is a second flying erase amplifier, H (FE1) is a first flying erase head, and H (FE2) is a second flying erase head, and these constituent elements are same as in the prior art (Fig. 34). As new constituent elements in exemplary embodiment 4, reference numeral 853 is a two-track simultaneous erasure control section, and Si is a simultaneous erasure control signal. Reference numeral 800 is a format recognizing section.

First and second flying erase current control sections 851, 852 are composed to give priority to format recognition signal Sf when the simultaneous erasure control signal Si is L, to be active when the format recognition signal Sf is Sf (dvcpro) = H, and to be inactive when the format recognition signal Sf is Sf (dv) = L. The first FE current control section 851 is designed to give priority to simultaneous erasure control signal Si when it is H, and to be active whether the format recognition signal Sf is H or L. The second FE current control section 852 is designed to give priority to simultaneous erasure control signal Si when it is H, and to be inactive whether the format recognition signal Sf is H or L. That is, when the two-track simultaneous erasure mode is selected, only the first FE current control section 851 is made active, and the erase signal current is supplied only to the first flying erase head H (FE1).

In DVCPRO format recording, MP tape (metal-plated tape) is used as magnetic tape. A pilot signal for ATF (automatic track finding) as the basis of tracking servo is recorded in the tape at a relatively low frequency, but when the frequency is low, the recording layer tends to be deeper. In the case of MP tape, basically, the coercive force is large, and the tendency of deep layer recording is stronger. Therefore, to erase the pilot signal already recorded in the magnetic tape securely prior to next recording, flying erase is required, and erase signals of relatively strong power and relatively high frequency must be supplied to these flying erase heads H (FE1), H (FE2).

By contrast, in the case of DV format recording, ME tape is generally used as magnetic tape. Since the coercive force of ME tape is relatively low, deep layer recording occurs less frequently than in MP tape, and by only simple overwriting, new recording is possible while erasing the already recorded pilot signal. Therefore, in DV format, generally, flying erase is not required.

However, by flying erase, the erasure rate is improved, and digital recording of higher quality is realized. Accordingly, the digital magnetic recording/reproducing apparatus has two modes of performing flying erase and not performing flying erase in the DV format recording mode.

(1) Combination of L and H

While the simultaneous erasure control signal Si is fixed at L, when the format recognizing section 800 issues a format recognition signal Sf (dvcpro) = H indicating the DVCPRO format recording mode, same as in the prior art, the first and second FE current control sections 851, 852 make active the corresponding first and second flying erase amplifiers 403, 404.

In this case, the high frequency oscillation signal from the flying erase oscillator 401 is supplied into the first and second flying erase amplifiers 403, 404, and while appropriately controlling these amplifiers by the flying erase control section 402, an erasing high frequency current (erase signal) is supplied into the first and second flying erase heads H (FE1), H (FE2).

(2) Combination of L and L

While the simultaneous erasure control signal Si is fixed at L, when the format recognizing section 800 issues a format recognition signal Sf (dv) = L indicating the DV format recording mode, the first and second FE current control sections 851, 852 make inactive the corresponding first and second flying erase amplifiers 403, 404. As a result, erasing signal current of relatively high frequency is not supplied to the first and second flying erase heads H (FE1), H (FE2). Hence, useless power consumption can be avoided.

(3) Combination of H and H, or H and L

When the simultaneous erasure control signal Si is inverted to H, regardless of whether the format recognition signal Sf is Sf (dvcpro) = H or Sf (dv) = L, priority is given to H of this simultaneous erasure control signal Si. That is, in the first FE current control section 851, the corresponding first flying erase amplifier 403 is made active. In the second FE current control section 852, the corresponding second flying erase amplifier 404 is made inactive. As a result, the high frequency oscillation signal from the flying erase oscillator 401 is supplied only to the first flying erase amplifier 403, and while controlling this amplifier appropriately in the flying erase control section 402, an erasing high frequency current (erase signal) is supplied only into the first flying erase head H (FE1). Erase signal current is not supplied in the second flying erase head H (FE2).

Instead of cutting off the current supply to the flying erase heads H (FE1), H (FE2) by stopping the flying erase amplifiers 403, 404, by inserting a switch in any position in the current passage and turning on or off this switch, the flying erase may be turned on or off, and the two-track simultaneous erasure may be turned on or off in DVCPRO format recording or DV format recording.

Incidentally, the relation of H and L about the format recognition signal Sf, and the relation of H and L about the simultaneous erasure control signal Si, and their combination are presented only as examples for reference, and it must be understood that the invention is not limited whatsoever by these relations.

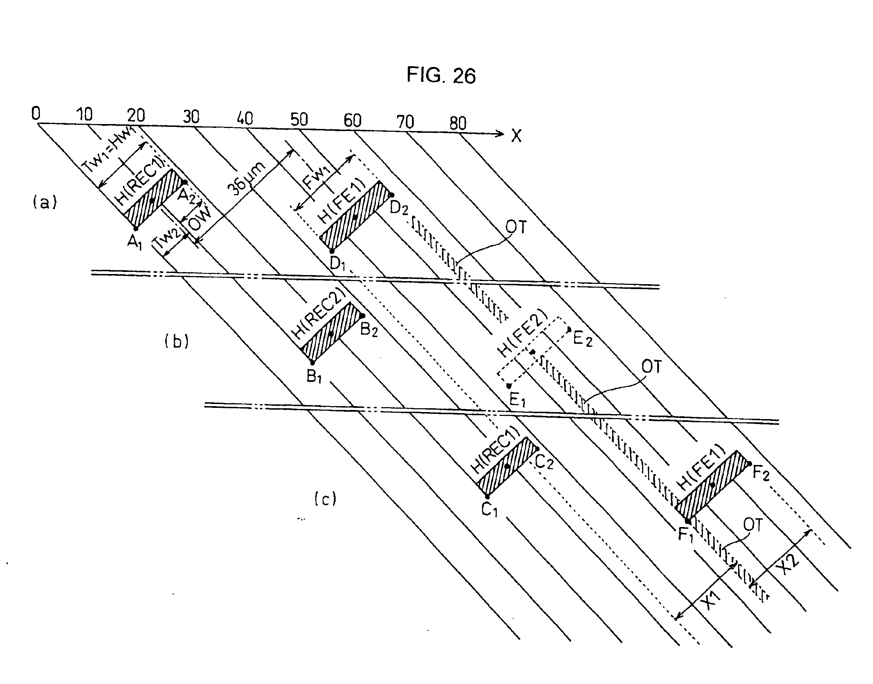

Thus, also in the case of DV format recording, by flying erase, lower frequency component can be erased securely, and the erasure rate can be improved. In this case, two tracks are erased simultaneously. This point is explained by referring to Fig. 26.

In the diagram, X is the coordinate given to the recording track. Fig. 26 (a) shows the positional relation of the first recording head H (REC1) and first flying erase head H (FE1) in a certain rotation phase. The end portion $A_1$ of the first recording head H (REC1) at this time is reference 0 of coordinates. The center of the first flying erase head H (FE1) is remote from the center of the first recording head H (REC1) by the portion of two tracks, that is, 18 μm x 2 = 36 μm. Therefore, the center coordinate of the first flying erase head H (FE1) is 45 μm by adding 1/2 of the head width 18 μm of the first recording head H (REC1) to 36 μm. Since the head width of the first flying erase head H (FE1) is 21 μm, the coordinate of end portion D1 of the first flying erase head H (FE1) is 45 - 21/2 = 34.5 μm, and the coordinate of end portion $D_2$ is 45 + 21/2 = 55.5 μm.

In the state shown in Fig. 26 (a), by performing prior flying erase by the first flying erase head H (FE1), then recording is done by using the first recording head H (REC1).

Fig. 26 (b) shows the positional relation of the second recording head H (REC2) and second flying erase head H (FE2) in a state of the rotary head cylinder 200 rotated a half revolution ahead from the state in Fig. 26 (a). In this state, overwriting is recorded by the second recording head H (REC2). The coordinate of end portion $B_1$ of the second recording head H (REC2) is 10 μm. In this case, the second flying erase head H (FE2) does not perform flying erase. Herein, the second flying erase head H (FE2) is indicated by broken line. The coordinate of end portion $E_1$ of the second flying erase head H (FE2) is 44.5 μm, and the coordinate of end portion $E_2$ is 65.5 μm.

Fig. 26 (c) shows the positional relation of the first recording head H (REC1) and first flying erase head H (FE1) in a state of the rotary head cylinder 200 rotated another half revolution ahead from the state in Fig. 26 (b) . In this state, the coordinate of end portion $C_1$ of the first recording head H (REC1) is 20 μm. The coordinate of end portion F1 of the first flying erase head H (FE1) is 54.5 μm, and the coordinate of end portion F2 is 75.5 μm. In this state, first performing flying erase by the first flying erase head H (FE1), then recording is done by the first recording head H (REC1).

Since the coordinate of the end portion D2 of the first flying erase head H (FE1) in Fig. 26 (a) is 55.5 µm and the coordinate of the end portion F1 of the first flying erase head H (FE1) in Fig. 26 (c) is 54.5 µm, the tracing marks in these two states are in overtracing state (OT) by the portion of 1.0 _m. That is, trace region X1 of the first flying erase head H (FE1) is overlapped by trace region X2 of the first flying erase head H (FE1) after one revolution. Therefore, if the second flying erase head H (FE2) is made inactive in flying erase, by two-track simultaneous erasure by the first flying erase head H (FE1) only, flying erase can be executed in all regions to be traced by the subsequent first recording head H (REC1) and second recording head H (REC2).

As the flying erase is inactive in the second flying erase head H (FE2), the power consumption required for flying erase can be reduced to half of the case of the prior art.

In exemplary embodiment 4 for overwriting, the required condition for two-track simultaneous erasure is more specifically explained. The following relations are established among track width $Tw_1$ in DVC-PRO format, head width $Hw_1$ of recording head H (REC1) corresponding to the DVCPRO format, track width $Tw_2$ in DV format, head width $Fw_1$ of flying erase head H (FE1) corresponding to the DVCPRO format, and trace width Ow of overwriting:

$$Fw_1 \geq Hw_1 = Tw_1 > Tw_2$$

$$Fw_1 \geq Tw_2 \times 2$$

$$Ow = Hw_1 - Tw_2$$

In the case of the DVCPRO format, however, the actual relation is $Fw_1 > Tw_2 \times 2$.

In the explanation avobe, the first flying erase head H (FE1) is used for executing of flying erase of two-track simultaneous erasure, but two tracks may be simultaneously erased by the second flying erase head H (FE2). This is realized by inverting the functions of the first FE current control section 851 and second FE current control section 852 about the combination input of format recognition signals Sf (dvcpro), Sf (dv) and simultaneous erasure control signal Si.

(Exemplary Embodiment 5)

Exemplary embodiment 5 is designed to change over the flying erase heads alternately for erasing two tracks simultaneously.

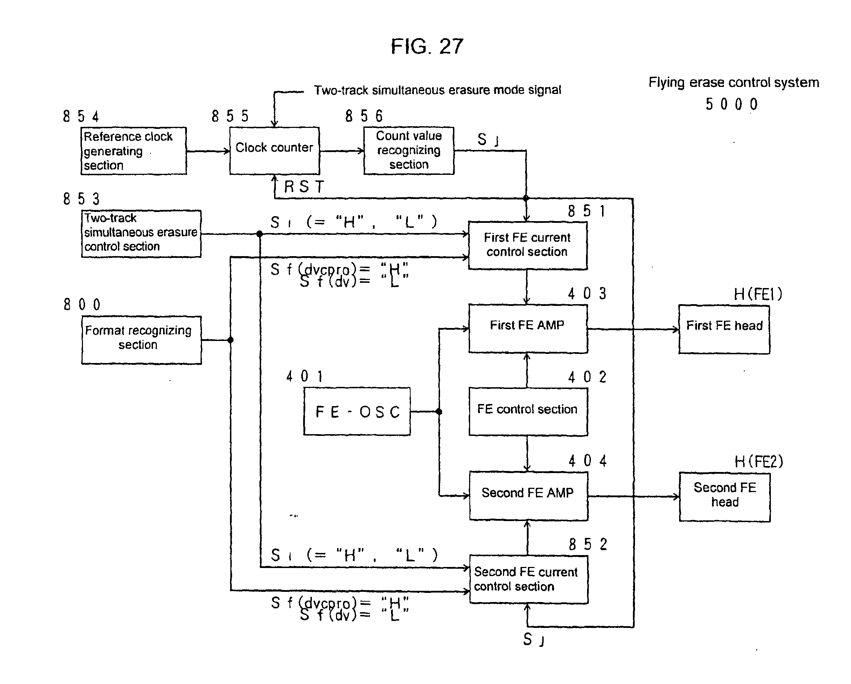

Fig. 27 is a block diagram showing a configuration of flying erase control system 5000 in exemplary embodiment 5. The other configuration is same as in exemplary embodiment 4.

In Fig. 27, reference numeral 854 is a reference clock generator, 855 is a clock counter, and 856 is a count value recognizing section. The clock counter 855 counts clocks from the reference clock generator 854 while receiving two-track simultaneous erasure mode signal. The count value recognizing section 856 inverts the state inversion control signal Sj to be given to the first and second FE current control sections 851, 852 when the count value of the clock counter 855 reaches a specified value. The clock counter 855 is cleared to zero on the basis of inversion of the state inversion control signal Sj.

The first FE current control section 851 is designed to be active, same as in exemplary embodiment 4, when the state inversion control signal Sj from the count value recognizing section 856 is H, and inactive when the state inversion control signal Sj is inverted to be L. The second FE current control section 852 is designed to be inactive, same as in exemplary embodiment 4, when the state inversion control signal Sj from the count value recognizing section 856 is H, and active when the state inversion control signal Sj is inverted to be L. That is, every time the clock counter 855 counts up, the two FE current control sections 851, 852 become active in one side and inactive in other side, alternately and cyclically.

According to exemplary embodiment 5 thus configured, every time the cumulative time of operation of two-track simultaneous erasure reaches a specified time, the flying erase head for executing flying erase is changed over between the first flying erase head H (FE1) and second flying erase head H (FE2) alternately. By this changing over the flying erase heads alternately, the degree of progress of wear of the two flying erase heads H (FE1), H (FE2) can be made uniform, and the service life can be extended.

(Exemplary Embodiment 6)

Exemplary embodiment 6 is intended to match the trade region in two-track simultaneous erasure and recording track. In the case of exemplary embodiment 4, as clear from Fig. 26 (c), trace regions X1, X2 of two-track simultaneous erasure are deviated from the recording tracks. This exemplary embodiment 6 is intended to eliminate such deviation.

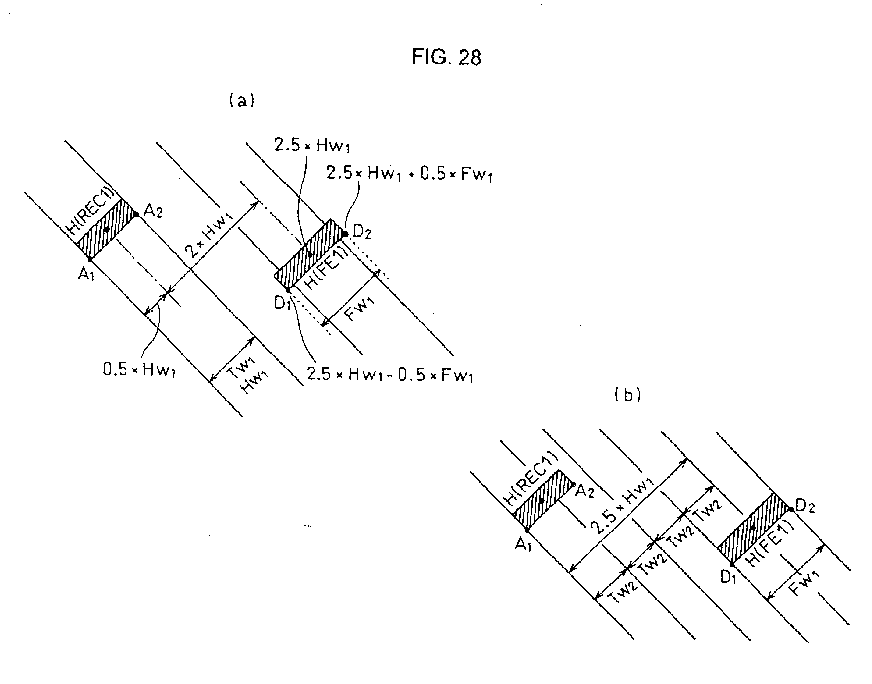

Refer to Fig. 28. Fig. 28 (a) shows a mode in a recording format recording mode of a first type, in which the track width is $Tw_1$, head width of recording head H (REC1) is $Hw_1$, and head width of flying erase head H (FE1) is $Fw_1$. The end portion $A_1$ of the recording head H (REC1) is the origin. The flying erase head H (FE1) is two tracks ahead of the recording head H (REC1) in the first type recording format. The center coordinate of the flying erase head H (FE1) is

$$2.5 \times Hw_1 \, (= 2.5 \times Tw_1)$$

and the coordinate of its end portion $D_1$ is

$$2.5 \times Hw_1 - 0.5 \times Fw_1$$

and the coordinate of the end portion $D_2$ is

$$2.5 \times Hw_1 + 0.5 \times Fw_1$$

Fig. 28 (b) shows a mode in a recording format recording mode of a second type, and in order that the center coordinate of the flying erase head H (FE1) may coincide with the border line of the adjacent track, the following relation is required:

$$2.5 \times Hw_1 = n \times Tw_2$$

(where n is a natural number of 3 or more). In the case of n = 4,

$$2.5 \times Hw_1 = 4 \times Tw_2$$

The head width Fw1 of the flying erase head H (FE1) is specified in the condition of

$$Fw_1 \geq 2 \times Tw_2$$

In the case of $Fw_1 = 2 \times Tw_2$, the end portions $D_1$, $D_2$ of the flying erase head H (FE1) coincide with the border line of the adjacent track. However, both ends of the flying erase head H (FE1) may project outside from the borderline of the adjacent track. Such case corresponds to the relation of $Fw_1 > 2 \times Tw_2$. What is important is that the center of the flying erase head H (FE1) should coincide with the borderline of the adjacent track.

Supposing the head width $Hw_1$ of the recording head H (REC1) in the first type recording format to be 18 μm of DVCPRO format same as in exemplary embodiment 4, it follows that

$$Tw_2 = 2.5 \times Hw/4 = 11.25 \, \mu m$$

and it is greater than 10 μm of DV format in exemplary embodiment 4. The head width $Fw_1$ of the flying erase head F (FE1) is

$$Fw_1 \geq 22.5 \, \mu m$$

Similarly, supposing the track width Tw2 in the second type recording format to be 10 μm of DV format same as in exemplary embodiment 4, it follows that

$$Hw_1 = 4 \times Tw_2/2.5 = 16 \, \mu m$$

and it is smaller than 18 μm of DVCPRO format in exemplary embodiment 4. The head width $Fw_1$ of the flying erase head H (FE1) is

$$Fw_1 \geq 20 \, \mu m$$

where the value of n may be 3 or more.

Exemplary embodiment 7 explained next relates to a DVCPRO/DV compatible magnetic recording/reproducing apparatus of new cylinder type not performing overwriting in DV format recording mode.

(Exemplary Embodiment 7)

The configuration of DVCPRO/DC compatible magnetic recording/reproducing apparatus of exemplary embodiment 7 corresponds to Fig. 16 to Fig. 22 of exemplary embodiment 2. Other configuration corresponds to exemplary embodiment 1.

First and second flying erase heads H (FE1), H (FE2) are disposed closely to the upper side in the rotating direction of the first and second recording heads of large head width conforming to DVCPRO format H (pro REC1), H (pro REC2).

In the reproducing system 2000, when a wider head selection signal $S_1$ is entered, first and second changeover sections 57, 58 select the recording heads of large head width H (pro REC1), H (pro REC2), and when a narrower head selection signal $S_2$ is entered, the first and second changeover sections 57, 58 select the recording heads of small head width H (dv REC1), H (dv REC2).

In this configuration, when the wider head selection signal $S_1$ is entered, the first and second changeover sections 57, 58 select the recording heads of large head width H (pro REC1), H (pro REC2), and when the narrower head selection signal S2 is entered, the first and second changeover sections 57, 58 select the recording heads of small head width H (dv REC1), H (dv REC2). The other configuration is same as in exemplary embodiment 4, and same constituent elements are identified with same reference numerals, and repeated explanation is omitted.

Comparing this exemplary embodiment 7 with exemplary embodiment 4, difference lies in whether overwriting is done or not, but the operation in the case of flying erase in the DV format recording mode by using the flying erase head conforming to DVCPRO format H (FE1) (or H (FE2)) is same in both exemplary embodiment 7 and exemplary embodiment 4. That is, Fig. 26 can be referred to commonly. In this case, the recording heads H (REC1), H (REC2) in Fig. 26 may be replaced by the recording heads of small head width conforming to DV format H (dv REC1), H (dv REC2) . In this case, too, an overtraced state (OT) is obtained, trace region X1 of the first flying erase head H (FE1) is overlapped by trace region X2 of the first flying erase head H (FE1) after one revolution, and therefore, if the second flying erase head H (FE2) is made inactive in flying erase, by two-track simultaneous erasure by the first flying erase head H (FE1) only, flying erase can be executed in all regions to be traced by the subsequent first and second recording heads of small head width conforming to DV format H (dv REC1), H (dv REC2).

As the flying erase is inactive in the second flying erase head H (FE2), the power consumption required for flying erase can be reduced to half of the case of the prior art.

By using the recording heads of small head width H (dv REC1), H (dv REC2), in this exemplary embodiment 7 not performing overwriting, the condition required for two-track simultaneous erasure is specifically explained. The following relations are established among track width $Tw_1$ in DVCPRO format, head width $Hw_1$ of recording head H (REC1) corresponding to the DVCPRO format, track width $Tw_2$ in DV format, and head width $Fw_1$ of flying erase head H (FF1) corresponding to the DVCPRO format.

$$Fw_1 \geq Hw_1 = Tw_1 > Tw_2$$

$$Fw1$$

$$Hw_2 \geq Tw_2 \times 2$$

In the case of the DVCPRO format, however, the actual relation is $Fw_1 > Tw_2 \times 2$.

As the reproducing heads, meanwhile, only the recording heads of large head width H (pro REC1), H (pro REC2) may be used. That is, without using the first and second changeover sections 57, 58, the first recording head of large head width H (pro REC1) may be directly connected to the first head amplifier 41, and the second recording head of large head width H (pro REC2) may be directly connected to the second head amplifier 42.

To the contrary, as the reproducing heads, meanwhile, only the recording heads of small head width H (dv REC1), H (dv REC2) may be used. That is, without using the first and second changeover sections 57, 58, the first recording head of small head width H (dv REC1) may be directly connected to the first head amplifier 41, and the second recording head of small head width H (dv REC2) may be directly connected to the second head amplifier 42.

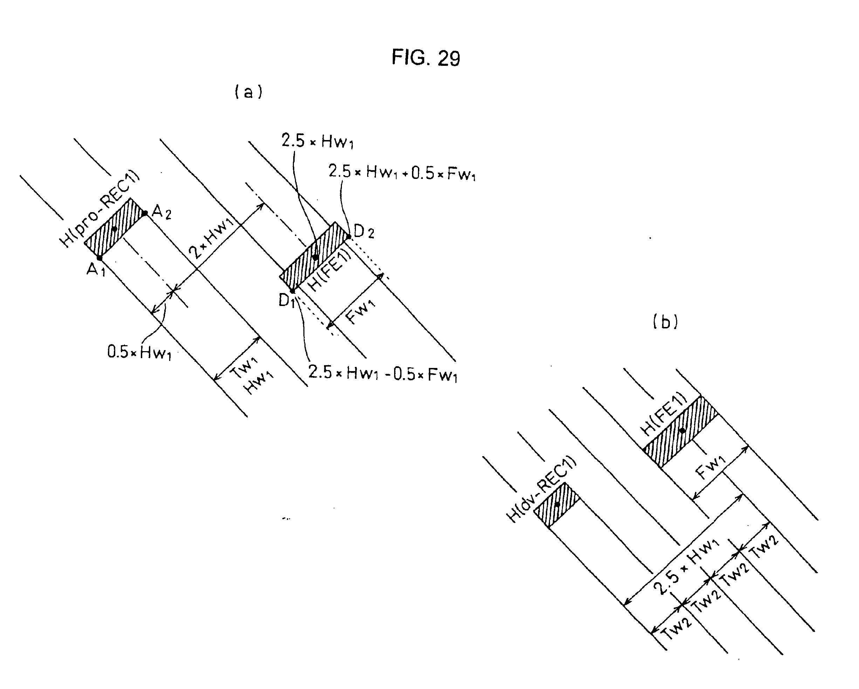

In this exemplary embodiment 7 not performing overwriting by using the first and second recording heads of small head width conforming to DV format H (dv REC1), H (dv REC2), the same concept as in exemplary embodiment 6 may also be applied. That is, Fig. 29 corresponds to Fig. 28 of exemplary embodiment 6. The first recording head H (REC1) in Fig. 28 (a) is the first recording head of large head width conforming to DVCPRO format H (pro REC1) in Fig. 29 (a), and the first recording head H (REC1) in Fig. 28 (b) is the first recording head of small head width conforming to DV format H (dv REC1) in Fig. 29 (b). In Fig. 29 (a), (b), all of the explanation in Fig. 28 (a), (b) is applied.

Concerning the matters mentioned in the specification and drawings of the present application, the possibility of omission thereof, or possibility of addition to the claims or change in the detailed description of the invention may be reserved.

INDUSTRIAL APPLICABILITY

According to the digital magnetic recording and reproducing apparatus of the invention, since the equalizing characteristic is varied in accordance with the recognizing result based on the type of the recording format, recording compatibility is realized among plural different recording formats using plural types of magnetic tapes (for example, MP tape and ME tape) mutually different in magnetization characteristics such as coercive force. As a result, the following effects are brought about.

When exchanging different format recordings, it is not necessary to prepare different magnetic recording apparatuses conforming to plural types, and one common digital magnetic recording apparatus is enough, and the initial cost for purchasing is notably decreased, and the storage space is reduced substantially. In particular, in the case of camera-incorporated magnetic recorder often carried to the news gathering sites or the like such as the camera-recorder (camcorder), the heavy burden of the labor is dramatically lessened, and the cost can be saved at the same time.

Moreover, magnetic tapes conforming to each recording formats can be used selectively, and, for example, when the tapes available at street shops can be used mainly, the convenience of use and mobility are enhanced. Or by mainly using the inexpensive tapes for consumer use, the running cost of tapes can be substantially lowered.

In particular, in the case of camera-incorporated magnetic recorder such as the camera-recorder, if the grade of the taking object material is relatively low and it can be taken anew, a trial may be taken by using an inexpensive and available tape, and it is very convenient in work and the running cost is notably lowered. Or if the tape reaches to the end while using an expensive tape, the operation can be continued by changing to an inexpensive tape. If inexpensive tapes are not at hand, they can be easily bought at a street shop, and the effects of interruption of recording can be minimized, and operation can be resumed quickly.

Or, regardless of the format type of the reproducing apparatus intended to be used, it is not necessary to change over the magnetic recorder, and a single common magnetic recorder can be used only by changing over the modes, and it is possible to reproduce in any reproducing apparatus.

Thus, according to the invention, the convenience of use and the operation in the field can be enhanced remarkably.

Further according to the presentinvention, as compared with the prior art causing center deviation due to overwriting as a result of using a same recording head in recording in plural recording formats, since the optimum recording head is used for each recording format, the head with is ideal for each recording format, and overwriting is not necessary, and thereby magnetic recording is realized in a state in which the center of the recording head and the center of the recording track are always matched, so that an extremely excellent magnetic recording precision can be achieved.

In particular, the recording head differs in each recording format with respect to various items, sterting from the head width, such as size, shape, azimuth angle, shape and size of head gap, core material, crystal structure, number of turns of coil, abrasion resistance, magnetic permeability, saturated magnetic flux density, coercive force, high frequency magnetic characteristic, surface smoothness, rational cost, and productivity. Therefore, in the case of overwriting by using only one common head, the recording characteristic is far from the optimum state. By contrast, according to the present invention, by using an exclusive head for each recording format, the recording characteristic can be optimized for each recording format.

If plural rotary head cylinders are used for individual recording formats, the required space and cost are much increased. In the present invention, by contrast, by mounting recording heads of plural types for different recording formats on a common rotary head cylinder, the increase in space and cost can be kept to a minimum.

Since the invention has the function of erasing plural tracks simultaneously, the following effects are further brought about. Since the flying erase heads are commonly used in flying erase in plural types of recording formats, it is advantageous in the technical aspect, space and cost as compared with the case of using an exclusive individual flying erase head for each recording format on a rotary head cylinder which is preferred to be smaller in size.

Moreover, by using only one flying erase head out of the plural flying erase heads, plural tracks are traced and erased simultaneously (whether exactly conforming to the plural recording heads or not), and therefore supply of erasing signal current is not required in the remaining flying erase heads, so that the power consumption can be saved for this portion.

**Claims**

1. A digital magnetic recorder **characterized by** being capable of selecting recordings in plural different formats, and being capable of varying an equalizing characteristic in accordance with a recognizing result based on a type of a recording format.

2. A digital magnetic recorder **characterized by** comprising: a first type recording equalizer corresponding to a first type recording format; a second type recording equalizer corresponding to a second type recording format; a format recognizing section for recognizing a type of a recording format; and an equalizing characteristic selecting section for selecting one of said first type recording equalizer and said second type recording equalizer in accordance with the recognizinng result by said format recognizing section.

3. The digital magnetic recorder of claim 2, **characterized in that** a first type recording amplifier and a second type recording amplifier are individually interposed between said first type recording equalizer and said second type recording equalizer and said equalizing characteristic selecting section, and a first type current control section and a second type current control section are provided on said first type recording amplifier and second type recording amplifier respectively.

4. The digital magnetic recorder of claim 2 or 3, **characterized in that** each of said components is individually provided in plural recording heads equipped with a rotary cylinder head.

5. The digital magnetic recorder of any of claims 1 to 4, **characterized by** being capable of varying a tape speed controlled by a capstan motor control system in accordance with the recognizing result based on the type of said recording format.

6. The digital magnetic recorder of claim 5, **characterized by** being capable of varying a target value in a speed control section for servo in the capstan motor control system and a gain in a phase control section in accordance with the recognizing result based on the type of said recording format.

7. The digital magnetic recorder of claim 6, **characterized in that** an object of the target value being capable of varying in said speed control section is a FG error detector, and an object of the gain being capable of varying in said phase control section is an ATF error amplifier.

8. The digital magnetic recorder of any of claims 1 to 4, **characterized by** being incapable of varying the tape speed controlled by the capstan motor control system regardless of the recognizing result based on the type of said recording format.

9. The digital magnetic recorder of any of claims 1 to 8, **characterized by** being capable of varying a tape tension controlled by a reel control system in accordance with the recognizing result based on the type of said recording format.

10. The digital magnetic recorder of claim 9, **characterized by** being capable of varying the tape tension in said reel control system by changing over a target voltage about an error amplifier to a feed side tension sensor.

11. The digital magnetic recorder of any of claims 1 to 10, **characterized by** supplying or shutting off an erase signal to a flying erase head in a flying erase control system in accordance with the recognizing result based on the type of said recording format.

12. The digital magnetic recorder of any of claims 1 to 11, **characterized by** supplying or shutting off a control signal to a control head in a control head control system in accordance with the recognizing result based on the type of said recording format.

13. The digital magnetic recorder of any of claims 1 to 12, **characterized by** supplying or shutting off an analog audio signal to a cue head in a cue control system in accordance with the recognizing result based on the type of said recording format.

14. The digital magnetic recorder of any of claims 1 to 13, **characterized in that** said recording format is a DVCPRO format and a DV format.

15. A digital magnetic recorder **characterized by** being capable of selecting recordings to plural types of formats, providing plural types of recording heads each of which has a head width suited to each one of plural types of said recording formats in a rotary head cylinder, being capable of varying an equalizing characteristic in accordance with a recognizing result based on a type of a recording format, and being constituted so as to input a recording signal of the individual equalizing characteristic corresponding to said recording format into a recording head having the head width corresponding to said recording format.

16. A digital magnetic recorder **characterized by** comprising: a first type recording equalizer corresponding to a first type recording format; a second type recording equalizer corresponding to a second type recording format; a first type recording head having a head width corresponding to the first type recording format and a second type recording head having a head width corresponding to the second type recording format both mounted on a rotary head cylinder; a format recognizing section for recognizing the type of the recording format; and an antinomic on/off changeover section for changing over antinomically between the on/off state of the system ranging from said first type recording equalizer to said first type recording head and the on/off state of the system ranging from said second type recording equalizer to said second type recording head in accordance with the recognizing result of said format recognizing section.

17. The digital magnetic recorder of claim 15 or 16, **characterized by** being capable of varying a phase reference signal to a PG error detection in the rotary head cylinder control system in accordance with the recognizing result based on the type of said recording format.

18. The digital magnetic recorder of any of claims 15 to 17, **characterized by** utilizing a recording head having a second type head width simultaneously in a state of recording by the recording head having a first type head width as a reproducing head, tracing a recording track right after traced by the recording head having said first type head width by means of the recording head having said second type head width as said reproducing head, and being constituted so as to perform reproducing in parallel with recording.

19. A digital magnetic recorder **characterized by** being capable of selecting recordings in plural different formats, being capable of varying an equalizing characteristic in accordance with a recognizing result based on a type of a recording format, making a track width in a second type recording format smaller than a track width in a first type recording format, and being constituted so as to simultaneously trace plural tracks of said second type recording format in a flying erase head corresponding to said first type recording format, and thereby erasing the recording.

20. The digital magnetic recorder of claim 19, **characterized by** being constituted so as to perform recording by overwriting in order to commonly use a recording head corresponding to the first type recording format for recording in a narrower track width of the second type recording format, and being constituted so as to commonly use a flying erase head corresponding to said first type recording format and simultaneously trace plural tracks in said second type recording format in a flying erase in said second type recording format, thereby erasing the recording.

21. The digital magnetic recorder of claim 20, **characterized by** establishing the following relationships:

$$Fw_1 \geq Hw_1 = Tw_1 > Tw_2;$$

$$Fw_1 \geq Tw_2 \times 2;$$

and

$$Ow = Hw_1 - Tw_2,$$

among a track width $Tw_1$ in the first type recording format, a head width $Hw_1$ of the recording head corresponding to said first type recording format, a track width $Tw_2$ in the second type recording format, a head width $Fw_1$ of the flying erase head corresponding to said first type recording format, and a trace width $Ow$ of said overwriting.

22. The digital magnetic recorder of claim 20 or 21, **characterized by** comprising: a first type recording equalizer corresponding to the first type recording format; a second type recording equalizer corresponding to the second type recording format; a format recognizing section for recognizing a type of a recording format; an equalizing characteristic selecting section for selecting either one of said first type recording equalizer and said second type recording equalizer in accordance with a recognizing result by said format recognizing section.

23. The digital magnetic recorder of claim 19, **characterized by** being constituted so as to use a recording head having a narrower head width corresponding to the second type recording format in order to perform recording by the second type recording format for performing the recording of a narrower track width with respect to the truck width in the first type recording format, and being constituted so as to commonly use a flying erase head corresponding to said first type recording format and simultaneously trace plural tracks in said second type recording format in a flying erase in said second recording type format, thereby erasing the recording.

24. The digital magnetic recorder of claim 23, **characterized by** establishing the following relationship:

$$Fw_1 \geq Hw_1 = Tw_1 > Tw_2;$$

$$Fw_1 \geq Tw_2 \times 2;$$

and

$$Hw_2 = Tw_2,$$

among a track width $Tw_1$ of the first type recording format, a head width $Hw_1$ of recording head corresponding to said first type recording format, a track width $Tw_2$ of the second type recording format, a head width $Hw_2$ of recording head corresponding to said second type recording format, and a head width $Fw_1$ of a flying erase head corresponding to said first type recording format.

25. The digital magnetic recorder of claim 23 or 24, **characterized by** comprising: a first type recording equalizer corresponding to a first type recording format; a second type recording equalizer corresponding to a second type recording format; a first type recording head having a head width corresponding to the first type recording format and a second type recording head having a head width corresponding to the second type recording format mounted on a rotary head cylinder; a format recognizing section for recognizing a type of a recording format; and an antinomic on/off changeover section for changing over antinomically between the on/off state of the system ranging from said first type recording equalizer to said first type recording head and the on/off state of the system ranging from said second type recording equalizer to said second type recording head in accordance with the result recognized by said format recognizing section.

26. The digital magnetic recorder of any of claims 19 to 25, **characterized by** being constituted so as to supplying an erase signal to the flying erase head corresponding to the first type recording format in a flying erase head control system, even when recording at said second type recording format.

27. The digital magnetic recorder of any of claims 19 to 26, **characterized by** being capable of varying a tape speed controlled by a capstan motor control system in accordance with the recognizing result based on the type of said recording format.

28. The digital magnetic recorder of any of claims 15 to 27, **characterized in that** said recording format is a DVCPRO format and a DV format.

29. A digital magnetic recording/reproducing apparatus **characterized by** comprising a reproducing compatibility of magnetic tapes recorded by plural types of formats, in addition to functions of the magnetic recorder of any of claims 1 to 28.

## FIG. 1

EP 1 265 228 A1

## FIG. 2

2 0 0 0   Reproducing system

8 0 0
Format recogniz-
ing section

§ f (dvcpro)／
§ f (dv)

H (PB1)
First PB head

4 1
First head
amplifier

H (PB2)
Second PB
head

4 2
Second head
amplifier

4 3
Reproducing
amplifier

4 4
AGC section

4 5 p
PB EQ for
DVCPRO

4 6 d
PB EQ for DV

4 7
EQ select-
ing section

4 8
24-25
demodulating
section

4 9
Error correction/
shuffling section

5 1
Variable
length
decoding
section

5 2
Inverse
adaptive
quantizing
section

5 3
Inverse DCT
section

5 4
Deshuffling
section

5 6
D/A
converter

5 0
Shuffle memory

Video signal processing
section

5 5
Deshuffle
memory

6 0

# FIG. 3

Capstan motor control section
3 0 0 0

Format recognizing section 800

$S f (dvcpro) / S f (dv)$

Target value counter control section 8 3 1

Speed control section 80

Internal target value counter 7 3

FG error detector 7 4

Error AMP 7 8

Capstan motor driver 7 9

Capstan motor 7 0

FG detector 7 2

FG - AMP 7 1

From RF circuit

ATF error detector 7 5

ATF error amplifier 7 6

Phase control section 8 5

Error amplifier gain control section 8 3 2

EP 1 265 228 A1

# FIG. 4

- 3 5 1 Feed side tension sensor
- 3 1 0 Feed side reel motor
- 3 2 0 Take-up side reel motor
- 3 1 4 Feed side reel driver
- 3 1 1 Feed side FG amplifier
- 3 2 1 Take-up side FG amplifier
- 3 2 4 Take-up side reel driver
- 3 5 2 Tension sensor amplifier
- 3 1 2 Feed side FG detector
- 3 2 2 Take-up side FG detector
- 3 3 0 Take-up diameter/ speed calculation section
- 3 5 5 +
- 3 1 3 Feed side tension control amplifier
- 3 2 3 Take-up side tension control amplifier
- 3 5 4 Error amplifier
- DV DVCPRO
- 8 4 2 Target voltage output section
- 8 4 1 Target voltage changeover control section
- S f (dvcpro)
- S f (dv)
- 8 0 0 Format recognizing section
- 4 0 0 0 Reel control system

## FIG. 5

Flying erase control system
5 0 0 0

8 0 0

| Format recognizing section |

S f (dvcpro)／
S f (dv)

8 5 1

| First FE current control section |

4 0 3

| First FE AMP |

H (FE1)

| First FE head |

4 0 1

| F E · O S C |

4 0 2

| FE control section |

4 0 4

| Second FE AMP |

H (FE2)

| Second FE head |

8 5 2

| Second FE current control section |

FIG. 6

Control head control section

6 0 0 0

800

| Format recognizing section |

861

| CTL OSC control section |

501

| CTL · OSC |

502

| CTL · AMP |

H(CTL)

| CTL head |

500

| Servo microcomputer |

503

| CTL · PB AMP |

EP 1 265 228 A1

41

EP 1 265 228 A1

# FIG. 7

Cue control system

7 0 0 0

6 0 1

Audio analog section

6 0 2

CUE - REC - AMP

6 0 4

+

H (CUE)

Cue head

6 0 3

BIAS - OSC

8 0 0

Format recognizing section

8 7 1

OSC control section

EP 1 265 228 A1

# FIG. 8

Rotary head cylinder control section

8 0 0 0

2 1 0

Cylinder driver

2 0 0

Rotary head cylinder

2 0 3

Target value counter

2 0 4

FG error AMP

2 0 2

FG detector

2 0 1

F G - A M P

2 0 9

+

2 0 8

PG error AMP

2 0 6

PG detector

2 0 5

P G - A M P

Phase reference signal

2 0 7

44

# FIG. 9

800

Format recognizing section

801
Menu
operation
section

802
Menu
recognizing
section

803
Control
section

→ Format recognition signal
$S f (dvcpro) / S f (dv)$

804
Menu
display control
section

805
Menu
display section

User

FIG. 10

(a)

```
                                          8 0 5
    ──── FORMAT ────

→ • REC FORMAT  :DVCPRO
```

(b)

```
                                          8 0 5
    ──── FORMAT ────

→ • REC FORMAT  :DV
```

FIG. 11

EP 1 265 228 A1

## FIG. 12

π (1 8 0°)

Rotary head cylinder
200

H(FE1)

21 μm

H(FE2)

H(REC1)

18 μm

H(REC2)

21 μm

H(PB1)

H(PB2)

π (1 8 0°)

π (1 8 0°)

FIG. 13

33.82mm/sec

956    950

954

H(PB2)

Tw1

Tw1
Hw1

953

9000rpm

952

951

H(REC1)

Fw1

955    H(FE1)

EP 1 265 228 A1

FIG. 14

FIG. 15

O W : Overwrite

## FIG. 16

VIDEO IN → Analog/digital I/F (11)

Y, $P_B$, $P_R$ → Analog/digital I/F

Shuffling section (12) → DCT section (14) → Adaptive quantizing section (15) → Variable length encoding section (16) → Error correction/deshuffling section (17) → 24-25 modulating section (19) → 30

Shuffle memory (13)

Video signal processing section (18)

Deshuffle memory

Buffer (20)

First current control section for DVCPRO (23p)

First antinomic on/off changeover section 27

First REC EQ for DVCPRO (21p) → First REC AMP for DVCPRO (22p) → First antinomic on/off changeover section (27a) → H(pro-REC1) First recording head of large head width

First REC EQ for DV (821d) → First REC AMP for DV (822d) → H(dv-REC1) First recording head of small head width

First current control section for DV (823d)

Format recognizing section (800)

S f (dvcpro) / S f (dv)

Second current control section for DVCPRO (26p)

Second REC EQ for DVCPRO (24p) → Second REC AMP for DVCPRO (25p) → Second antinomic on/off changeover section (28a) → H(pro-REC2) Second recording head of large head width

Second REC EQ for DV (824d) → Second REC AMP for DV (825d) → H(dv-REC2) Second recording head of small head width

Second current control section for DV (826d)

1000 Recording System

EP 1 265 228 A1

FIG. 17

H (pro-REC1)

| First recording head of large head width |

H (dv-REC1)

| First recording head of small head width |

5 7 First changeover section

S₁／S₂／S₃

4 1 First head amplifier

H (pro-REC2)

| Second recording head of large head width |

H (dv-REC2)

| Second recording head of small head width |

5 8 Second changeover section

4 2 Second head amplifier

4 3 Reproducing amplifier

4 4 AGC section

4 5 p PB EQ for DVCPRO

4 6 d PB EQ for DV

4 7 EQ selecting section

2 0 0 0 Reproducing system

8 0 0 Format recognizing section

S f (dvcpro)／ S f (dv)

4 8 24-25 demodulating section

4 9 Error correction, shuffling

5 1 Variable length decoding section

5 2 Inverse adaptive quantizing section

5 3 Inverse DCT section

5 4 Deshuffling section

5 6 D/A converter

5 0 Shuffle memory

Video signal processing section

5 5 Deshuffling memory

6 0

EP 1 265 228 A1

52

## FIG. 18

Rotary head cylinder control section
8 0 0 0

2 1 0 — Cylinder driver

2 0 0 — Rotary head cylinder

2 0 3 — Target value counter

2 0 4 — FG error AMP

2 0 2 — FG detector

2 0 1 — F G - A M P

2 0 9 — +

2 0 8 — PG error AMP

2 0 6 — PG detector

2 0 5 — P G - A M P

8 0 0 — Format recognizing section

9 0 2 — Phase reference selecting section

2 0 7 a — Phase reference signal after phase shift

9 0 1 — Phase shift section

2 0 7 — Phase reference signal

EP 1 265 228 A1

53

## FIG. 19

H(pro-REC1)  H(FE1)

200  Rotary head cylinder

H(dv-REC2)

H(dv-REC1)

H(FE2)  H(pro-REC2)

EP 1 265 228 A1

## FIG. 20

EP 1 265 228 A1

FIG. 21

## FIG. 22

18.83mm/sec

950

H(pro-REC1)

9000rpm

H(FE1)

954

Hw1

Tw2
Hw2

953

952

951

H(dv-REC1)

Fw1

EP 1 265 228 A1

## FIG. 23

H(pro-REC1)

H(pro-REC2)

33.82mm/sec

950

956

991

H(pro-REC1)

992

H(pro-REC2)

981

982

9000rpm

H(dv-REC1)

H(dv-REC2)

955

EP 1 265 228 A1

# FIG. 24

Flying erase control system

5000

853 — Two-track simultaneous erasure control section

$S_i$ (= "H", "L")

851 — First FE current control section

$S_f(dvcpro) =$ "H"
$S_f(dv) =$ "L"

800 — Format recognizing section

403 — First FE AMP

H (FE1) — First FE head

401 — FE·OSC

402 — FE control section

404 — Second FE AMP

H (FE2) — Second FE head

$S_i$ (= "H", "L")

852 — Second FE current control section

$S_f(dvcpro) =$ "H"
$S_f(dv) =$ "L"

EP 1 265 228 A1

# FIG. 25

OW : Overwrite

$Tw_1 = Hw_1$
$18\mu m$
H(REC1)

$Tw_2$
$10\mu m$

$8\mu m$
OW

$18\mu m$
H(REC2)

$10\mu m$

$8\mu m$
OW

$18\mu m$
H(REC1)

$10\mu m$

$8\mu m$
OW

$18\mu m$
H(REC2)

971

972

973

974

971a

972a

973a

EP 1 265 228 A1

FIG. 26

FIG. 27

Flying erase control system
5 0 0 0

FIG. 28

EP 1 265 228 A1

(a)

(b)

FIG. 29

(a)

(b)

## FIG. 30

VIDEO IN → Analog/digital I/F (11)

Y, P_B, P_R → Analog/digital I/F

Shuffling section (12) → DCT section (14) → Adaptive quantizing section (15) → Variable length encoding section (16) → Error correction/deshuffling section (17) → 24-25 modulating section (19)

Shuffle memory (13)

Video signal processing section (18)

Deshuffle memory

30

First current control section for DVCPRO — 23p

First REC EQ for DVCPRO (21p) → First REC AMP for DVCPRO (22p) → First REC head — H(REC1)

Buffer (20)

Second current control section for DVCPRO — 26p

Second REC EQ for DVCPRO (24p) → Second REC AMP for DVCPRO (25p) → Second REC head — H(REC2)

1000 Recording system

EP 1 265 228 A1

# FIG. 31

2000 Reproducing system

EP 1 265 228 A1

## FIG. 32

Capstan motor control system

3 0 0 0

80 Speed control section

73
Internal target value counter

74 FG error detector

77 ⊕

78 Error AMP

79 Capstan motor driver

70 Capstan motor

72 FG detector

71 F G - A M P

From RF circuit

75 ATF error detector

76 ATF error amplifier

85 Phase control section

EP 1 265 228 A1

67

FIG. 33

351

310

320

Feed side
tension
sensor

Feed side reel
motor

Take-up side
reel motor

314

311

321

324

Feed side
reel
driver

Feed side FG
amplifier

Take-up side
FG amplifier

Take-up side
reel
driver

352

312

322

Tension
sensor
amplifier

Feed side FG
detector

Take-up side
FG detector

330

Take-up diameter/speed calculating
section

355

313

323

Feed side
tension
control
amplifier

Take-up side
tension
control
amplifier

354

Error amplifier

Target voltage  353

4000

Reel control system

EP 1 265 228 A1

# FIG. 34

EP 1 265 228 A1

Flying erase control system

5 0 0 0

4 0 3

```
First FE AMP
```

H (FE1)

```
First FE head
```

4 0 1

```
F E - O S C
```

4 0 2

```
FE control section
```

4 0 4

```
Second FE AMP
```

H (FE2)

```
Second FE
head
```

# FIG. 35

EP 1 265 228 A1

Control head control system
6 0 0 0

```
        501                    502                    H(CTL)
   ┌─────────────┐      ┌─────────────┐         ┌──────────┐
   │             │      │             │         │   CTL    │
   │  CTL · OSC  │ ───> │  CTL - AMP  │ ──────●──│   head   │
   │             │      │             │         │          │
   └─────────────┘      └─────────────┘         └──────────┘
         ▲                                           │
         │                                           │
         │        500                    503         │
   ┌─────────────┐      ┌─────────────┐              │
   │   Servo     │      │   CTL - PB  │              │
   │ microcomputer│ <── │     AMP     │ <────────────┘
   │             │      │             │
   └─────────────┘      └─────────────┘
```

## FIG. 36

Cue control system
7 0 0 0

H (CUE)

| 601 | 602 | 604 |
| Audio analog section | CUE-REC-AMP | + | Cue head |

603
BIAS -OSC

EP 1 265 228 A1

# FIG. 37

Rotary head cylinder control system
8000

Cylinder drive 210

Rotary head cylinder 200

Target value counter 203

204 FG error AMP

202 FG detector

201 F G - A M P

209 (+)

208 PG error AMP

206 PG detector

205 P G - A M P

Phase reference signal 207

EP 1 265 228 A1

## INTERNATIONAL SEARCH REPORT

| | International application No. |
|---|---|
| | PCT/JP01/00767 |

**A. CLASSIFICATION OF SUBJECT MATTER**
   Int.Cl⁷   G11B 5/09, 15/02, 5/53
            H04N 5/92, 5/782

According to International Patent Classification (IPC) or to both national classification and IPC

**B. FIELDS SEARCHED**

Minimum documentation searched (classification system followed by classification symbols)
   Int.Cl⁷   G11B 5/09, 15/02, 5/53
            H04N 5/92, 5/782

Documentation searched other than minimum documentation to the extent that such documents are included in the fields searched
   Jitsuyo Shinan Koho        1922-1996    Toroku Jitsuyo Shinan Koho   1994-2001
   Kokai Jitsuyo Shinan Koho  1971-2001    Jitsuyo Shinan Toroku Koho   1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP, 8-190765, A (Canon Inc.),<br>23 July, 1996 (23.07.96),<br>Full text; all drawings   (Family: none) | 1,2,8,29<br>3<br>4-7,9-28 |
| Y | JP, 59-138185, A (Hitachi, Ltd.),<br>08 August, 1984 (08.08.84),<br>Full text; all drawings<br>& EP, 103287, A2     & US, 4613912, A1<br>& AT, 59925, T       & DE, 3382105, D | 3 |
| A | JP, 6-231535, A (Gold Star Co., Ltd.),<br>19 August, 1994 (19.08.94),<br>Full text; all drawings<br>& EP, 601963, A2     & KR, 9505249, B<br>& US, 5808750, A1    & DE, 601963, T | 1-29 |
| A | JP, 8-65633, A (Hitachi, Ltd.),<br>08 March, 1996 (08.03.96),<br>Full text; all drawings (Family: none) | 1-29 |
| A | JP, 8-180344, A (Sony Corporation),<br>12 July, 1996 (12.07.96) | 1-29 |

☒ Further documents are listed in the continuation of Box C.  ☐ See patent family annex.

| | |
|---|---|
| *     Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 11 May, 2001 (11.05.01) | 22 May, 2001 (22.05.01) |

| Name and mailing address of the ISA/<br>   Japanese Patent Office | Authorized officer |
|---|---|
| Facsimile No. | Telephone No. |

Form PCT/ISA/210 (second sheet) (July 1992)

**INTERNATIONAL SEARCH REPORT**

International application No.

PCT/JP01/00767

C (Continuation).    DOCUMENTS CONSIDERED TO BE RELEVANT

| Category* | Citation of document, with indication, where appropriate, of the relevant passages | Relevant to claim No. |
|---|---|---|
| | Full text; all drawings    (Family: none) | |

Form PCT/ISA/210 (continuation of second sheet) (July 1992)

74